# EUROPEAN PATENT APPLICATION

(11) **EP 4 512 774 A1**
(43) Date of publication of application: **26.02.2025**
(21) Application number: 22938217.1
(22) Date of filing: 30.09.2022
(51) Int. Cl.: C01G 3/02, B22F 9/16, B82Y 40/00, C01B 6/02

(54) **PREPARATION METHODS AND USES OF PRECIOUS METAL NANOPARTICLE-DOPED NANO METAL OXIDE AND PRECIOUS METAL NANOPARTICLES**

(30) Priority: 22.04.2022 WO PCT/CN2022/088504
(71) Applicant: Zhao, Yuanyun, Guangdong 523000 (CN)
(72) Inventor: Zhao, Yuanyun, Guangdong 523000 (CN)
(74) Representative: Boult Wade Tennant LLP
(86) International application number: PCT/CN2022/123343
(87) International publication number: WO 2023/201994

(57) **Abstract**

This application utilizes intermetallic compounds rich in Al or Zn, doped with noble metal elements in a solid solution, as precursors. At atmospheric pressure and near the boiling point of an alkaline solution, the intermetallic compounds doped with noble metal elements are reacted with the alkaline solution, enabling the efficient preparation of nano metal oxides with noble metal nanoparticle doping and varying degrees of crystallinity under atmospheric conditions. Additionally, based on the nano metal oxides doped with noble metal nanoparticles, this application provides a method for preparing noble metal nanoparticles. The preparation method described in this application is characterized by its simplicity, ease of operation, high efficiency, and low cost. The resulting products have broad applications in fields such as composite materials, catalytic materials, ceramic materials, refractory materials, advanced electronic materials, battery materials, chromogenic materials, microwave-absorbing materials, wastewater degradation materials, antibacterial materials, coatings, pigments, thermal spray materials, and sensors.

## Description

### TECHNICAL FIELD

This invention relates to the field of nanomaterials technology, and more specifically, to the preparation methods and uses of noble metal nanoparticle-doped nano metal oxides and noble metal nanoparticles.

### BACKGROUND

Currently, conventional methods for preparing noble metal nanoparticle-doped nano metal oxides generally follow the strategy of: first preparing the nano metal oxide, and then mixing it with noble metal nanoparticles that are prepared by a different method for doping. In materials prepared by this two-step process, the noble metal nanoparticles are primarily adsorbed onto the nano M oxideatrix through physical adsorption. Moreover, this mechanical mixing and physical adsorption method not only hinders the physical and chemical interactions between noble metal elements and the nano M oxideatrix at the atomic scale, but also makes it easy for the doped noble metal nanoparticles to desorb and detach from the nano M oxideatrix, leading to instability and degradation of the material's performance. In addition, due to the limitations of conventional preparation methods in controlling the size of noble metal nanoparticles, the particles obtained are generally large in size, making it difficult to prepare dispersible noble metal nanoparticles with sizes below 10 nm, which are required for physical mixing with nano metal oxides. Furthermore, conventional methods cannot produce ultrafine noble metal nanoparticles or noble metal atom/cluster-doped nano metal oxides, nor can they enhance the thermal stability of the nano M oxideatrix through in-situ embedding doping. Therefore, the development of new, highly efficient methods for preparing ultrafine noble metal nanoparticle-doped nano metal oxides that are fast-reacting, operate under mild conditions, and are suitable for large-scale production is of great significance.

Due to their unique surface effects, quantum size effects, quantum tunneling effects, Coulomb blockade effects, and other phenomena, noble metal nanoparticles exhibit many peculiar properties that differ from traditional materials in areas such as optics, electronics, magnetism, and catalysis. As a result, they are widely used in optoelectronic devices, microwave-absorbing materials, highly efficient catalysts, and other fields. Currently, the preparation methods for noble metal nanoparticles can be categorized based on the state of the substance into solid-phase methods, liquid-phase methods, and gas-phase methods. Solid-phase methods include mechanical grinding, ultrasonic grinding, thermal decomposition, and explosive methods. Liquid-phase methods include precipitation, alcohol salt methods, carbonyl methods, spray-drying, freeze-drying, electrolysis, and chemical condensation methods. Gas-phase methods include vapor-phase reactions, plasma methods, high-temperature plasma methods, evaporation, and chemical vapor deposition methods. Although there are many different methods for preparing noble metal nanoparticles, each method has certain limitations, especially in terms of scalability and mass production. Therefore, developing new preparation methods for noble metal nanoparticles that can be scaled up for large-scale production is also of significant importance.

### SUMMARY

Based on the aforementioned issues, it is necessary to provide a preparation method for noble metal nanoparticle-doped nano metal oxides that is simple in process, rapid and efficient in reaction, mild in conditions, and suitable for large-scale production. Additionally, a method for preparing noble metal nanoparticles is also provided, based on this new approach.

The content of this application includes the following aspects in sequence:
As the first aspect, a preparation method for noble metal nanoparticle-doped nano metal oxides, comprising the following steps:
Step 1: providing an initial alloy, where the initial alloy includes M-type, T-type, and A-type elements; wherein the M-type elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-type elements include at least one of Al, and Zn; the A-type elements primarily consist of noble metals, including at least one of Au, Pt, Pd, Ru, Rh, Os, Ir, Re, Ag, and Cu; the solidification structure of the initial alloy mainly comprises M-T-A intermetallic compounds and/or M-T(A) intermetallic compounds solid-solved with A-type elements; the composition of the initial alloy is mainly AₓT_{y}M_{z}, where x, y, and z are the atomic percentage contents of the respective elements, with 0 < x ≤ 15%, 40% ≤ y < 95%, and 5% ≤ z < 60%;
Step 2: making the initial alloy undergo a hydrogen evolution and T-removal reaction with an alkaline solution; wherein by controlling the temperature and concentration of the alkaline solution, the reaction interface is moved inward from the surface of the initial alloy at an average rate of at least 2 µm/min during the reaction; during the reaction, the initial alloy undergoes nanoscale fragmentation through the hydrogen evolution and T-removal reaction and, through shape and composition reconstruction, generates a M-containing solid product, with at least one dimension not exceeding 500 nm in the three-dimensional direction; simultaneously with the hydrogen evolution and T-removal reaction, the A-type element atoms in the intermetallic compound of the original initial alloy undergo diffusion rearrangement to form A-containing nanoparticles;
Step 3: collecting, after the hydrogen evolution and T-removal reaction completes, the solid product in the reaction system to obtain nano M oxide doped with A-containing nanoparticles, including A-containing nanoparticles and nano M oxide matrix; wherein the A-containing nanoparticles include at least one of A nanoparticles and A oxide nano particles; the particle size range of the A-containing nanoparticles is from 0.25 nm to 100 nm; the nano M oxide matrix includes at least one of low crystallinity nano M oxide, crystalline nano M oxide, or nano hydrated M oxide, with the nano hydrated M oxide specifically referring to nano M hydroxide; the shape of the nano M oxide matrix has at least one dimension in the three-dimensional direction not exceeding 500 nm.

### In Step 1,

Further, the M-type elements include at least one of Cr, V, Nb, Ta, W, Mo, Mn, Y, and Gd.

Further, M includes Cr; M includes V; M includes Nb; M includes Ta; M includes W; M includes Mo; M includes Mn.

Further, the M-type elements include at least one of Y, La, Ce, Pr, Nd, Pm, Sm, Eu, Gd, Tb, Dy, Ho, Er, Tm, Yb, and Lu.

Further, the T-type elements include Al. Further, the T-type element is Al.

Further, the T-type elements include Zn. Further, the T-type element is Zn.

Note: Regardless of the specific category of noble metal elements, the noble metal elements in this application include at least one of Au, Pt, Pd, Ru, Rh, Os, Ir, Re, Ag, and Cu.

Further, the A-type elements include at least one of Au, Pt, Pd, Ru, Rh, Os, Ir, Re, and Ag.

Further, the A-type elements include at least one of Au, Pt, Pd, Ru, Rh, Os, Ir, and Re.

Further, 0.01% ≤ x ≤ 12%; Further, 0.1% ≤ x ≤ 10%; Further, 0.3% ≤ x ≤ 8%;

Further, 45% ≤ y ≤ 94.5%; Further, 45% ≤ y ≤ 81%; Further, 45% ≤ y ≤ 76%; Further, 49% ≤ y ≤ 76%;

Further, 5% ≤ z ≤ 54.5%; Further, 19% ≤ z ≤ 54.5%; Further, 24% ≤ z ≤ 54.5%; Further, 24% ≤ z ≤ 50%;

Further, x < z.

Further, the initial alloy is prepared by solidifying an alloy melt containing A, T, and M elements. During the solidification process, a solidified structure mainly composed of M-T-A intermetallic compounds or (and) M-T(A) intermetallic compounds solid-solved with A-type elements is formed.

Further, the solidification rate of the initial alloy melt is 0.01 K/s to 10⁸ K/s.

Further, the solidification rate of the initial alloy melt is 1 K/s to 10⁸ K/s.

Further, when the A content is low, A-type elements generally exist in the solid-solution form within the M-T(A) intermetallic compounds. The M-T(A) intermetallic compound and the M-T intermetallic compound have nearly identical crystal structures, except that the M-T(A) intermetallic compound incorporates A elements into the structure. The solid-solution form includes at least one of interstitial solid solution and substitutional solid solution.

Further, the M-T(A) intermetallic compound refers to an intermetallic compound in which A-type element atoms exist in the lattice interstitial positions or substitute M-type or T-type atoms within the crystal lattice of the M-T(A) intermetallic compound.

Further, the M-T(A) intermetallic compound refers to the phase composition of the M-T(A) intermetallic compound. The XRD phase analysis results of the M-T(A) intermetallic compound are essentially consistent with those of the M-T intermetallic compound (the presence of solid-solution atoms does not significantly change the phase structure). The major stoichiometric relationships of the M-T intermetallic compounds include at least one of MT₄, MT₃, M₄T₁₁, MT₂, M₅T₈, M₃T₈, M₂T₃, and MT.

Further, the M-T(A) intermetallic compound can be a single phase, such as the NbAl₃ intermetallic compound with solid-solution Au or the (Nb-Ta)Al₃ intermetallic compound. It can also be a multi-phase intermetallic compound consisting of different M-type sub-elements and T-type elements, such as the TaAl₃ intermetallic compound with solid-solution Au or the YAl₃ intermetallic compound with solid-solution Au, forming a composite multi-phase intermetallic compound.

When the A content is high, in certain cases, in addition to being solid-solved in the M-T(A) intermetallic compounds, the A-type elements can also form M-T-A intermetallic compounds, which have a completely different crystal structure from the M-T(A) intermetallic compounds.

Regardless of whether the A-type elements are solid-solved in the M-T(A) intermetallic compounds or directly present in the M-T-A intermetallic compounds, the A-type element atoms are dispersed in the corresponding intermetallic compounds. That is, the corresponding intermetallic compounds do not contain phases predominantly composed of A elements or agglomerates of A elements.

As a preferred option, the initial alloy does not contain a T phase; the T phase refers to a phase predominantly composed of T-type elements.

Further, the shape of the initial alloy has an average dimension in any of the three-dimensional directions that is greater than 4 µm.

Further, the shape of the initial alloy has an average dimension in any of the three-dimensional directions that is greater than 10 µm.

Further, the shape of the initial alloy has an average dimension in any of the three-dimensional directions that is greater than 15 µm.

Further, the shape of the initial alloy includes at least one of particulate, fibrous, strip-like, ribbon-like, or sheet-like.

Further, when the initial alloy is strip-like or ribbon-like, it can be prepared using methods such as melt spinning.

Further, when the initial alloy is particulate, a large initial alloy ingot can be prepared by casting and then broken down into initial alloy particles or powders.

### In step 2:

Further, the alkaline solution contains at least one of the following: NaOH, KOH, LiOH, RbOH, CsOH, Ba(OH)₂, Ca(OH)₂, Sr(OH)₂ solutions.

Further, the solvent in the alkaline solution contains water. As a preferred option, the solvent in the alkaline solution is water.

Further, the concentration of the alkali in the alkaline solution is between 3-30 mol/L. Further, the alkali concentration is between 5.1-30 mol/L. As a preferred option, the alkali concentration is between 5.1-15 mol/L. As an even more preferred option, the alkali concentration is between 7-15 mol/L.

Further, the alkali in the alkaline solution reacting with the initial alloy is in excess, and the volume of the alkaline solution is at least five times the volume of the initial alloy, ensuring that the reaction occurs at a relatively high alkali concentration.

Further, the volume of the alkaline solution is at least 10 times the volume of the initial alloy.

Further, the volume of the alkaline solution is at least 20 times the volume of the initial alloy.

Further, the reaction temperature of the initial alloy and the alkaline solution is the same as the temperature of the alkaline solution.

Further, under a certain alkali concentration, the temperature *T*₁ of the alkaline solution must ensure that the hydrogen evolution and T-removal (and T-removal means hydrogen evolution and removal of T elements) reaction proceeds at an average rate of at least 2 µm/min, where the reaction interface advances from the surface of the initial alloy inward. During the reaction, the initial alloy undergoes nanofragmentation, which is sufficient to break it down into nanoparticles. This is controlled by the reaction rate or time (since the reaction rate and the initial alloy size determine the reaction time, which corresponds to the time required for the reaction to release gas that is not observable by the naked eye). Therefore, by setting a value for the reaction rate, the reaction time can be determined. As a result, the reaction conditions (including the temperature *T*₁ and concentration of the alkaline solution) can be indirectly defined based on the selected reaction rate.

Further, the 2 µm/min average rate is considered the critical rate for the nanofragmentation of the initial alloy during the hydrogen evolution and and T-removal reaction.

Further, the nanofragmentation refers to the process where the initial alloy breaks down into intermediate products or particles, with at least one dimension in three-dimensional direction smaller than 500 nm.

Further, the nanofragmentation refers to the process where the initial alloy breaks down into intermediate products or particles, with at least one dimension in three-dimensional direction smaller than 250 nm.

Further, the temperature of the alkaline solution is *T*₁, and *T*₁ ≥ 60°C.

Further, when the M component of the initial alloy primarily consists of one or more elements selected from Cr, V, Nb, Ta, W, Mo, and Mn, the temperature *T*₁ ≥ 60°C.

Further, when the M component of the initial alloy primarily consists of one or more elements selected from Cr, V, Nb, Ta, W, and Mo, the temperature *T*₁ ≥ 60°C.

Further, when the M component of the initial alloy primarily consists of one or more elements selected from Y, La, Ce, Pr, Nd, Pm, Sm, Eu, Gd, Tb, Dy, Ho, Er, Tm, Yb, and Lu, the temperature *T*₁ ≥ 100°C.

Further, when the M component of the initial alloy contains at least one element selected from Cr, V, Nb, Ta, W, Mo, Mn, Y, La, Ce, Pr, Nd, Pm, Sm, Eu, Gd, Tb, Dy, Ho, Er, Tm, Yb, and Lu, and the T component contains Zn, the temperature *T*₁ ≥ 60 °C.

Further, when the M component of the initial alloy contains at least one element selected from Cr, V, Nb, Ta, W, Mo, Mn, Y, La, Ce, Pr, Nd, Pm, Sm, Eu, Gd, Tb, Dy, Ho, Er, Tm, Yb, and Lu, and the T component contains at least one of Al, and Zn, the temperature *T*₁ ≥ 100°C.

Further, the reaction between the initial alloy and the alkaline solution is performed at atmospheric pressure or under high pressure.

Further, the reaction between the initial alloy and the alkaline solution is performed in a sealed container.

Under closed container conditions, when the pressure inside the container exceeds one atmosphere pressure, it is considered high pressure. Additionally, if the gas generated during the reaction cannot be vented, it can create additional high pressure.

Further, when the reaction is carried out in a closed container, the initial alloy and the alkaline solution are first placed separately in the closed container. Once the temperature of the alkaline solution reaches the set reaction temperature, the initial alloy is then brought into contact with the alkaline solution, and the reaction begins.

Further, inside the closed container, the temperature of the alkaline solution can exceed its boiling point at atmospheric pressure.

Further, for a temperature range of 100°C < *T*₁ ≤ T_{*f*(solution)}, the reaction between the initial alloy and the alkaline solution occurs at atmospheric pressure, where *T*_{*f*(solution)} is the boiling point of the alkaline solution at atmospheric pressure.

Futher, atmospheric pressure refers to the pressure of the environment under normal conditions without the use of a closed container.

Futher, the reaction takes place under atmospheric conditions, which generally refers to 1 standard atmosphere pressure. At this pressure, the boiling point of water is 100°C. When an alkali is dissolved in water, the boiling point of the alkaline solution at 1 standard atmosphere pressure will be higher than 100°C, and the higher the alkali concentration, the higher the boiling point. For example: a 5 mol/L NaOH solution has a boiling point *T*_{*f*(solution)} of approximately 108°C; a 7 mol/L NaOH solution has a boiling point *T*_{*f*(solution)} of approximately 112°C; a 10 mol/L NaOH solution has a boiling point *T*_{*f*(solution)} of approximately 119°C; a 12 mol/L NaOH solution has a boiling point *T*_{*f*(solution)} of approximately 128°C; a 15 mol/L NaOH solution has a boiling point *T*_{f(solution)} of approximately 140°C; a 17 mol/L NaOH solution has a boiling point *T*_{*f*(solution)} of approximately 148°C; a 20 mol/L NaOH solution has a boiling point *T*_{*f*(solution)} of approximately 160°C; a 25 mol/L NaOH solution has a boiling point *T*_{*f*(solution)} of approximately 180°C; a 10 mol/L KOH solution has a boiling point *T*_{*f*(solution)} of approximately 125°C; a 12 mol/L KOH solution has a boiling point *T*_{*f*(solution)} of approximately 136°C; a 15 mol/L KOH solution has a boiling point *T*_{*f*(solution)} of approximately 150°C.

Further, 101°C ≤ *T*₁ ≤*T*_{*f*(solution)}; Further, 105°C ≤ *T*₁ ≤ *T*_{*f*(solution)}.

Further, 101°C ≤ *T*_{*f*(solution)} - 5°C ≤ *T*₁ ≤ *T*_{*f*(solution)}; Further, 101°C ≤ *T*_{*f*(solution)} - 2°C≤ *T*₁ ≤ *T*_{*f*(solution)}.

As a further preference, the temperature of the alkaline solution is *T*_{*f*(solution)}, i.e. *T*₁ = *T*_{*f*(solution)}.

Due to the fact that the maximum temperature to which a reaction solution can be heated at atmospheric pressure is its boiling point temperature (*T*_{*f*(solution)}), once the temperature reaches this point, further heating will not increase the solution's temperature but will only cause it to boil. To increase the reaction temperature, the concentration of the alkaline solution can be increased, which raises the boiling point temperature. Therefore, controlling the boiling point temperature is the easiest, simplest, and most precise method. Additionally, for the same concentration, the reaction time required at the boiling point temperature is shorter than the reaction time required at other temperatures below the boiling point.

During the reaction of the initial alloy with the alkaline solution, the M-T-A intermetallic compound or (and) M-T(A) intermetallic compound in the initial alloy undergoes intense hydrogen evolution and T removal reaction, resulting in nano-fragmentation. This process further leads to the shape and composition reconstruction, generating nanometer-scale solid products containing M. In this process, T elements (Al, Zn) are amphoteric metals, which can react with hot concentrated alkaline solutions to form salts, dissolving into the alkaline solution.

Furthermore, the characteristic of the hydrogen evolution and T removal reaction is as follows: the T elements in the initial alloy dissolve into the solution, while hydrogen gas is released.

During the hydrogen evolution and T removal reaction, the atoms of A elements in the initial alloy's intermetallic compounds undergo diffusion and rearrangement, evolving to form primarily A-containing nanoparticles. Simultaneously, the M-containing solid products formed during this process combine with the A-containing nanoparticles, achieving in situ doping of the M-containing solid products with A nanoparticles in a single step.

Further, during the reaction process in step two, as the T elements dissolve into the alkaline solution, the initial alloy undergoes intense hydrogen evolution and T removal reaction, leading to nano-fragmentation. This process results in the shape and composition reconstruction of the M-containing solid products, which have a dimension of no more than 500 nm in at least one direction in three-dimensional space.

Further, the intensity of the hydrogen evolution and T removal reaction is related to the rate at which the reaction interface advances inward from the surface of the initial alloy per unit of time. The higher the concentration of the alkaline solution and the higher the temperature, the faster the reaction interface advances and the more intense the reaction becomes.

Further, ultrasonic waves are applied during the hydrogen evolution and T removal reaction to further enhance the nano-fragmentation effect and the reaction rate.

Further, the frequency of the ultrasound is between 20 kHz and 10⁶ kHz.

For example, when the NaOH concentration is 10 mol/L, in the reaction between the initial alloy mainly composed of Al₃Nb(Au) intermetallic compounds (which contains dissolved Au) and the alkaline solution, the rate of advance of the hydrogen evolution and T removal reaction interface from the surface of the initial alloy to the interior is as follows:
When 60°C ≤ *T*₁ ≤ 80°C, the average advance rate of the reaction interface is approximately 2 µm/min to 7 µm/min.
When 80°C ≤*T*₁ ≤ 90°C, the average advance rate of the reaction interface is approximately 7 µm/min to 15 µm/min.
When 90°C < *T*₁ ≤ 100°C, the average advance rate of the reaction interface is approximately 15 µm/min to 30 µm/min.
When 100°C < *T*₁ ≤ 110°C, the average advance rate of the reaction interface is approximately 30 µm/min to 50 µm/min.
When 110°C < *T*₁ < 119°C, the average advance rate of the reaction interface is approximately 50 µm/min to 120 µm/min.
When *T*₁ = *T*_{*f*(solution)}, the average advance rate of the reaction interface is greater than 120 µm/min.

Further, during the reaction process, the reaction interface advances from the surface of the initial alloy to the interior at an average rate of at least 7 µm/min.

Further, the reaction interface advances at an average rate of at least 15 µm/min from the surface of the initial alloy to the interior.

Further, the reaction interface advances at an average rate of at least 30 µm/min from the surface of the initial alloy to the interior.

Further, under certain alkaline concentration conditions, the temperature of the alkaline solution must be sufficient to ensure that the reaction interface advances at an average rate of at least 2 µm/min from the surface of the initial alloy to the interior during the hydrogen evolution and T removal reaction. Additionally, the initial alloy must undergo nano-fragmentation during the reaction. Therefore, under different initial alloy or alkaline solution conditions, when the reaction interface advances at a rate of at least 2 µm/min during the hydrogen evolution and T removal reaction, the required temperature of the reaction solution may be lower than 60°C. In particular, when ultrasound treatment is used, the required reaction solution temperature may be even lower.

Further, the term "nano-fragmentation" refers to the process in which the initial alloy at the reaction interface is fragmented into nanometer-scale intermediate products or products. Simultaneously, shape and compositional reconstruction occurs, generating M-containing solid products at the nanoscale. During this process, the hydrogen gas released by the intense hydrogen evolution and T removal reaction facilitates the nano-fragmentation of the intermediate products and products, and the diffusion distribution of the products in the alkaline solution after leaving the reaction interface.

Further, the "nano-fragmentation" refers to the process where the size of the M-containing solid products is smaller than the size of the initial alloy before the nano-fragmentation process.

Further, the "shape reconstruction" refers to the formation of M-containing solid products at the nanoscale from the hydrogen evolution and T removal reaction, which involves more than just physical fragmentation into nanoporous structures (ligaments), but also other shape changes.

Further, the M-containing solid products are characterized by particle dispersion.

Further, different oxidation states of M in the form of nano oxides correspond to different types of nano M oxides. For example, Mn oxide could be MnO or MnO₂.

Further, the size of the M-containing solid products is less than 0.25 times the size of the initial alloy before ano-fragmentation.

Further, the size of the M-containing solid products is less than 0.05 times the size of the initial alloy before nano-fragmentation.

Further, the "nano-fragmentation" process refers to the process in which the initial alloy is fragmented into intermediate products or products at the reaction interface, with at least one dimension of the product in three-dimensional space being smaller than 500 nm.

Further, the shape of the M-containing solid products has at least one dimension in three-dimensional space that does not exceed 500 nm.

Further, the shape of the M-containing solid products has at least one dimension in three-dimensional space that does not exceed 250 nm.

Further, the shape of the M-containing solid products has at least one dimension in three-dimensional space that does not exceed 150 nm.

Further, the shape of the M-containing solid products includes at least one of the following: thin-film, particle, platelet, rod-like, tube-like, and flocculent. The flocculent structure refers to extremely fine microstructures that aggregate together without distinct edges.

Further, while the M-containing solid products may aggregate softly, they do not tightly connect through a three-dimensional continuous rigid network structure, and they do not retain the original shape of the initial alloy.

Further, the shape of the M-containing solid products is entirely different from that of the initial alloy, and their particle size has significantly decreased.

Further, when the M-containing solid products are predominantly thin film, their thickness ranges from 0.25 nm to 30 nm, and the average area of the thin films is greater than 100 nm².

Further, when the M-containing solid products are predominantly particles, their particle size ranges from 1.5 nm to 500 nm, preferably from 1.5 nm to 200 nm, and more preferably from 1.5 nm to 100 nm.

Further, when the M-containing solid products are predominantly flakes, their thickness ranges from 1.5 nm to 100 nm, preferably from 5 nm to 30 nm, and more preferably from 5 nm to 20 nm. The average area of the flakes is greater than 100 nm².

Further, when the M-containing solid products are predominantly flocculent, the size of the flocculent microstructures ranges from 0.25 nm to 15 nm.

Further, when the M-containing solid products are predominantly tube or rod-shaped, their diameter ranges from 2 nm to 200 nm, preferably from 2 nm to 50 nm. The aspect ratio is greater than 2. When the aspect ratio is very large, the tube or rod shape can be considered fiber-like.

Further, the M-containing solid products include at least one of the following: low crystallinity nano M oxides, crystalline nano M oxides, or nano hydrated M oxides.

Further, low crystallinity nano M oxides include amorphous nano M oxides.

Since nano M hydroxide can be viewed as a combination of nano M oxide and H₂ O, it can be converted into nano M oxide by heating and dewatering at a lower temperature. Therefore, the nano hydrated M oxide is essentially nano M hydroxide.

Further, the nano M oxide can either be a single type of nano M oxide or composite nano M oxides composed of different M-class sub-elements, such as composite metal oxides formed by yttrium oxide and tantalum oxide (where both Y and Ta are sub-elements of the M-class elements).

Further, the degree of nano-fragmentation and shape reconstruction is related to the temperature of the alkaline solution. The higher the temperature of the alkaline solution, the higher the degree of crushing, and the smaller the particle size of the M-containing solid products.

Further, when it is necessary to enhance the degree of nano-fragmentation, ultrasound treatment can be used as an auxiliary method.

Further, when 60°C ≤ *T*₁ ≤ 100°C, the degree of nano-fragmentation and shape reconstruction is relatively high, and it increases as the temperature rises.

When 100°C < *T*₁ < *T*_{*f*(solution)}, the degree of nano-fragmentation and shape reconstruction is very high, and full crushing can be nearly achieved.

As a preferred option, when *T*₁ = *T*_{*f*(solution)}, the degree of nano-fragmentation and shape reconstruction is the highest and most complete. This is because the large amounts of gas boiling at the boiling point temperature and nucleating and growing on the solid products lead to significant gas expansion, which greatly promotes the fracturing and shape reconstruction process.

Further, during the reaction process, the nano-scale M-containing solid products generated through shape and compositional reconstruction will not remain at the original reaction interface of the initial alloy. Instead, they will diffuse and distribute throughout the alkaline solution through diffusion and the convection of the alkaline solution.

Further, the term "shape and compositional reconstruction" refers to a significant change in both the shape and composition of the products obtained after the hydrogen evolution and T removal reaction and nano-fragmentation of the initial alloy. These changes result in M-containing solid products at the nano-scale that are completely different in composition and shape from the original micron or millimeter-sized alloy, and they are distinctly fragmented.

Further, the generated nano-scale M-containing solid products will not primarily exhibit a three-dimensional continuous network structure of nanoporous structures or porous skeletons.

It should be noted that the three-dimensional continuous network-like nanoporous structure or porous skeleton structure refers to the nanoporous or porous skeleton structure obtained through a conventional dealloying reaction. This structure has three-dimensional rigidity in the direction of the network and retains its shape under the influence of gravity or surface tension, making it invariant. In contrast, the agglomerates formed by the M-containing solid product particles, which are not subjected to heat treatment or sintering in this application, may show features similar to nanoporous structures or porous skeleton structures under TEM or SEM observation. However, the particles are soft-agglomerated and do not have rigidity. The shape of the agglomerates is variable under gravity or surface tension and can also be dispersed through a dispersion method.

Further, the hydrogen evolution and T removal reaction transforms the micron-scale or millimeter-scale initial alloy into a large number of M-containing solid products at the nano-scale through a stepwise process of nano-fragmentation and shape reconstruction, progressing from the surface inward.

Further, when the initial alloy reacts with a hot alkaline solution, especially when *T*₁ > 100°C, it is very important for the preparation of nano-scale M-containing solid products. In comparative Example 1, at atmospheric pressure, when the initial alloy powder primarily composed of Al₃Nb(Au) intermetallic compounds with Au dissolved in it reacts with a 10mol/L NaOH solution at 25°C for 2 hours (where the average advancement rate of the reaction interface is less than 0.5µm/min), the shape of the initial alloy powder before and after the reaction remains largely unchanged. The powder still retains a micron-sized, angular, broken particle shape. When the reaction temperature is low, the reaction does not mainly generate nano-scale, fragmented and reshaped M-containing solid products, but rather results in a microstructure that still maintains a rigid, nanoporous structure. This nanoporous structure, formed by three-dimensional network-like ligaments, gives an appearance similar to the original alloy powder shape, including angular shapes. The particle size still corresponds to the initial alloy powder size, primarily in the micron range. Therefore, the reaction between the initial alloy and the alkaline solution at lower temperatures near room temperature is completely different from the reaction in this application, and the product morphology is also completely different.

In particular, when the reaction occurs at atmospheric pressure, and preferably at the boiling point temperature *T*_{*f*(solution)} of the alkaline solution, the composition of the reaction system undergoes significant and distinctive changes, specifically manifested as follows: In the temperature range below the boiling point of the alkaline solution, the solvent mainly exists as liquid water. However, at or near the boiling point temperature of the alkaline solution, in addition to liquid water and the gaseous water produced by boiling, the solvent also contains critical-state water, which is transitioning from liquid to gas. Moreover, due to the presence of reactants and previously generated nanoscale reaction products in the solution, the principle of heterogeneous nucleation applies, providing a large number of vaporizing particles, thereby placing the reaction system in a fully boiling and vaporizing environment. In this special environment, the dissolved atmospheric gases (oxygen, nitrogen) in the water also exhibit unique characteristics, as the boiling steam, hydrogen generated from the reaction of T-elements with the alkali, and the changes in the saturation partial pressure of dissolved gases in the water alter the equilibrium conditions. Specifically, when M-T-A or M-T(A) intermetallic compounds react with the hot alkaline solution, the process of removing T-elements from the alloy generates a large amount of hydrogen gas. These rapidly generated hydrogen gas bubbles and the abundant vaporization of boiling water vapor in the heterogeneous nucleation process exert a significant expansion effect on the hydrogen evolution and T removal reaction interface, further promoting the continuous nano-fragmentation and shape and composition reconstruction of the initial alloy at the reaction interface. Additionally, the T-salts dissolved in the alkaline solution also modify the material composition of the reaction solution. All these characteristics of the solution at the boiling point provide a very special boiling reaction environment. Under these special reaction conditions, a unique boiling point reaction process occurs, enabling the initial alloy to undergo efficient nano-fragmentation and shape and composition reconstruction through the hydrogen evolution and T removal reaction. This makes the three-dimensional network-like continuous nanoporous structures, typically generated in low-temperature or room-temperature dealloying reactions, difficult to maintain stably. Instead, a special nano-fragmentation and shape and composition reconstruction process occurs, resulting in nanoscale, fragmented M-containing solid products. Due to the constant nature of the specific alkaline solution's boiling point temperature, temperature control can be extremely precise, making it much easier and more accurate to control the product morphology and composition.

Further, as the hydrogen evolution and T removal reaction generates M-containing solid products, the A-element atoms from the initial alloy's intermetallic compounds diffuse and rearrange to form primarily A-containing nanoparticles. At the same time, the M-containing solid products and A-containing nanoparticles are formed together and combine with each other, achieving a one-step in-situ doping of the M-containing solid products with A-containing nanoparticles.

Futher, the composition of the A-containing nanoparticles includes at least one of the following elements: Au, Pt, Pd, Ru, Rh, Os, Ir, Re, Ag, and Cu.

Further, when the A-element in the A-containing nanoparticles mainly consists of at least one of Ag and Cu, the A-containing nanoparticles include at least one of Ag nanoparticles, silver oxide nanoparticles, Cu nanoparticles, and copper oxide nanoparticles.

Since Cu and Ag are among the noble metals with relatively weaker oxidation resistance, when the A-element in the A-containing nanoparticles mainly consists of at least one of Ag and Cu, the A-containing nanoparticles may include at least one of Ag nanoparticles, Cu nanoparticles, silver oxide nanoparticles, and copper oxide nanoparticles. When the A-element in the A-containing nanoparticles contains only a small amount of Ag and Cu, the Ag and Cu are typically solid-solved in A nanoparticles composed of other inert A-elements, in which case the solid-solution Ag and Cu are not easily oxidized.

Further, the composition of the A-containing nanoparticles includes at least one of the following elements: Au, Pt, Pd, Ru, Rh, Os, Ir, and Re.

Further, the A-containing nanoparticles include at least one of A nanoparticles or nano-oxide A particles.

When the A-containing nanoparticles do not include nano-oxide A particles, the A-containing nanoparticles are simply A nanoparticles.

Further, the methods of doping the M-containing solid products with A-containing nanoparticles include at least one of in-situ embedding and physical adsorption.

Further, the doping of the M-containing solid products with A-containing nanoparticles occurs via in-situ embedding.

Further, the doping of the M-containing solid products with A-containing nanoparticles primarily occurs via in-situ embedding.

Futher, 0 < x ≤ 15%, when the content of x is low, the doping mode of A-containing nanoparticles on M-containing solid products is mainly in-situ embedding. However, when the content of x is high, the doping mode of A-containing nanoparticles on M-containing solid products mainly includes both in-situ embedding and physical adsorption. The critical value of x at which physical adsorption starts also depends on the types and ratios of M, T, and A elements. For example, when using an Al₇₈Cr₁₉Ag₃ alloy as the raw material with x = 3%, the doping method of Ag-containing nanoparticles is still primarily in-situ embedding. When using an Al₇₇Cr₁₈Ag₅ alloy as the raw material with x = 5%, the doping method of Ag-containing nanoparticles includes both in-situ embedding and physical adsorption. Similarly, when using an Al₇₉Cr_{19.5}Au_{1.5} alloy as the raw material with x = 1.5%, the doping method of Au-containing nanoparticles includes both in-situ embedding and physical adsorption.

The present application has found that the A-elements, either dissolved in the M-T(A) intermetallic compounds or in the M-T-A intermetallic compounds, mainly transform into A-containing nearly spherical nanoparticles during the hydrogen evolution and T-element removal reaction. Moreover, these A-containing nanoparticles that are formed after the transformation generally undergo in-situ embedding to dope the M-containing solid products.

The In-situ embedding refers to the process in which A-containing nanoparticles are embedded and distributed within the M-containing solid products through an in-situ method, meaning that the A-containing nanoparticles are directly embedded and incorporated into the M-containing solid products by being partially or completely encapsulated, without relying on external or mixed methods. The in-situ embedded A-containing nanoparticles cannot move freely within the M-containing solid product and are not easily detached. The term "in-situ" means that the A-containing nanoparticles and the M-containing solid product are generated simultaneously, and the A-containing nanoparticles are directly composite-doped with the M-containing solid products in-situ, without needing to be transferred from another location for doping.

The physical adsorption refers to the process where A-containing nanoparticles are distributed within the M-containing solid products through simple physical mixing. The physically adsorbed A-containing nanoparticles can move within the M-containing solid products and may detach and reattach via van der Waals forces.

Further, the shape of the A-containing nanoparticles primarily includes at least one of spherical, nearly spherical, and short rod-shaped.

Further, the particle size range of the A-containing nanoparticles is from 0.25 nm to 100 nm.

Further, the particle size range of the A-containing nanoparticles is from 0.50 nm to 50 nm.

Further, the particle size range also includes 0.25 nm to 2 nm, and when these A-containing nanoparticles are in-situ embedded in the M-containing solid products, the A-containing nanoparticles within this size range are embedded as atoms or atomic clusters in the M-containing solid product.

When the particle size of the A-containing nanoparticles is below 2 nm and they are in-situ embedded in the M-containing solid products, it is difficult to observe the A-containing nanoparticles using common observation techniques. In such cases, the A element is embedded as atoms or atomic clusters within the M-containing solid products, and the corresponding size of the atoms or atomic clusters represents the size of the A-containing nanoparticles.

### In step three:

The time required for the hydrogen evolution and T-element removal reaction to complete can be judged by whether the hydrogen gas evolution has finished. When no gas evolution is visually observed, it can be considered that the hydrogen evolution and T-removal reaction is completed.

In addition to the concentration of the alkali and the temperature of the alkali solution, the time required for the complete removal of the T-element from the initial alloy through the hydrogen evolution and T-element removal reaction is also related to the shape of the initial alloy. Specifically, when the initial alloy powder particles are smaller or the initial alloy strips are thinner, the reaction time required to complete the hydrogen evolution and T-element removal reaction is shorter; conversely, the reaction time is longer when the initial alloy has a larger particle size or thicker strip shape. Based on the average advance rate of the reaction interface and the size of the initial alloy, the minimum reaction time (*t*) required for the hydrogen evolution and T-element removal reaction can be calculated. For example, when the initial alloy is in the form of a strip with thickness (*d*), and the average advance rate of the reaction interface is v, considering that the reaction interface advances from both sides of the strip, the time *t* can be calculated as: *t*=0.5*d*/*v*. Similarly, when the initial alloy is in the form of particles with a diameter *d,* and the average advance rate of the reaction interface is v, the time t is: *t*=0.5*d*/*v;*

In one specific example, a NbAl₃ intermetallic compound containing Au is used as the initial alloy strip, and it reacts with a 10 mol/L NaOH solution at its boiling point (approximately 119°C). The average advance rate of the reaction interface is about 120 µm/min, which means that a 40 µm thick initial alloy strip will complete the hydrogen evolution and Al removal reaction in 10 seconds; a 20 µm thick strip will complete the reaction in 5 seconds; and even a coarse particle of initial alloy with a 5 mm diameter will finish the hydrogen evolution and Al removal reaction in 21 minutes.

Further, the time for the hydrogen evolution and T-element removal reaction ranges from 10 s to 59 mins; Further, the reaction time is between 10 s and 29 mins; Further, the reaction time is between 10 s and 9.9 mins; Further, the reaction time is between 10 s and 4.9 mins; Further, the reaction time is between 10 s and 1 min; Further, the reaction time is between 10 s and 30 s.

Futher, the shortest possible reaction time for hydrogen evolution and T-removal reaction is 10 s.

It is evident that as *T*₁ increases, and the initial alloy's thickness becomes thinner or the particle size becomes smaller, the required time for the hydrogen evolution and T-removal reaction becomes shorter. Conversely, the reaction time becomes longer.

Once the hydrogen evolution and T-element removal reaction is completed, extending the holding time of the reaction system at the original reaction temperature can still ensure that the M-containing solid product remains a nano-scale product with particle dispersion. However, if the holding time is sufficiently long, the morphology of the M-containing solid product may undergo certain changes. In other words, if the reaction time between the initial alloy and the alkali solution far exceeds the minimum required hydrogen evolution and T-removal time t (for example, reaching several hours), the M-containing solid product can still be obtained, but its morphology may change slightly.

The solid product collected from the reaction system primarily consists of nano M oxide doped with A-type nanoparticles. The M-containing solid product in step two refers to the nano M oxide product. The solid product refers to the material that includes both the M-containing solid product and the A-type nanoparticles.

Further, the nano M oxide exhibits particle dispersibility.

Further, the different oxidation states of M correspond to different types of nano M oxide. For instance, manganese oxide can exist as MnO or MnO₂ .

Further, the size of the nano M oxide is less than 0.25 times the size of the initial alloy before nano-fragmentation.

Further, the size of the nano M oxide is less than 0.05 times the size of the initial alloy before nano-fragmentation (based on volume).

Further, in three-dimensional space, the shape of the nano M oxide has at least one dimension not exceeding 500 nm.

Further, the shape of the nano M oxide has at least one dimension not exceeding 250 nm.

Further, the shape of the nano M oxide has at least one dimension not exceeding 150 nm.

Futher, the process of collecting the solid product from the reaction system includes the separation, collection, washing, and drying of the solid product.

Futher, the separation and collection process of the solid product in the reaction system can include one of the following steps:
a) Add a large amount of cold solvent (such as water) to the reaction system, which rapidly lowers the temperature of the solid product and the alkali solution. This also reduces the concentration of the alkali solution. The solid-liquid separation is then performed after the dilution and cooling. Clearly, lowering the concentration and temperature of the alkali solution makes it safer and also ensures the stability of the product morphology.
b) The hot alkali solution and solid product can be separated by filtration through a filtering device (such as a filter mesh), which reduces the temperature of the solid product while achieving solid-liquid separation.

Futher, the washing process includes cleaning the solid product with a dilute acid solution, which serves to remove any residual alkali.

Futher, the shape of the nano M oxide includes at least one of the following forms: film-like, particle-like, plate-like, strip-like, rod-like, and flocculent. The flocculent form refers to an extremely fine microstructure with no obvious angular edges that agglomerates together.

Futher, although the nano M oxide may form soft agglomerates, it does not form a tightly connected three-dimensional rigid network structure that would preserve the original shape of the initial alloy.

Futher, the shape of the nano M oxide may vary based on different reaction conditions, such as reaction temperature, alkali concentration, and initial alloy composition. After the hydrogen evolution and T-removal reaction, if the reaction conditions are maintained for an extended period, the shape of the nano M oxide may transition from one dominant form to another. Alternatively, there may be no change or only minor changes. Regardless of the shape, the nano M oxide will always include at least one of the following forms: film-like, particle-like, plate-like, strip-like, rod-like, and flocculent.

Futher, the shape of the nano M oxide is completely different from the initial alloy's shape, and its particle size significantly reduces due to fragmentation.

Futher, when the nano M oxide is primarily film-like, its thickness ranges from 0.25 nm to 30 nm, with an average area larger than 100 nm².

Futher, when the nano M oxide is primarily particle-like, the particle size ranges from 1.5 nm to 500 nm, preferably from 1.5 nm to 200 nm, and further preferably from 1.5 nm to 100 nm.

Futher, when the nano M oxide is primarily plate-like, the thickness ranges from 1.5 nm to 100 nm, preferably from 5 nm to 30 nm, and more preferably from 5 nm to 20 nm, with an average area greater than 100 nm².

Futher, when the nano M oxide is primarily rod-like, it includes tubular or rod-like structures with a diameter range of 2 nm to 200 nm, preferably from 2 nm to 50 nm, and with a length-to-diameter ratio greater than 2. When the length-to-diameter ratio is very large, the rod-like form can be considered fiber-like.

Futher, when the nano M oxide is primarily flocculent, the size of the flocculent microstructure ranges from 0.25 nm to 15 nm.

Futher, the nano M oxide includes at least one of the following types: low-crystallinity nano M oxide, crystalline nano M oxide, and nano hydrated M oxide.

Futher, the low-crystallinity nano M oxide includes amorphous nano M oxide.

Since nano M hydroxide can be considered as a combination of nano M oxide and H₂ O, nano M oxide can be obtained by heating and dewatering at lower temperatures. Therefore, the nano hydrated M oxide described in this application refers to nano M hydroxide.

Further, the nano M oxide can either be a single type of nano M oxide, or a composite nano M oxide formed by different sub-elements of the M family, such as a composite nano-metal-oxide formed by Yttrium oxide and Tantalum oxide (where both Y and Ta are sub-elements of the M-type elements).

Further, the composition of the A-containing nano-particles includes at least one of Au, Pt, Pd, Ru, Rh, Os, Ir, Re, Ag, and Cu.

Futher, when the A-containing nano-particles are mainly composed of Ag and/or Cu, the A-containing nano-particles include at least one of Ag nano-particles, silver oxide nano-particles, Cu nano-particles, and copper oxide nano-particles.

When the A-containing nano-particles contain only a small amount of Ag and Cu, the Ag and Cu are generally solid-solved in A nano-particles made of other inert A-elements, making it difficult for the solid-solved Ag and Cu to oxidize.

Further, the composition of the A-containing nano-particles can also include at least one of Au, Pt, Pd, Ru, Rh, Os, Ir, and Re.

Futher, the A-containing nano-particles include at least one of A nano-particles and nano-oxide A particles. For example, when A is Ag, the A-containing nano-particles include at least one of Ag nano-particles and nano-oxide Ag particles.

Further, the method of doping the A-containing nano-particles into the nano M oxide matrix includes at least one of in-situ embedding and physical adsorption.

Futher, the doping of the A-containing nano-particles into the nano M oxide matrix is primarily achieved by in-situ embedding doping.

Fugher, when the content of x is relatively low, the doping of the A-containing nano-particles into the nano M oxide matrix is mainly in-situ embedding. When the x content is relatively high, the doping of the A-containing nano-particles into the nano M oxide matrix involves both in-situ embedding and physical adsorption.

The term doping does not imply that the A-containing nano-particles are impurities; it merely indicates that the nano M oxide matrix is not a pure nano M oxide, but rather nano M oxide that contains other components.

Further, the doping of the A-containing nano-particles into the nano M oxide matrix is primarily in-situ embedding doping.

The In-situ embedding refers to the process where the A-containing nano-particles are embedded and distributed within the nano M oxide matrix through in-situ embedding, meaning the A-containing nano-particles are embedded in place, with the matrix partially or completely surrounding them, without the need for external addition or mixing. The A-containing nano-particles embedded in-situ cannot move freely within the nano M oxide matrix and are not easily detached. This in-situ embedding occurs during the hydrogen desorption and T-removal reaction, when the A-containing nano-particles and the nano M oxide matrix form simultaneously, with the embedding completed as part of the same process.

The In-situ refers to the condition where the A-containing nano-particles and nano M oxide matrix are generated simultaneously, and the A-containing nano-particles directly and in-place undergo composite doping with the nano M oxide matrix, rather than being transferred from elsewhere to combine with the nano M oxide matrix; the partial encapsulation means that part of the A-containing nano-particles is embedded within the nano M oxide matrix, while the other part remains external to it.

The physical adsorption refers to the simple physical mixing or adsorption of A-containing nano-particles within the nano M oxide matrix. The A-containing nano-particles adsorbed by physical means that A-containing nano-particles are able to move within the nano M oxide matrix, and may re-adsorb through van der Waals forces after detachment.

Further, the shape of the A-containing nano-particles includes at least one of spherical, near-spherical, and short-rod-like.

Further, the particle size range of the A-containing nano-particles is from 0.25 nm to 100 nm.

Further, the particle size range of the A-containing nano-particles is from 0.50 nm to 50 nm.

Further, the particle size range includes 0.25 nm to 2 nm, and when such A-containing nano-particles are in-situ embedded in the nano M oxide matrix, the A nano-particles in this size range exist as atoms or atomic clusters within the nano M oxide matrix.

When the particle size range of the A-containing nano-particles includes 0.25 nm to 2 nm, and these particles are in-situ embedded in the nano M oxide matrix, it is difficult to observe the corresponding A-containing nano-particles using conventional observation methods. In this case, the corresponding A elements exist in the nano M oxide matrix in the form of atoms or atomic clusters. The size of these atoms or atomic clusters represents the size of the corresponding A-containing nano-particles.

Further, the thermal stability of the nano-metal oxide doped with noble metal nano-particles is higher than that of the corresponding nano M oxideatrix prepared under similar conditions.

Further, when the particle size range of the A-containing nano-particles includes 0.25 nm to 2 nm, it will significantly improve the thermal stability of the corresponding nano M oxide matrix. Specifically, when the corresponding nano M oxide matrix is of low crystallinity or amorphous state, the in-situ embedded A-containing nano-particles (with a size range of 0.25 nm to 2 nm) will greatly enhance the thermal stability of the low crystallinity or amorphous nano M oxide matrix, causing the crystallization temperature to increase significantly (see Comparative Example 2). The significant improvement in thermal stability of the corresponding doped nano M oxide matrix is a key factor in determining whether the A-containing nano-particles are embedded in the form of atoms or atomic clusters.

In the second aspect, this application also relates to a preparation method of a nano-metal oxide doped with noble metal nanoparticles, characterized by performing a heat treatment on the nano M oxide doped with A nanoparticles (prepared according to the preparation method described in the first aspect), to obtain a crystallization-enhanced nano M oxide doped with A-containing nanoparticles.

Further, the heat treatment temperature is 300°C to 2000°C; Further, the heat treatment temperature is 400°C to 2000°C; Further, the heat treatment temperature is 500°C to 2000°C.

Further, the heat treatment time is 1 min to 24 hrs.; Further, the heat treatment time is 5 mins to 24 hrs; Further, the heat treatment time is 30 mins to 24 hrs.

It is understood that, with the increase in heat treatment time and temperature, the crystallinity of the treated product increases continuously until full crystallization is achieved.

Further, during the heat treatment process, the morphology or composition of the nano M oxide may change. This includes changes in the oxidation state of the M element (e.g., from low-valent M to high-valent M) or changes in the atomic arrangement of the oxide.

Further, when the nano M oxide matrix is crystalline, grain growth occurs after heat treatment.

Further, when the nano M oxide matrix is partially crystalline, further crystallization and grain growth occur after heat treatment.

Further, when the nano M oxide matrix is amorphous, partial or complete crystallization and grain growth occur after heat treatment.

Further, when the nano M oxide matrix is nano hydrated M oxide, heat treatment leads to the conversion of nano hydrated M oxide to nano M oxide, followed by crystallization and grain growth of the nano M oxide.

Further, the nano M oxide with an increased degree of crystallization can be a single nano M oxide or a composite nano-metal oxide composed of different M-class sub-elements, such as nano-oxide Y and nano-oxide Ta (where Y and Ta are sub-elements of the M-class elements).

Further, during heat treatment, the oxidation state of the M element in the nano M oxide matrix can change, such as from low-valent M to high-valent M.

Further, the shape of the nano M oxide with increased crystallization degree includes at least one of the following: film-like, particulate, plate-like, rod-like, tubular, and sintered agglomerated.

Further, after heat treatment, the shape of the crystallized nano M oxide may change, such as from a fluffy form to film-like, or from film-like to particulate.

Further, when the shape of the nano M oxide matrix with an increased degree of crystallization is film-like, the thickness ranges from 1 nm to 50 nm, preferably 2 nm to 10 nm, and the average area of the film is greater than 50 nm².

Further, when the shape of the nano M oxide matrix with an increased degree of crystallization is particle-like, the particle size range is 3 nm to 500 nm, preferably 3 nm to 250 nm, more preferably 3 nm to 150 nm, further preferably 3 nm to 75 nm, or 3 nm to 15 nm.

Further, when the shape of the nano M oxide matrix with an increased degree of crystallization is plate-like, the thickness ranges from 3 nm to 200 nm, preferably 6 nm to 75 nm, more preferably 6 nm to 40 nm, and further preferably 6 nm to 25 nm. And the average area of the plates is greater than 100 nm².

Further, when the shape of the nano M oxide matrix with an increased degree of crystallization is rod-like, the diameter ranges from 3 nm to 60 nm, with a length-to-diameter ratio greater than 2.

Further, when the shape of the nano M oxide matrix with an increased degree of crystallization is tubular-like, the diameter ranges from 3 nm to 200 nm, with a length-to-diameter ratio greater than 2. When the length-to-diameter ratio is extremely large, the structure can be considered fibrous.

Further, when the shape of the nano M oxide matrix with an increased degree of crystallization is sintered agglomerated, the particle size increases significantly due to sintering and agglomeration, with a size range of 5 nm to 1 mm.

The crystallinity of the nano M oxide matrix with an increased degree of crystallization is related to the heat treatment time and temperature. The higher the temperature and the longer the time, the higher the crystallinity.

Further, the crystallinity of the nano M oxide matrix with an increased degree of crystallization is higher than 20%; Further, the crystallinity is higher than 50%; Further, the crystallinity is higher than 95%.

Further, after heat treatment, the particle size of the contained A nanoparticles is greater than or equal to the particle size of the contained A nanoparticles before heat treatment.

Further, after heat treatment, the particle size of the contained A nanoparticles is greater than the particle size of the contained A nanoparticles before heat treatment.

Specifically, during the heat treatment process, when the contained A nanoparticles before heat treatment merge and grow, their particle size will increase after the heat treatment.

Further, the composition of the contained A nanoparticles includes at least one of Au, Pt, Pd, Ru, Rh, Os, Ir, Re, Ag, and Cu.

Further, when the A elements in the contained A nanoparticles are mainly composed of at least one of Ag and Cu, the contained A nanoparticles include at least one of Ag nanoparticles, silver oxide nanoparticles, Cu nanoparticles, and copper oxide nanoparticles.

Further, the composition of the contained A nanoparticles includes at least one of Au, Pt, Pd, Ru, Rh, Os, Ir, and Re.

Further, the contained A nanoparticles include at least one of A nanoparticles and nano-oxide A nanoparticles.

Further, the doping method of the contained A nanoparticles into the nano M oxide matrix with an increased degree of crystallization includes at least one of in-situ embedding and physical adsorption.

Further, the doping method of the contained A nanoparticles into the nano M oxide matrix with an increased degree of crystallization includes in-situ embedding doping.

Further, when the x content is low, the doping method of the contained A nanoparticles into the nano M oxide matrix with an increased degree of crystallization is mainly in-situ embedding. When the x content is high, the doping method of the contained A nanoparticles into the nano M oxide matrix with an increased degree of crystallization includes both in-situ embedding and physical adsorption.

Further, the doping method of the contained A nanoparticles into the nano M oxide matrix with an increased degree of crystallization is mainly in-situ embedding doping.

The In-situ embedding refers to the method where A nanoparticles are embedded and distributed in the nano M oxide matrix with an increased degree of crystallization by in-situ embedding. In this case, the A nanoparticles are partially or completely encapsulated by the nano M oxide matrix with an increased degree of crystallization to form the in-situ embedded structure, without relying on external addition or mixing to embed them. The in-situ embedded A nanoparticles cannot move freely within the nano M oxide matrix with an increased degree of crystallization, nor will they easily peel off.

The physical adsorption refers to the method where A nanoparticles are distributed in the nano M oxide matrix with an increased degree of crystallization through physical mixing. The physically adsorbed A nanoparticles can move within the nano M oxide matrix with an increased degree of crystallization and may peel off and re-adsorb later through van der Waals forces.

Further, the shape of the A nanoparticles primarily includes at least one of spherical, near-spherical, or short rod-shaped.

Further, the particle size range of the A nanoparticles is 0.25 nm ~ 200 nm; more specifically, the particle size range is 0.25nm-100nm; and even further, the particle size range is 0.5 nm ~ 75 nm.

Further, when the particle size of the A nanoparticles is in the range of 0.5 nm ~ 2 nm, and they are in-situ embedded in the nano M oxide matrix with an increased degree of crystallization, the A nanoparticles are embedded in the matrix in the form of atoms or atomic clusters.

Further, when the particle size range of the A nanoparticles is 0.5 nm -2 nm, they will significantly improve the thermal stability of the corresponding nano M oxide matrix. Specifically, when the corresponding nano M oxide matrix is in a low crystallinity or amorphous state before heat treatment, the in-situ embedded A nanoparticles, existing as atoms or atomic clusters, will greatly improve the thermal stability of the low crystallinity or amorphous nano M oxide matrix. This results in a significant increase in the crystallization temperature; in some cases, such as heat treatment at 600°C for 2 hours, the nano M oxide matrix may not show significant crystallization. However, while the nano M oxide matrix might not exhibit significant crystallization, the embedded A nanoparticles generally merge and grow during the heat treatment process.

When the heat treatment temperature is low, or the heat treatment time is short, and the particle size range of the A nanoparticles is 0.5nm-2nm, while being in-situ embedded in the nano M oxide matrix with an increased degree of crystallization, the A nanoparticles in this size range may be difficult to observe through conventional observation techniques. In this case, the corresponding A elements are embedded in the nano M oxide matrix in the form of atoms or atomic clusters, and the size of these atoms or atomic clusters corresponds to the size of the A nanoparticles.

In the third aspect, this application also relates to a preparation method of a nano-metal oxide doped with noble metal nanoparticles, comprising the following steps:
Step 1: providing an initial alloy, where the initial alloy includes M-type, T-type, and A-type elements; wherein the M-type elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-type elements include at least one of Al, and Zn; the A-type elements primarily consist of noble metals, including at least one of Au, Pt, Pd, Ru, Rh, Os, Ir, Re, Ag, and Cu; the solidification structure of the initial alloy mainly comprises M-T-A intermetallic compounds and/or M-T(A) intermetallic compounds solid-solved with A-type elements; the composition of the initial alloy is mainly AₓT_{y}M_{z}, where x, y, and z are the atomic percentage contents of the respective elements, with 0 < x ≤ 15%, 40% ≤ y < 95%, and 5% ≤ z < 60%;
Step 2: mixing the initial alloy with an alkaline solution at a temperature of *T*₁*,* where *T*_{*s*(solution)} < *T*₁ ≤ *T*_{*f*(solution)}. *T*_{*f*(solution)} is the boiling point of the alkaline solution under atmospheric pressure, and *T*_{*s*(solution)} is the freezing point of the alkaline solution under atmospheric pressure;
Step 3: placing the mixture of the initial alloy and the alkaline solution in a sealed container, then treating it at a temperature *T*₂ and a pressure higher than atmospheric pressure, for a period of time, to collect a product, i.e., obtain a modified nano M oxide doped with A-containing nanoparticles, which exhibits changes in morphology and/or composition compared to the product before high-pressure treatment, with this product including A-containing nanoparticles and a nano M oxide matrix, where, *T*₂ > *T*_{*f*(solution)}; wherein the A-containing nanoparticles include at least one of A nanoparticles and A oxide nanoparticles, with a particle size range of the A-containing nanoparticles is from 0.25nm-100nm; the nano M oxide matrix includes at least one of low crystallinity nano M oxide, crystalline nano M oxide, and nano hydrated M oxide, with the nano hydrated M oxide specifically referring to nano M hydroxide; the shape of the modified nano M oxide matrix has at least one dimension in the three-dimensional direction not exceeding 500 nm.

Step 1 of the present method is exactly the same as aspect 1 in the method for preparing the noble metal nanoparticle-doped nano metal oxide described in the first aspect, including the detailed description corresponding to Step 1. Therefore, the detailed description of Step 1 will not be repeated here.

### In Step 2,

Further, the alkaline solution includes at least one of NaOH, KOH, LiOH, RbOH, CsOH, Ba(OH)₂, Ca(OH)₂, Sr(OH)₂ solutions.

Further, the solvent in the alkaline solution includes water. As a preferred option, the solvent in the alkaline solution is water.

Further, the concentration of alkali in the alkaline solution is 3-30 mol/L; Further, the concentration of alkali in the alkaline solution is 5.1-30 mol/L. As a preferred option, the concentration of alkali in the alkaline solution is 5.1-15 mol/L. As a further preferred option, the concentration of alkali in the alkaline solution is 7-15 mol/L.

Further, the alkaline solution mixed with the initial alloy contains an excess amount of alkali, with the volume of the alkaline solution being at least 5 times the volume of the initial alloy; Further, the volume of the alkaline solution is at least 10 times the volume of the initial alloy; Further, the volume of the alkaline solution is at least 20 times the volume of the initial alloy.

It can be understood that, during the mixing of the initial alloy with the alkaline solution at a temperature of *T*₁*,* a hydrogen evolution and T-removal reaction will occur. Moreover, the higher the temperature of the alkaline solution and the higher the concentration of the alkaline solution, the faster the reaction rate.

When the reaction interface during the hydrogen evolution and T-removal reaction advances inward from the surface of the initial alloy at an average rate not lower than 2 µm/min, this corresponds to the situation described in Step 2 of the first aspect. The details are provided in Step 2 of the first aspect. In this case, during the reaction, the initial alloy undergoes nanofragmentation through the hydrogen evolution and T-removal reaction, and, through shape and composition reconstruction, generates solid M-containing products with at least one dimension in the three-dimensional direction not exceeding 500 nm. During the hydrogen evolution and T-removal reaction, the A-type element atoms in the intermetallic compounds of the initial alloy diffuse and rearrange to form A-containing nanoparticles. These A-containing nanoparticles, when doped into the nano M oxide, undergo subsequent high-temperature, high-pressure reactions in Step 3, which also results in modifications to the morphology and/or composition. Therefore, Step 2 encompasses the situation described in Step 2 of the first aspect, i.e., after the situation described in Step 2 of the first aspect, Step 3 processing is still within the scope of the third aspect. The term 'modification' refers to changing the morphology and/or composition of the A nanoparticle-doped nano M oxide obtained in Step 2. Composition changes include changes in the oxidation state of M in the nano M oxide (e.g., from low-valent Mn to high-valent Mn) or changes in the atomic arrangement structure in the nano M oxide.

When Step 3 is present, Step 2, regardless of whether nanofragmentation occurs or whether the hydrogen evolution and T-removal reaction is complete after mixing the initial alloy with the alkaline solution, does not fundamentally affect the outcome of Step 3's reaction. This is because the reaction in Step 3 occurs under longer reaction times, higher temperatures, and higher pressures. Regardless of the product from Step 2, morphological and/or compositional modifications will occur during Step 3.

Further, in Step 2, the initial alloy and alkaline solution at temperature *T*₁ undergo a hydrogen evolution and T-removal reaction during mixing, and during the hydrogen evolution and T-removal reaction, the reaction interface advances inward from the surface of the initial alloy at an average rate lower than 2 µm/min.

Further, *T*_{*s*(solution)} ≤ *T*₁ < 60°C; further, *T*_{*s*(solution)} ≤ *T*₁ < 80°C.

### In Step 3:

Further, the extent of the hydrogen evolution and T-removal reaction in the mixture of the initial alloy and alkaline solution is not limited. Therefore, the solid material in the mixture can be the initial alloy itself, or it can be the product obtained after partial or complete hydrogen evolution and T-removal reaction of the initial alloy, including products that have undergone significant nanofragmentation or nanoporous products that have not undergone significant nanofragmentation.

The process of placing the mixture of the initial alloy and alkaline solution into a sealed container includes at least one of the following two options:
a) Directly placing the mixture of the initial alloy and alkaline solution from Step 2 into a sealed container, then treating it at a temperature *T*₂ higher than atmospheric pressure.
b) First separating the solid phase from the mixture of the initial alloy and alkaline solution in Step 2, then mixing it with a new alkaline solution and placing it into a sealed container, followed by treatment at a temperature *T*₂ higher than atmospheric pressure. In this case, the new alkaline solution can be the same as the original alkaline solution, or it can be a different type of alkaline solution. Further, the concentration of the new alkaline solution is from 0.1 mol/L to 30 mol/L; Further, the concentration of the new alkaline solution is from 5 mol/L to 30 mol/L.

Further, the pressure is higher than atmospheric pressure but lower than 100 MPa; Further, the pressure is higher than atmospheric pressure but lower than 20 MPa.

Further, *T*_{*f*(solution)} ≤ *T*₂ ≤ 500°C; Further, *T*_{*f*(solution)} ≤ *T*₂ ≤ 300°C.

Further, the time for treatment at the *T*₂ temperature above atmospheric pressure is from 1 minute to 2 hours; Further, the treatment time is from 1 minute to 30 minutes;

Further, the treatment time is from 1 minute to 10 minutes.

The process described in Step 3 is similar to the process of hydrothermal treatment using strong alkaline solutions, both involving reactions under high temperature and high pressure conditions. However, there are significant differences: The precursor used in the strong alkaline hydrothermal method is generally a low-surface-area crystalline oxide, which requires a long time (such as several tens of hours) to break and recombine the O-M bonds for modification. In contrast, the modification process described in this application uses an initial alloy as the precursor. Even before modification (during mixing or heating), it is already transformed into an M oxide matrix. However, in most cases, this is a high-surface-area low-crystallinity nanostructured oxide or, if crystalline, it still has a relatively high surface area. The higher the surface area, the higher the metastable energy, which makes modification easier. Therefore, the modification process described here requires a much shorter heat treatment time, which reduces energy consumption, increases efficiency, and results in products with potentially completely different morphologies. Naturally, after modification reaches equilibrium, further extending the treatment time can still produce modified products.

Further, the modified nano M oxide matrix includes at least one of: low-crystallinity nanostructured M oxide, crystalline M oxide, and hydrated M oxide. Specifically, hydrated nano M oxide is nano M hydroxide.

Further, the low-crystallinity M oxide is mainly in the amorphous state.

Hydrated nano M oxide can be considered a combination of M oxide and H₂O, so it can be dehydrated at low temperatures to form nano M oxide.

Further, the M element in the M oxide may exist in different oxidation states, corresponding to different M oxide types, for example, manganese oxide could be MnO and MnO₂ .

Further, the crystallinity of the modified nano M oxide matrix is related to the modification time, temperature, and pressure. The higher the temperature, time, and pressure, the higher the crystallinity. Therefore, the high-temperature, high-pressure modification method is a way to increase the crystallinity of the modified product and obtain new morphologies, while maintaining a relatively high surface area.

Further, the morphology of the modified nano M oxide matrix includes at least one of the following shapes: film-like, flocculent, particulate, sheet-like, rod-like, and tube-like.

Further, the characteristic changes in the modified nano M oxide matrix compared to the M oxide matrix generated after hydrogen evolution and T-removal reaction include at least one of the following: increased particle size, reduced surface area, and increased crystallinity.

Further, the M element in the modified nano M oxide matrix mainly exists in a higher oxidation state.

Further, the crystallinity of the modified nano M oxide matrix is improved by at least 50% compared to the crystallinity before the high-pressure treatment. For example, if the crystallinity before high-pressure treatment is 10%, and the crystallinity after modification is 16%, then the crystallinity increase is (16% - 10%)/10% = 60%.

Further, the crystallinity of the modified nano M oxide matrix exceeds 20%; Further, Further, the crystallinity of the modified nano M oxide matrix exceeds 50%.

Further, the shape of the modified nano M oxide matrix has at least one dimension in the three-dimensional direction not exceeding 500 nm.

Further, the shape of the modified nano M oxide matrix has at least one dimension in the three-dimensional direction not exceeding 250 nm.

Further, when the modified nano M oxide matrix is mainly in a particulate form, its particle size range is from 3 nm to 500 nm, preferably from 3 nm to 200 nm, more preferably from 3 nm to 100 nm.

Further, when the modified nano M oxide matrix is mainly sheet-like, its thickness range is from 2 nm to 120 nm, preferably from 5 nm to 30 nm, more preferably from 5 nm to 20 nm, and the average area of the sheets is greater than 100 nm².

Further, when the modified nano M oxide matrix is mainly rod-like, its diameter ranges from 3 nm to 50 nm, and the length-to-diameter ratio is greater than 2.

Further, when the modified nano M oxide matrix is mainly tube-like or rod-like, its diameter ranges from 3 nm to 200 nm, preferably from 3 nm to 50 nm, and its length-to-diameter ratio is greater than 2. When the length-to-diameter ratio is very high, the tube-like or rod-like structure can be considered as fiber-like.

Further, the modified nano M oxide matrix can be a single M oxide or a composite M oxide made of different M elements (e.g., a composite oxide of Y and Ta, where both Y and Ta are subclass elements of M).

Further, the composition of the A nanoparticles includes at least one of Au, Pt, Pd, Ru, Rh, Os, Ir, Re, Ag, and Cu.

Further, when the A nanoparticles include at least one of Ag and Cu, the A nanoparticles may include Ag nanoparticles, silver oxide nanoparticles, Cu nanoparticles, and copper oxide nanoparticles.

Further, the A nanoparticles include at least one of Au, Pt, Pd, Ru, Rh, Os, Ir, and Re.

Further, the A nanoparticles include at least one of A nanoparticles and nanostructured A-oxides.

Further, the doping of the A nanoparticles into the modified nanostructured M oxide matrix includes at least one of in-situ embedding and physical adsorption.

Further, the doping of the A nanoparticles into the modified nanostructured M oxide matrix includes in-situ embedding

Further, when the content of A is low, the doping of the A nanoparticles into the modified nanostructured M oxide matrix is mainly through in-situ embedding. When the content of A is high, the doping of the A nanoparticles includes both in-situ embedding and physical adsorption.

Further, the doping of the A nanoparticles into the modified nanostructured M oxide matrix is mainly through in-situ embedding.

The term "in-situ embedding" refers to the process by which A-containing nanoparticles are embedded and distributed in the modified nano M oxide matrix. Specifically, the A-containing nanoparticles are in situ embedded in the modified nano M oxide matrix, meaning they are partially or fully encapsulated by the matrix, without relying on external addition or mixing to embed them. The A-containing nanoparticles embedded in this way cannot freely move within the modified nano M oxide matrix, nor will they easily detach.

The term "physical adsorption" refers to the process by which A-containing nanoparticles are distributed in the modified nano M oxide matrix through simple physical mixing. The A-containing nanoparticles that are physically adsorbed can move, desorb, or re-adsorb within the modified nano M oxide matrix.

Further, when the A-containing nanoparticles interact with the modified nano M oxide matrix through physical adsorption, their position within the matrix is not fixed. The A-containing nanoparticles can detach from one modified nano M oxide matrix and re-adsorb onto another. In contrast, when the A-containing nanoparticles interact with the modified nano M oxide matrix via in situ embedding, their position within the matrix is fixed, and the A-containing nanoparticles remain embedded in the matrix.

Further, the shape of the A-containing nanoparticles primarily includes at least one of spherical, near-spherical, and rod-like.

Further, the particle size range of the A-containing nanoparticles is between 0.25 nm and 100 nm.

Further, the particle size range of the A-containing nanoparticles is between 0.5 nm and 75 nm.

Further, the particle size range of the A-containing nanoparticles includes 0.5 nm to 2 nm, and when in situ embedded in the modified nano M oxide matrix, these nanoparticles exist as atoms or atomic clusters embedded in the matrix.

Further, when the particle size of the A-containing nanoparticles ranges from 0.5 nm to 2 nm and is in situ embedded in the modified nano M oxide matrix, it becomes difficult to observe these nanoparticles using standard observation techniques. In this case, the corresponding A elements exist in the form of atoms or atomic clusters embedded in the modified nano M oxide matrix, with the size of the atoms or atomic clusters corresponding to the size of the A-containing nanoparticles.

The fourth aspect of the present application relates to a preparation method of noble metal nanoparticles, characterized by treating a nano M oxide matrix of the solid product prepared by the preparation method according to anyone of the methods described in the first to third aspects of this application with an etching solution to dissolve the nano M oxide matrix, while keeping the inert noble metal elements with A-containing nanoparticles in the solid product from being dissolved, to obtain A nanoparticles that are primarily composed of inert noble metal element; wherein the composition of the A nanoparticles includes at least one of Au, Pt, Pd, Ru, Rh, Os, Ir, Re, and Ag.

Further, the etching solution is selected based on the ability to remove the nano M oxide matrix while preserving the inert noble metal A nanoparticles.

Further, the etching solution is primarily an acidic solution.

Further, the acidic solution may include at least one of the following: hydrochloric acid, nitric acid, sulfuric acid, acetic acid, phosphoric acid, oxalic acid, bitter acid, oleic acid, perchloric acid, and hydrofluoric acid. Further, the concentration of the acidic solution is between 0.1 mol/L and 30 mol/L.

Due to the inertness of noble metals, they generally do not react with acidic solutions. However, the final product obtained by the methods described in the first to third aspects is typically an oxide matrix. When the matrix is at the nanoscale, especially in a low-crystallinity or flocculent state, it can react with certain concentrations and types of etching solutions and dissolve in the etching solution. Once the nano M oxide matrix is dissolved, the inert noble metal A nanoparticles are freed and form a colloidal solution. After further solid-liquid separation, A nanoparticles mainly composed of the inert noble metal A elements are obtained.

The applicant has discovered that even though certain nanoscale crystalline nano-oxides of M may be difficult to dissolve in acidic solutions, when the nano M oxide is in a nanoscale, low-crystallinity state, especially when it presents a flocculent form, it can easily react and dissolve in the acid.

Further, the particle size range of the A nanoparticles is from 2 nm to 300 nm.

Further, the particle size range of the A nanoparticles is from 3 nm to 150 nm.

Further, the shape of the A nanoparticles is primarily include at least one of spherical, near-spherical, and short rod-shaped.

Further, after the A nanoparticles separate from the nano M oxide, they may combine and grow larger. Therefore, the upper value of the particle size range of the A nanoparticles prepared in this process will be larger than the upper value of the particle size range of the originally embedded A nanoparticles.

Further, the number of types of A elements present in the A nanoparticles prepared is less than or equal to the number of types of A elements in the initially doped A nanoparticles.

Specifically, before reacting with the etching solution, if the original A nanoparticles are primarily composed of inert A elements (e.g., Au, Pt), the etching solution cannot dissolve these inert A elements. In this case, the number of types of A elements in the prepared inert A nanoparticles will be the same as the number of types of A elements in the original doped A nanoparticles.

Before reacting with the etching solution, if the composition of the original A nanoparticles includes inert A elements combined with a relatively significant amount of a more reactive A element (e.g., Cu), the etching solution may dissolve these more reactive A elements. In this case, the number of types of A elements in the prepared inert A nanoparticles will be fewer than the number of types of A elements in the original doped A nanoparticles. For example, when the original A nanoparticles doped in the nano M oxide are composed of Au-Cu and the Cu content is high, by using a higher concentration of acid solution or extending the reaction time, in addition to removing the nano M oxide matrix, the Cu in the Au-Cu nanoparticles can be further dissolved, resulting in pure Au nanoparticles.

In the fifth aspect, this application also relates to a nano-metal oxide doped with noble metal nanoparticles, characterized in that it is prepared by the preparation method described in the first to third aspects of this application, specifically including the following features: the noble metal nanoparticle-doped nano-metal oxide includes noble metal nanoparticles and a nano M oxide matrix; the molar percentage of the noble metal nanoparticles is lower than the molar percentage of the nano M oxide matrix; the noble metal nanoparticles are A-containing nanoparticles, which mainly consist of noble metal A-type elements, and include at least one of Au, Pt, Pd, Ru, Rh, Os, Ir, Re, Ag, and Cu; the A-containing nanoparticles include at least one of A nanoparticles and A oxide nanoparticles; a matrix of the nano-metal oxide is nano M oxide, where the M-type element includes at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the nano M oxide includes at least one of low crystallinity nano M oxide, crystalline nano M oxide, and nano hydrated M oxide, and the nano hydrated M oxide specifically refers to nano M hydroxide; the doping method of A-containing nanoparticles into the nano M oxide matrix includes in-situ embedding doping, meaning that the A-containing nanoparticles are embedded in-situ within the nano M oxide matrix by being partially or fully surrounded by it; the particle size range of the A-containing nanoparticles is from 0.25 nm to 200 nm; the shape of the nano M oxide matrix has at least one dimension in the three-dimensional direction not exceeding 500 nm.

Further, the molar percentage of A nanoparticles is lower than half of the molar percentage of the nano M oxide matrix.

Further, in the nano M oxide doped with A nanoparticles, the crystallization temperature of the nano M oxide matrix is higher than that of the nano M oxide without precious metal doping. That is, for the same low crystallinity nano M oxide, when it is doped with the A nanoparticles via in-situ embedding, a higher temperature is required for complete crystallization.

Further, the nano M oxide matrix exhibits particle dispersion.

Further, the shape of the nano M oxide matrix has at least one dimension in the three-dimensional direction that does not exceed 250 nm.

Further, the shape of the nano M oxide matrix has at least one dimension in the three-dimensional direction that does not exceed 150 nm.

Further, the M element in the nano M oxide can exist in different oxidation states, corresponding to different types of nano M oxide. For example, the oxidation of Mn can be in the form of MnO or MnO₂.

Further, the shape of the nano M oxide matrix includes at least one of the following: thin film, particulate, plate-like, rod-like, tubular, and flocculent.

Further, when the nano M oxide matrix is mainly in the form of a thin film, its thickness ranges from 0.25 nm to 50 nm, and the average area of the thin film is greater than 50 nm².

Further, when the nano M oxide matrix is mainly in the form of particles, the particle size range is from 1.5 nm to 500 nm, with a preference for 1.5 nm to 200 nm, and further preference for 1.5 nm to 100 nm.

Further, when the nano M oxide matrix is mainly in the form of plates, its thickness ranges from 1.5 nm to 200 nm, preferably 5 nm to 30 nm, and further preferably 5 nm to 20 nm, with the average area of the plates being greater than 100 nm².

Further, when the nano M oxide matrix is mainly in the form of rods or tubes, the diameter range is 2 nm to 200 nm, with an aspect ratio (length to diameter) greater than 2.

Further, when the nano M oxide matrix is mainly in the form of flocculent, the microstructure size of the flocculent structure ranges from 0.25 nm to 15 nm.

Further, when the nano M oxide matrix has a sintered agglomerated shape, the particle size will increase significantly due to sintering and agglomeration, with a particle size range of 5 nm to 1 mm.

Further, the doping method of A nanoparticles into the nano M oxide matrix includes at least one of in-situ embedding and physical adsorption.

Further, the doping method of A nanoparticles into the nano M oxide matrix includes in-situ embedding doping.

Further, the doping method of A nanoparticles into the nano M oxide matrix is mainly through in-situ embedding, where the A nanoparticles are embedded by the nano M oxide matrix, either partially or fully wrapping around the nanoparticles. This in-situ embedding occurs during the process of the hydrogen evolution or T-removal reaction, when the A nanoparticles and the nano M oxide matrix are formed simultaneously.

Further, the shape of the A nanoparticles is mainly at least one of spherical, near-spherical, and short rod-like.

Further, the particle size range of the A nanoparticles is 0.25 nm to 100 nm.

Further, the particle size range of the A nanoparticles 0.25 nm to 50 nm.

Further, the particle size range of the A nanoparticles includes 0.25 nm to 2 nm, and when they are in-situ embedded in the nano M oxide matrix, the A nanoparticles in this size range are embedded in the nano M oxide matrix in the form of atoms or atomic clusters.

Further, the in-situ embedding of the A nanoparticles significantly improves the thermal stability of the nano M oxide matrix. Specifically, when the corresponding nano M oxide matrix is of low crystallinity or amorphous state, the in-situ embedded doping of A nanoparticles will significantly improve the thermal stability of the low crystallinity or amorphous nano M oxide matrix. That is, compared to the low crystallinity or amorphous nano M oxide matrix without A nanoparticle doping, it requires a higher temperature to achieve complete crystallization under the same heat treatment time, as seen in Comparative Example 2.

Further, the preferred particle size range for the in-situ embedded doping of A nanoparticles, which improves the thermal stability of the nano M oxide matrix, includes 0.25 nm to 10 nm.

Further, the preferred particle size range for the in-situ embedded doping of A nanoparticles, which improves the thermal stability of the nano M oxide matrix, includes 0.25 nm to 2 nm, and the A nanoparticles exist in the form of atoms or atomic clusters.

In the sixth aspect, the present application also relates to an application of the nano-metal oxide doped with noble metal nanoparticles prepared according to the preparation method described in anyone of the first to third aspects in composite materials, catalytic materials, ceramic materials, refractory materials, advanced electronic materials, battery materials, photochromic materials, electromagnetic wave-absorbing materials, wastewater degradation materials, bactericidal materials, coatings, pigments, thermal spray materials, or sensors.

In the seventh aspect, the present application also relates to an application of the nano-metal oxide doped with noble metal nanoparticles prepared according to the preparation method described in anyone of the first to third aspects in home decoration coatings, bactericidal sprays, and anti-fouling coatings; wherein the noble metal nanoparticle composition includes at least one of Cu and Ag.
as the application in home decoration coating, characterized in that the nano-metal oxide doped with noble metal nanoparticles containing Cu and/or Ag is mixed with other components of the coating as a coating additive, and applied to the surface of furniture, objects, or walls to achieve an antibacterial effect;
as the application in antibacterial spray, characterized in that the nano-metal oxide doped with noble metal nanoparticles containing Cu and/or Ag is mixed with other liquid spray components and sprayed onto the surface of furniture, objects, fabrics, or walls through a spray carrier to achieve an antibacterial effect;
as the application in anti-fouling coating, characterized in that the nano-metal oxide doped with noble metal nanoparticles containing Cu and/or Ag is used to replace the antibacterial and anti-fouling components (such as copper oxide powder) in traditional anti-fouling coatings (e.g., anti-fouling paint) to achieve an anti-fouling effect.

Since Cu and Ag exist in the nano-oxidized M matrix in extremely small particle sizes, their utilization efficiency is very high, so only a small amount of addition is required to achieve the optimal anti-fouling effect.

Further, the Ag exists in at least one of Ag, Ag₂ O, and AgO; and the Cu exists in at least one of Cu, Cu₂O, and CuO.

In the eighth aspect, the present application also relates to an application of the nano-metal oxide doped with noble metal nanoparticles prepared according to the preparation method described in anyone of the first to third aspects in antibacterial fabrics; wherein the composition of the noble metal nanoparticles includes at least one of Cu and Ag;

Further, the nano-metal oxide doped with noble metal nanoparticles containing Cu and/or Ag is dispersed and then either adhered or coated onto a surface of the fabric, or blended with the fabric, thereby endowing the fabric with antibacterial and bactericidal effects and capabilities.

Further, the Ag exists in at least one of Ag, Ag₂O, and AgO; and the Cu exists in at least one of Cu, Cu₂O, and CuO.

In the ninth aspect, the present application also relates to a nano-metal oxide doped with A nanoparticles, characterized in that: the nano-metal oxide doped with A nanoparticles includes A nanoparticles and a nano-metal oxide matrix, and the molar percentage of A nanoparticles is lower than that of the nano-metal oxide matrix; the A nanoparticles is A-containing nanoparticles, which primarily consist of A-type elements, where the A-type elements include at least one of Au, Pt, Pd, Ru, Rh, Os, Ir, Re, Ag, Cu, Fe, Ni, and Co; the A-containing nanoparticles include at least one of A nanoparticles and A oxide nano particles; the nano-metal oxide matrix is nano M oxide, where M-type elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the nano M oxide includes at least one of low crystallinity nano M oxide, crystalline nano M oxide, or nano hydrated M oxide, the nano hydrated M oxide specifically refers to nano M hydroxide; the doping method of the A-containing nanoparticles in the nano M oxide matrix includes in-situ embedding doping, where the A-containing nanoparticles are embedded in-situ within the nano M oxide matrix by being partially or fully surrounded by it; the particle size range of the A nanoparticles is from 0.25 nm to 200 nm; the shape of the nano M oxide matrix has at least one dimension in the three-dimensional direction not exceeding 500 nm.

Furthermore, the A nanoparticles are A-containing nanoparticles mainly composed of A-class elements, and the A-class elements include at least one of Au, Pt, Pd, Ru, Rh, Os, Ir, Re, Ag, Cu, and Fe;

Furthermore, the A nanoparticles are A-containing nanoparticles mainly composed of A-class elements, and the A-class elements include at least one of Au, Pt, Pd, Ru, Rh, Os, Ir, Re, Ag, and Cu;

Furthermore, the A nanoparticles are A-containing nanoparticles mainly composed of A-class elements, and the A-class elements include at least one of Ag and Cu;

Further, the A elements are precious metal elements, and the A nanoparticles are noble metal nanoparticles.

Further, the A nanoparticles include at least one of A nanoparticles and nano-oxide A particles; for example, when the A element is primarily Ag, the A nanoparticles include at least one of Ag nanoparticles and nano-oxide Ag particles.

Further, the nano-oxide A particles are specifically nano-oxide particles of the A element , for example, when A is Cu, the nano-oxide A particles include at least one of nano-Cu₂O particles and nano-CuO particles.

Further, the molar percentage content of the A containing nanoparticles is twice lower than the molar percentage content of the nano oxidized M matrix;

Further, the crystallization temperature of the nano M oxide matrix with A nanoparticle doping is higher than that of nano M oxide without doping, meaning that the same low crystallinity nano M oxide requires a higher temperature to achieve complete crystallization when doped with A nanoparticles through in-situ embedding.

Further, the nano M oxide matrix should exhibit particle dispersibility.

Further, the shape of the nano M oxide matrix in the three-dimensional direction have at least one dimension not exceeding 250 nm.

Further, the shape of the nano M oxide matrix in the three-dimensional direction have at least one dimension not exceeding 150 nm.

Further, the different oxidation states of M in the nano M oxide correspond to different nano-oxides of M; for example, manganese oxide (MnO) can be MnO or MnO₂.

Further, the shape of the nano M oxide matrix include at least one of thin film, particle, plate, strip, rod, and flocculent.

Further, when the nano M oxide matrix is primarily in the form of thin films, its thickness ranges from 0.25 nm to 50 nm, and the average area of the thin film is greater than 50 nm².

Further, when the nano M oxide matrix is primarily in the form of particles, the particle size range is from 1.5 nm to 500 nm, preferably 1.5 nm to 200 nm, more preferably 1.5 nm to 100 nm.

Further, when the nano M oxide matrix is primarily in the form of flakes, the thickness range is from 1.5 nm to 200 nm, preferably 5 nm to 30 nm, more preferably 5 nm to 20 nm, and the average area of the flakes is greater than 100 nm².

Further, when the nano M oxide matrix is primarily in the form of rods or tubes, the diameter range is from 2 nm to 200 nm, and the length-to-diameter ratio is greater than 2.

Further, when the nano M oxide matrix is primarily in the form of flocculent, the microstructure size of the flocculent structure is from 0.25 nm to 15 nm.

Further, when the nano M oxide matrix is in a sintered agglomerated form, the particle size increases significantly due to sintering, with a particle size range from 5 nm to 1 mm.

Further, the low crystallinity nano M oxide include amorphous nano M oxide.

Further, nano hydrated M oxide can be considered as nano M oxide combined with H₂ O, the nano M oxide can be obtained by heating and dehydrating nano hydrated M oxide at a lower temperature, therefore the hydrated nano oxide M in this application is nano hydroxide M.
and heating at a lower temperature to dehydrate would convert it into nano M oxide.

Further, the nano M oxide may be a single nano M oxide or a composite nano M oxide made from different M sub-elements (e.g., a composite of Y oxide and Ta oxide).

Further, when the A elements in the A nanoparticles primarily include at least one of Ag and Cu, the A nanoparticles may include Ag nanoparticles, silver oxide nanoparticles, Cu nanoparticles, and copper oxide nanoparticles.

When the A-type elements in the A-containing nanoparticles consist of only small amounts of Ag and Cu, Ag and Cu are generally solid-solved in the A nanoparticles composed of other inert A-type elements. In this case, the solid-solution Ag and Cu are less likely to oxidize.

Further, the doping method of the A-containing nanoparticles into the nano-metal oxide M matrix includes at least one of in situ embedding and physical adsorption.

Further, the doping method of the A-containing nanoparticles into the nano-metal oxide M matrix includes in situ embedding doping.

Further, the doping method of the A-containing nanoparticles into the nano-metal oxide M matrix mainly includes in situ embedding doping, where the A-containing nanoparticles are in situ embedded by being partially or fully encapsulated by the nano-metal oxide M matrix. This in situ embedding occurs during the simultaneous formation of the A-containing nanoparticles and the nano-metal oxide M matrix.

The term in-situ embedding refers to the process where the A-containing nanoparticles are embedded within the nano-metal oxide M matrix through direct in situ formation, meaning that the nanoparticles are embedded by being partially or fully encapsulated by the matrix, without relying on external addition or mixing. The A-containing nanoparticles embedded in situ cannot move freely within the nano-metal oxide M matrix and are not easily detached. This in situ embedding happens during the simultaneous formation of the A-containing nanoparticles and the nano-metal oxide M matrix. The term in situ means that the A-containing nanoparticles are generated and directly doped with the nano-metal oxide M matrix in the same location, rather than transferring the nanoparticles from elsewhere and then doping them with the matrix. The term partially encapsulated means that some of the A-containing nanoparticles are embedded within the nano-metal oxide M matrix, while the rest are outside.

Further, the shape of the A-containing nanoparticles primarily include at least one of spherical, near-spherical, and short rod-like.

Further, the particle size range of the A-containing nanoparticles is from 0.25 nm to 100 nm.

Further, the particle size range of the A-containing nanoparticles is from 0.25 nm to 50 nm.

Further, the particle size range of the A-containing nanoparticles includes 0.25 nm to 2 nm, and when they are in situ embedded in the nano M oxide matrix, the A-containing nanoparticles in this size range are embedded in the nano M oxide matrix as atoms or atomic clusters. At this point, the A atoms or atomic clusters cannot be referred to as A-containing nanoparticles, but for convenience of description, they are still referred to as A-containing nanoparticles of atomic or atomic cluster size.

Further, when A primarily includes Ag and M primarily includes Cr, the A-containing nanoparticles are mainly embedded as atoms or atomic clusters in situ in the nano-oxide Cr or nano-hydroxide Cr matrix, with the particle size range of the A-containing nanoparticles being from 0.25 nm to 2 nm.

Further, when the particle size range of the A-containing nanoparticles includes 0.25 nm to 2 nm, and they are in situ embedded in the nano M oxide matrix, the corresponding A-containing nanoparticles are difficult to observe through conventional observation methods. At this point, the A elements are embedded in the nano M oxide matrix in the form of atoms or atomic clusters, and the size of the corresponding atoms or atomic clusters is defined as the size of the corresponding A-containing nanoparticles.

Further, the thermal stability of the nano-metal oxide doped with A-containing nanoparticles is higher than that of the corresponding nano M oxide matrix prepared under similar conditions.

Further, when the particle size range of the A-containing nanoparticles includes 0.25 nm to 2 nm, it will significantly improve the thermal stability of the corresponding nano M oxide matrix. Specifically, when the corresponding nano M oxide matrix is of low crystallinity or amorphous state, the embedded A-containing nanoparticles (with a particle size range of 0.25 nm to 2 nm) will greatly enhance the thermal stability of the low crystallinity or amorphous nano M oxide matrix, and its crystallization temperature will significantly increase (as shown in Comparative Example 2). The significant increase in thermal stability of the doped nano M oxide matrix is a key indicator to determine whether the A-containing nanoparticles are embedded as atoms or atomic clusters.

Further, the in situ embedded doping of the A-containing nanoparticles improves the thermal stability of the corresponding nano M oxide matrix. Specifically, when the corresponding nano M oxide matrix is of low crystallinity or amorphous state, the in situ embedded doping of the A-containing nanoparticles will greatly improve the thermal stability of the low crystallinity or amorphous nano M oxide matrix. That is, compared to the low crystallinity or amorphous nano M oxide without doping of A-containing nanoparticles, it requires a higher temperature for complete crystallization after the same heat treatment time (as shown in Comparative Example 2).

Further, the in situ embedded doping of the A-containing nanoparticles that improves the thermal stability of the nano M oxide matrix has a preferred particle size range of 0.25 nm to 10 nm.

Further, the in situ embedded doping of the A-containing nanoparticles that improves the thermal stability of the nano M oxide matrix has a preferred particle size range of 0.25 nm to 2 nm, and the A-containing nanoparticles exist as atoms or atomic clusters.

Further, the nano-metal oxide doped with A-containing nanoparticles is prepared by any of the methods described in the first to third aspects; where the A elements include at least one of Au, Pt, Pd, Ru, Rh, Os, Ir, Re, Ag, and Cu.

In the tenth aspect, this application also involves the use of the nano-metal oxide doped with A nanoparticles as described in the ninth aspect, in applications such as composite materials, catalytic materials, ceramic materials, refractory materials, advanced electronic materials, battery materials, thermochromic materials, microwave-absorbing materials, wastewater degradation materials, antimicrobial materials, coatings, pigments, thermal spraying materials, or sensors.

In the eleventh aspect, this application also involves the use of the nano-metal oxide doped with A nanoparticles as described in the ninth aspect, in applications such as home decoration coatings, antibacterial sprays, and anti-fouling coatings. Among these, the noble metal nanoparticles include at least one of Cu and Ag.

Application in home decoration coatings: It is characterized by mixing the above-mentioned nano-metal oxide doped with A nanoparticles containing Cu or (and) Ag as a coating additive with other components of the coating, which is then applied to the surfaces of furniture, utensils, and walls to achieve an antibacterial effect.

Application in antibacterial sprays: It is characterized by mixing the above-mentioned nano-metal oxide doped with A nanoparticles containing Cu or (and) Ag with other liquid spray components, and spraying them onto the surfaces of furniture, utensils, fabrics, and walls through a spray carrier to achieve an antibacterial effect.

Application in anti-fouling coatings: It is characterized by replacing traditional anti-fouling agents (e.g., copper oxide powder) in anti-fouling coatings (such as anti-fouling paint) with the nano-metal oxide doped with A nanoparticles containing Cu or (and) Ag to achieve an anti-fouling effect.

Due to the extremely small particle size of Cu and Ag within the nano M oxide matrix, the utilization efficiency of Cu and Ag is very high. Therefore, only a small amount of addition is needed to achieve the best anti-fouling effect.

Further, Ag exists in at least one of Ag, Ag₂O, and AgO forms; Cu exists in at least one of Cu, Cu₂O, and CuO forms.

In the twelfth Aspect, this application also involves the use of the nano-metal oxide doped with A nanoparticles as described in the ninth aspect, in antibacterial fabrics. The A nanoparticles in this application contain at least one of Cu and Ag.

Further, the above-mentioned nano-metal oxide doped with A nanoparticles containing Cu or (and) Ag is dispersed and then either adhered to or coated onto the surface of the fabric, or mixed into the fabric. This enables the fabric to have antibacterial and sterilizing effects or capabilities.

Further, Ag exists in at least one of Ag, Ag₂O, and AgO forms; Cu exists in at least one of Cu, Cu₂O, and CuO forms.

The beneficial effects of this application are mainly reflected in the following aspects:
Firstly, the use of M-T-A intermetallic compounds, or M-T(A) intermetallic compounds containing A elements in solid solution, as precursors, allows for the preparation of nano-metal oxides doped with A nanoparticles at atmospheric pressure and high efficiency. The reaction between M-T-A or M-T(A) intermetallic compounds and alkaline solutions occurs rapidly under mild conditions, leading to the formation of nano-metal oxides doped with A nanoparticles. Further heat treatment or modification can be applied to enhance the crystallization of the nano-metal oxides or modify the structure, yielding nano-metal oxides with improved crystallization and doping by A nanoparticles. Additionally, the dissolution of the nano-metal oxide matrix via corrosion liquid allows for the preparation of inert A nanoparticles.

Although strong alkaline hydrothermal methods are a more established technique for preparing nano-metal oxides, this process usually requires high-pressure reactors, expensive metal oxides, and high concentrations of strong alkaline solutions (e.g., NaOH) under high temperature conditions for extended reaction times. The characteristics of traditional strong alkaline hydrothermal synthesis are: 1) Using different forms of inexpensive metal oxides as precursors (which are already metal oxides); 2) Conducted in a high-pressure reactor, requiring sealed, high-pressure conditions; 3) Carried out at elevated temperatures; 4) Reactions typically last for several hours; **In** contrast, the present application prepares nano metal oxides doped with noble metal nanoparticles and their subsequent products. Although a strong alkaline solution is also used, it has significant differences from traditional strong alkaline hydrothermal methods: 1) mainly uses M-T-A intermetallic compounds or M-T (A) intermetallic compounds with solid solution of A element as precursors; 2) The reaction can be carried out in an open container under normal pressure, and does not necessarily require a high-pressure sealed container; 3) It is preferred to conduct at or near the boiling point temperature of the alkaline solution, without the need for very high temperatures, and the upper limit of temperature is the boiling point of the hot alkaline solution, which is very easy to control accurately; 4) The reaction can be completed within minutes or even seconds; 5) The intermetallic compounds containing A in the initial alloy precursor undergo nano fragmentation through intense hydrogen evolution and T-removal reactions, and further undergo shape and composition reconstruction to generate nanoscale nano oxide M; At the same time, the A-type element atoms in the original M-T-A intermetallic compound or M-T (A) intermetallic compound with A element in solid solution undergo diffusion rearrangement evolution to generate A-containing nanoparticles mainly composed of A-type elements, while achieving in-situ embedding doping of A-containing nanoparticles with nano oxide M.

The hot alkaline solution used in this application primarily serves three functions: 1) The hot alkaline solution removes the T-element from the original M-T-A or M-T(A) intermetallic compounds through a vigorous hydrogen evolution and T-removal reaction. This allows the M-element to evolve towards the formation of nano-metal oxide (nano-M oxide), while the A-element evolves towards the formation of A-containing nanoparticles (A-nanoparticles); 2) The OH⁻ ions in the hot alkaline solution, together with the dissolved O₂, cause the M atoms left after the hydrogen evolution and T-removal reaction to quickly become free and react with oxygen, rapidly forming nano-metal oxides (nano M oxides). This process is very fast, typically completed within seconds. At the same time, the A-element atoms left behind after the hydrogen evolution and T-removal process do not form a nanoporous structure. Instead, they aggregate and combine into in-situ embedded or (and) physically adsorbed A-containing nanoparticles. In comparison, the traditional high-pressure hydrothermal method uses highly stable oxide M as a precursor, requiring high pressure, high temperature, and several hours of reaction to first break the M-O bond structure in the oxide M precursor, allowing M to be released and then rebind with O and other elements in a new, specific way to form a new nanomaterial oxide of M. 3) Providing a balanced reaction environment: The hot alkaline solution provides a balanced reaction environment, in which the temperature, concentration, and composition of the solution influence the morphology of the resulting M oxide products. When these parameters are adjusted, the morphology of the nano-metal oxide M matrix can vary accordingly. This allows for precise control over the characteristics of the final nano-metal oxide, making the process more versatile compared to traditional hydrothermal methods.

Secondly, in this application, it has been discovered that when M-T-A or M-T(A) intermetallic compounds react with alkaline solutions at elevated temperatures, especially at the boiling point of the alkaline solution, it can rapidly and completely destroy the initial alloy's shape, achieving nano-fragmentation of the alloy. This process leads to the reorganization of the shape and composition, resulting in a nano-scale M oxide matrix with good particle dispersion. Meanwhile, A elements undergo diffusion and rearrangement, forming doped A-containing nanoparticles. For example, when the initial alloy powder has an average particle size of 10 µm, traditional high-concentration alkaline reactions conducted at or near room temperature for extended periods typically yield products with an average particle size still around 10 µm. These products maintain the original shape of the powder, including angular features, and generate nanoporous structures inside the material. For example, in Comparative Example 1, when the initial alloy powder composed mainly of Al₃Nb(Au) intermetallic compounds, containing solid dissolved Au, was reacted with a 10 mol/L NaOH solution at 25°C for 2 hours, the shape of the alloy powder remained largely unchanged, and no dispersed nano-structures such as nanoparticles, nanosheets, or nanorods were formed. Instead, a nanoporous structure was created, which maintained the original shape of the alloy powder and was connected through a rigid 3D network. The particle size was still in the micron range, comparable to that of the original alloy powder, usually in the tens of micrometers. In contrast, during the process described in this application, when the initial alloy powder's average particle size or thickness is greater than 10 µm, and after reacting with the hot alkaline solution, the resulting product has a particle size not exceeding 500 nm, which is a dispersed nano-M oxide matrix with doped A nanoparticles. This material does not contain secondary nanoporous structures inside and is not connected in a 3D network. Instead, the individual nano-M oxide matrix particles remain dispersed, and although they can soft agglomerate, they do not form a rigid structure that retains the original shape of the alloy powder (including the angular features of the particles). Therefore, in situations where the initial alloy powder or strips are relatively thick (typically more than 10 µm for strips or greater than 5 µm for powder), reactions at room temperature or lower temperatures typically result in large micron-sized nanoporous oxides or nanoporous metals, which maintain particle sizes comparable to the original alloy powder. These large particles are unsuitable for applications requiring fine, well-dispersed particles. Even if such materials are sonicated to collect a small amount of nano-sized fragments for TEM observation, they still cannot fully disperse into individual particles without secondary nanoporous structures, because they are part of a 3D network-like scaffold. In contrast, this application cleverly utilizes the expansion effects caused by the hydrogen gas produced during the reaction and the vaporization of the solution, along with the unique characteristics of the hydrogen evolution and T-removal reaction in this application. These factors promote the complete nano-fragmentation and shape reconstruction of the product. While the gas expansion is not necessarily the sole cause of the nano-fragmentation, it undoubtedly plays a significant role in accelerating the fragmentation process and is one of the key factors driving the nano-fragmentation of the material. As a result, the process yields a highly dispersed nano-M oxide matrix doped with A nanoparticles, rather than the traditionally large-grained nanoporous materials. This represents a major advancement that significantly broadens the application scope of the prepared materials, offering clear and positive implications.

Moreover, shape reconstruction occurs simultaneously with the nano-fragmentation process. "Shape reconstruction" refers to the transformation of the nano-scale product obtained from the hydrogen evolution and T-removal reaction, which is not simply the fragmentation of a nanoporous structure (such as ligaments), but rather a complete reconstruction of the structure. If low-temperature hydrogen evolution and T-removal reaction results in a nanoporous structure, and high-temperature hydrogen evolution and T-removal reaction merely leads to the fragmentation of that nanoporous structure, the result would be described as simple fragmentation, where the product morphology consists of fragmented porous ligaments. However, in the process described in this application, it is not just a case of simple fragmentation; it also includes shape reconstruction; Various morphologies of the nano-M oxide matrix includes, such as plate-like structures, flocculent structures, and especially thin-film structures, cannot be obtained simply by fragmenting a nanoporous ligament structure. Therefore, this application innovatively adjusts reaction conditions to achieve a process where the nano-M oxide matrix is not formed and subsequently fragmented based solely on the formation of a nanoporous structure. Instead, it undergoes a special fragmentation and complete reconstruction process. This approach not only contributes valuable theoretical insights but also offers practical significance.

Thirdly, precise control of reaction conditions allows for precise control of both the composition and morphology of the products. Specifically, when the concentration of the alkali in the solution is determined, the boiling point temperature of the alkali solution under normal pressure is also determined. This means that the pressure and temperature in the reaction conditions are precisely controlled. When the reaction temperature is set to the boiling point temperature of the alkali solution, and measures are taken to maintain a nearly constant concentration of the alkali solution through solvent replenishment, any excess heat added to the alkali solution will be converted into the latent heat of vaporization of water rather than raising the temperature of the solution. This ensures that the temperature of the alkali solution remains stable at its boiling point temperature through continuous heating. Even if a large amount of reaction latent heat is generated during the process, the temperature of the alkali solution can still be maintained at the boiling point. In contrast, traditional high-pressure hydrothermal synthesis methods involve high pressure and high temperature for product formation. When the reaction needs to be terminated, it is difficult to rapidly return the pressure and temperature to normal temperature and pressure before retrieving the sample, which takes some time to complete. However, the preparation process in this application can be carried out in an open container at normal pressure. When termination of the reaction is required, the solvent (cold water or room-temperature water) can be rapidly added to the reaction vessel within seconds, instantly lowering both the temperature and concentration of the reaction system to levels where the reaction can no longer proceed, thus preserving the composition and morphology of the original equilibrium product. Therefore, the technology provided in this application enables the production of products with highly stable composition and morphology. The ability to maintain stable control over the composition and morphology of the products is a key factor in their wide applicability and holds significant practical value.

Fourthly, the present application achieves the preparation of a composite material containing doped A nanoparticles and an M-based nano M oxide matrix, where the doped A nanoparticles are integrated into the M-based nano M oxide matrix via an in-situ embedding approach. The incorporation of dopant elements or doped nanoparticles plays a significant role in enhancing the functionality of nano metal oxides, especially in applications such as photocatalysis. Conventional methods for preparing nano metal oxides doped with metal nanoparticles generally follow a two-step process: first, the nano metal oxide is synthesized, and then metal nanoparticles, prepared separately by other methods, are mixed with the oxide. In this approach, the metal nanoparticles are primarily attached to the nano M oxide matrix via physical adsorption. However, this mechanical mixing and adsorption method are not favorable for the physical-chemical interactions between the dopant elements and the nano M oxide matrix are not favorable at the atomic scale, which limits the potential for effective doping. The doped metal nanoparticles may easily detach from the nano M oxide matrix, leading to instability and degradation of the material's performance. The present application provides an innovative solution to these issues by embedding the doped A nanoparticles directly into the M-based nano M oxide matrix in an in-situ manner. This not only prevents the detachment of doped metal nanoparticles but also significantly enhances the physical-chemical interactions between the doped nanoparticles and the nano M oxide matrix. Furthermore, the in-situ embedded doped A nanoparticles can have particle sizes as small as atomic or atomic-cluster scales (0.25 nm to 2 nm), which is impossible to achieve using conventional methods. This is because conventional methods are typically limited by the size of the metal nanoparticles they can produce, which are usually larger than 10 nm. It is difficult to first synthesize dispersed noble metal nanoparticles smaller than 10 nm and then mix them physically with nano metal oxides. Additionally, conventional methods cannot produce ultra-fine noble metal nanoparticles or noble metal atoms/atomic clusters for doping nano metal oxides, but they can influence the thermal stability of the nano M oxideatrix through doping. For example, in one example of this application, it was found that when A nanoparticles are doped into a chromium oxide matrix, where the A elements are incorporated as extremely small atomic or atomic-cluster-sized dopants, the thermal stability and crystallization temperature of the low-crystallinity chromium oxide matrix are significantly improved. Moreover, the M elements used in this application, which include Cr, V, Nb, Ta, W, Mo, Mn, and rare earth elements (Y, La, Ce, Pr, Nd, Pm, Sm, Eu, Gd, Tb, Dy, Ho, Er, Tm, Yb, and Lu), have been carefully selected after extensive research, rather than being chosen randomly. It was found that substituting the M elements with Fe, Co, Ni, Zr, Hf, Ti, etc., changes both the reaction process and the resulting product. For example, when Fe, Co, and Ni are used as M elements, the product is mainly a nanoporous metal powder, such as Reny Ni (this generally occurs at an alkaline solution temperature of about 50°C, with a reaction time of several tens of minutes), rather than the expected nano M oxide matrix. When Zr or Hf is used as M elements, the second step does not yield a solid nanomaterial containing M (Zr and Hf dissolve into the alkaline solution and do not remain as solid phases). When Ti is used as M elements, the product obtained in the third step is a titanium-based nanomaterial (such as a nanostructured titanium oxide) rather than the expected M-based nano M oxide.

Fifthly, the present application creatively provides a method of four aspects for preparing inert precious metal nanoparticles by utilizing the inert characteristics of doped A nanoparticles and the fact that nano metal oxides with ultra-high surface areas can be dissolved by specific etching solutions. This approach has significant implications. The method begins with the melting of an initial alloy, where the solidified structure primarily consists of M-T-A or M-T(A) intermetallic compounds, with A elements being uniformly distributed and not connected to each other at the atomic level. This initial alloy melting and solidification process ensures that A element atoms are uniformly dispersed within the M-T-A or M-T(A) intermetallic compounds. Next, the M-T-A or M-T(A) intermetallic compound is reacted with a hot concentrated alkaline solution. This reaction causes the T elements to dissolve into the solution, while the M elements undergo nanofracturing and shape and compositional reconstruction to form a nano metal oxide (M) matrix. During this process, the A element atoms also diffuse and rearrange, leading to the formation of A-containing nanoparticles. These A nanoparticles are then embedded in or physically adsorbed onto the nano M oxide matrix, forming a composite structure. Finally, through the use of a specific etching solution, the nano M oxide matrix can be removed, leaving behind the primarily inert A nanoparticles, which consist of the A element. This method provides a highly effective route for preparing inert precious metal nanoparticles with well-controlled properties.

Sixthly, the present method makes large-scale industrial production of the involved products possible. The key steps of the technical solutions in this series of applications can be carried out under normal pressure, eliminating the need for high-pressure sealed containers. The reaction temperature is preferably set at or near the boiling point of the solution (typically between 105°C and 150°C depending on the concentration of alkali in the solution, which is relatively mild). The required precursors are primarily M-T-A or M-T(A) intermetallic compounds, which can be produced on a large scale through methods such as "alloy melting + casting + crushing" or "alloy melting + melt spinning." Importantly, the critical reaction time can be as short as tens of seconds to a few minutes, making the process highly efficient. Additionally, reaction conditions such as temperature and pressure can be precisely controlled to achieve the desired products. These features greatly simplify the production process, improve production efficiency, and reduce costs, making the low-cost, normal-pressure, moderate-temperature, short-duration, and highly efficient large-scale production of the corresponding products possible.

Therefore, the most critical innovation of this application lies in providing a fast and simple method for the preparation of nano metal oxides doped with noble metal nanoparticles, using alloys as raw materials. The preparation method is characterized by its simplicity, ease of operation, high efficiency, and low cost. It allows for the production of various products, including nano metal oxide powders doped with noble metal nanoparticles, high-crystallinity nano metal oxide powders doped with noble metal nanoparticles, and noble metal nanopowders. These products can be widely applied in fields such as composite materials, catalytic materials, ceramic materials, refractory materials, advanced electronic materials, battery materials, photochromic materials, electromagnetic wave absorbing materials, wastewater treatment materials, antibacterial materials, coatings, pigments, thermal spray materials, and sensors.

### BRIEF DESCRIPTION OF THE DRAWINGS

**Figure 1****:** TEM image and diffraction pattern of Au nanoparticle-doped nano Niobium oxide prepared in Example 1.
**Figure 2****:** TEM image and diffraction pattern of Au nanoparticle-doped nano Niobium oxide after heat treatment at 600°C in Example 1.
**Figure 3****:** High-magnification TEM image of Au nanoparticle-doped nano Niobium oxide after heat treatment at 600°C in Example 1.
**Figure 4****:** Low-magnification TEM image and diffraction pattern of Au nanoparticle-doped nano Tantalum oxide prepared in Example 3.
**Figure 5****:** High-magnification TEM image and diffraction pattern of Au nanoparticle-doped nano Tantalum oxide prepared in Example 3.
**Figure 6****:** High-magnification TEM image and diffraction pattern of Au nanoparticle-doped nano Tantalum oxide prepared in Example 3.
**Figure 7****:** Low-magnification TEM image and diffraction pattern of Au nanoparticle-doped nano Tantalum oxide after heat treatment at 600°C in Example 3.
**Figure 8****:** High-magnification TEM image of Au nanoparticle-doped nano Tantalum oxide after heat treatment at 600°C in Example 3.
**Figure 9****:** High-resolution TEM image of Au nanoparticle-doped nano Tantalum oxide after heat treatment at 600°C in Example 3.
**Figure 10****:** TEM image of Ag nanoparticle-doped nano Vanadium oxide prepared in Example 4.
**Figure 11****:** Low-magnification TEM image and diffraction pattern of Ag nanoparticle-doped nano Tungsten oxide after heat treatment at 600°C in Example 5.
**Figure 12****:** High-magnification TEM image of Ag nanoparticle-doped nano Tungsten oxide after heat treatment at 600°C in Example 5.
**Figure 13****:** Low-magnification TEM image and diffraction pattern of Ag nanoparticle-doped nano Molybdenum oxide prepared in Example 6.
**Figure 14****:** High-magnification TEM image of Ag nanoparticle-doped nano Molybdenum oxide prepared in Example 6.
**Figure 15****:** Low-magnification TEM image and diffraction pattern of Ag nanoparticle-doped nano Yttrium oxide prepared in Example 7.
**Figure 16****:** High-magnification TEM image of Ag nanoparticle-doped nano Yttrium oxide prepared in Example 7.
**Figure 17****:** Low-magnification TEM image of Au nanoparticle-doped nano Yttrium oxide prepared in Example 8.
**Figure 18****:** High-magnification TEM image and diffraction pattern of Au nanoparticle-doped nano Yttrium oxide prepared in Example 8.
**Figure 19****:** Low-magnification TEM image and diffraction pattern of Au nanoparticle-doped nano Yttrium oxide prepared in Example 9.
**Figure 20****:** High-magnification TEM image of Au nanoparticle-doped nano Yttrium oxide prepared in Example 9.
**Figure 21****:** High-resolution TEM image of Au nanoparticle-doped nano Yttrium oxide prepared in Example 9.
**Figure 22****:** Low-magnification TEM image and diffraction pattern of Au nanoparticle-doped nano Chromium oxide prepared in Example 10.
**Figure 23****:** High-magnification TEM image of Au nanoparticle-doped nano Chromium oxide prepared in Example 10.
**Figure 24****:** TEM image and diffraction pattern of Au nanoparticle prepared in Example 10.
**Figure 25****:** Low-magnification TEM image and diffraction pattern of Au nanoparticle-doped nano Chromium oxide prepared in Example 11.
**Figure 26****:** High-magnification TEM image of Au nanoparticle-doped nano Chromium oxide prepared in Example 11.
**Figure 27****:** High-magnification TEM image of Au nanoparticle-doped nano Chromium oxide and high-resolution TEM image of embedded Au nanoparticles prepared in Example 11.
**Figure 28****:** Back-scattered SEM image of the solidification structure of the alloy ingot prepared in Example 12.
**Figure 29****:** Low-magnification TEM image of Ag nanoparticle-doped nano Chromium oxide prepared in Example 12.
**Figure 30****:** High-magnification TEM image and diffraction pattern of Ag nanoparticle-doped nano Chromium oxide prepared in Example 12.
**Figure 31****:** Low-magnification TEM image and diffraction pattern of Ag nanoparticle-doped nano Chromium oxide after heat treatment at 600°C in Example 12.
**Figure 32****:** High-magnification TEM image of Ag nanoparticle-doped nano Chromium oxide after heat treatment at 600°C in Example 12.
**Figure 33****:** Low-magnification TEM image of Ag-Cu-Au nanoparticle-doped nano Chromium oxide prepared in Example 13.
**Figure 34****:** High-magnification TEM image of Ag-Cu-Au nanoparticle-doped nano Chromium oxide prepared in Example 13.
**Figure 35****:** Low-magnification TEM image and diffraction pattern of Au nanoparticle-doped nano Manganese oxide prepared in Example 14.
**Figure 36****:** High-magnification TEM image of Au nanoparticle-doped nano Manganese oxide prepared in Example 14.
**Figure 37****:** Low-magnification TEM image and diffraction pattern of Au nanoparticle-doped nano Manganese oxide after heat treatment at 600°C in Example 14.
**Figure 38****:** High-magnification TEM image of Au nanoparticle-doped nano Manganese oxide after heat treatment at 600°C in Example 14 - Image 1.
**Figure 39****:** High-magnification TEM image of Au nanoparticle-doped nano Manganese oxide after heat treatment at 600°C in Example 14 - Image 2.
**Figure 40****:** High-magnification TEM image of Au nanoparticle-doped nano Manganese oxide after heat treatment at 600°C in Example 14 - Image 3.
**Figure 41****:** Low-magnification TEM image of Ag nanoparticle-doped nano Manganese oxide prepared in Example 15.
**Figure 42****:** High-magnification TEM image of Ag nanoparticle-doped nano Manganese oxide prepared in Example 15.
**Figure 43****:** Low-magnification TEM image of modified Ag nanoparticle-doped nano Manganese oxide prepared in Example 16.
**Figure 44****:** Medium-magnification TEM image of modified Ag nanoparticle-doped nano Manganese oxide prepared in Example 16.
**Figure 45****:** High-magnification TEM image of modified Ag nanoparticle-doped nano Manganese oxide prepared in Example 16.
**Figure 46****:** High-resolution TEM image of modified Ag nanoparticle-doped nano Manganese oxide prepared in Example 16.
**Figure 47****:** Low-magnification TEM image of Pt-Pd-Au-Ru nanoparticle-doped nano Chromium oxide prepared in Example 17.
**Figure 48****:** High-magnification TEM image of Pt-Pd-Au-Ru nanoparticle-doped nano Chromium oxide prepared in Example 17.
**Figure 49****:** Low-magnification SEM image of Au nanoparticle-doped nano Chromium oxide prepared in Example 18.
**Figure 50****:** High-magnification SEM image of Au nanoparticle-doped nano Chromium oxide prepared in Example 18.
**Figure 51****:** SEM image of Au nanoparticle-doped nanoporous Niobium oxide from Comparative Example 1.
**Figure 52****:** TEM image and diffraction pattern of nano Chromium oxide prepared in Comparative Example 2.
**Figure 53****:** TEM image and diffraction pattern of nano Chromium oxide after heat treatment at 600°C from Comparative Example 2.

### DETAILED DESCRIPTION

The following will provide further explanation of the technical solution through the specific implementation examples:

### Example 1

This example provides a method for preparing Au nanoparticle-doped nano Niobium (Nb) oxide and Au nanoparticles, which includes the following steps:
According to the nominal formula Au_{0.5}Al_{74.3}Nb₂₅ (atomic percent), an alloy melt with the main composition of Au_{0.5}Al_{74.3}Nb₂₅ is prepared by melting the raw materials of Al, Nb, and Au. The alloy melt was rapidly solidified into an initial alloy ribbon with a thickness of ~25µm and mainly composed of Au_{0.5}Al_{74.5}Nb₂₅ by a melt-spinning technique using a copper roller. The solidified structure of the alloy ribbon is mainly composed of Al₃Nb(Au) intermetallic compounds with solid solution of Au, and the solubility of Au is about 0.5 at.%.

At atmospheric pressure, the Au_{0.5}Al_{74.5}Nb₂₅ initial alloy ribbon is reacted with a NaOH aqueous solution, where the NaOH solution has a concentration of 10 mol/L, a temperature at its boiling point under atmospheric pressure(~119°C), and a volume approximately 50 times that of the Au_{0.5}Al_{74.5}Nb₂₅ initial alloy ribbon. Within 1 minute, the hydrogen evolution reaction is complete, and the initial alloy undergoes a hydrogen evolution and Al-removal reaction, resulting in nano-fragmentation of the product, along with simultaneous shape and composition reconstruction to form a solid flocculent product.

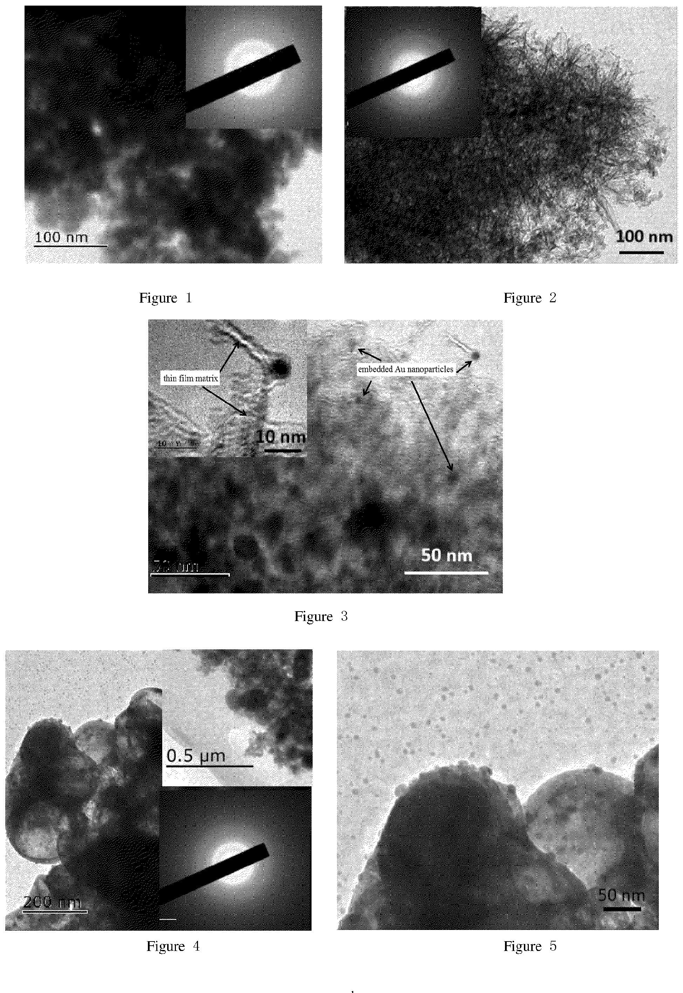

After 2 minutes of hydrogen evolution and Al-removal reaction, the solid flocculent product is separated from the solution, washed, and dried to obtain Au nanoparticle-doped low-crystallinity Nb oxide. The matrix is primarily an amorphous Nb oxide or amorphous Nb hydroxide. The TEM morphology and diffraction spectrum are shown in Figure 1. The morphology mainly consists of very fine flocculent microstructures, with sizes ranging from 1.0 nm to 15 nm. This flocculent microstructure is not a rigid nanoporous structure but rather a non-rigid, disperseable flocculent structure. Due to its low crystallinity (as seen in the diffraction spectrum), it is difficult to observe clear details of the flocculent microstructure further by TEM. For the Au nanoparticles doped within, the particle size ranges from 0.25 nm to 5 nm, and they are mainly in situ embedded in the Nb oxide matrix in the form of atoms or atomic clusters (the Nb oxide referred to here is equivalent to Nb oxide).

The solid flocculent product collected after 2 minutes of the hydrogen evolution Al-removal reaction is then heat-treated at 600°C for 2 hours, resulting in Au nanoparticle-doped Nb oxide with slightly increased crystallinity. The low-magnification TEM morphology and diffraction spectrum are shown in Figure 2, and the high-magnification TEM morphology is shown in Figure 3. From the diffraction pattern, it can be observed that the crystallinity of the Nb oxide after heat treatment at this temperature has only slightly increased, and it remains primarily low-crystallinity Nb oxide. However, its morphology has evolved from the flocculent structure before heat treatment to a partially thin-film structure, with the film thickness less than 5 nm and an area larger than 100 nm². After heat treatment, the Au nanoparticles undergo some coalescence and growth, with a particle size range of 0.25 nm to 10 nm, as shown by the inset of approximately 4 nm Au nanoparticles in Figure 3. The applicant's research found that pure low-crystallinity Nb oxide can almost fully transform into crystalline Nb oxide after 600°C heat treatment for 2 hours. Therefore, the phenomenon of improved thermal stability (difficulty in crystallization) of the low-crystallinity Nb oxide matrix in this example further suggests that before heat treatment, the Au element was mainly in situ embedded in the Nb oxide matrix in the form of atoms or atomic clusters.

The Au nanoparticle-doped Nb oxide, with slightly increased crystallinity, is reacted with 2 mol/L hydrofluoric acid solution to remove the Nb oxide matrix. This process allows the initially embedded inert Au nanoparticles to detach freely and undergo a certain degree of coalescence and growth, resulting in Au nanoparticles with a particle size range of 3 nm to 75 nm.

The solid flocculent product, collected after 2 minutes of hydrogen evolution and Al-removal reaction, is directly heat-treated at 900°C for 2 hours to obtain crystalline Au nanoparticle-doped Nb oxide. The crystalline Nb oxide has a particle shape, primarily in the form of particles with a particle size range of 3 nm to 150 nm. The Au nanoparticles exist in the crystalline Nb oxide matrix either partially or fully embedded, with a particle size range of 1 nm to 30 nm.

After 1 minute of the hydrogen evolution and Al-removal reaction, the alkali solution and solid product are directly poured into a sealed reactor. The temperature inside the reactor is raised to 250°C and maintained for 20 minutes. Under this sealed environment, the pressure inside the reactor is higher than atmospheric pressure. After the 20-minute hold, the temperature and pressure are reduced. The product inside the reactor is then separated by solid-liquid separation, washed, and dried to obtain the modified Au nanoparticle-doped Nb oxide. The Nb oxide matrix in this case is mainly crystalline, with a morphology composed of tubular and short rod-like structures. The diameter of the tubes or rods ranges from 2 nm to 30 nm, and their aspect ratio is greater than 2. The Au nanoparticles are embedded and grow within the Nb oxide matrix, with particle sizes ranging from 0.5 nm to 20 nm.

### Example 2

The example provides a method for preparing Au nanoparticle-doped nano-niobium (Nb) oxide, which includes the following steps:
According to the nominal formula Au₁₀Al₅₅Nb₃₅ (atomic percent), an alloy melt with the main composition of Au₁₀Al₅₅Nb₃₅ is prepared by melting the raw materials of Al, Nb, and Au. The alloy melt was rapidly solidified into an initial alloy ribbon with a thickness of ~25µm and mainly composed of Au₁₀Al₅₅Nb₃₅ by a melt-spinning technique using a copper roller. The solidified structure of the alloy ribbon is mainly composed of Al-Nb-Au intermetallic compounds of this component, and the atomic percentage content of Au is about 10 at.%.

At atmospheric pressure, the Au₁₀Al₅₅Nb₃₅ initial alloy ribbon is reacted with a KOH aqueous solution under constant stirring. The concentration of the KOH solution is 15 mol/L, and the temperature is maintained at the boiling point of KOH solution at atmospheric pressure (~150°C). The volume of KOH solution used is about 50 times the volume of the Au₁₀Al₅₅Nb₃₅ initial alloy ribbon. The hydrogen evolution reaction is completed within 30 seconds, and the initial alloy undergoes a hydrogen evolution and Al-removal reaction, resulting in nano-fragmentation of the product, along with simultaneous shape and composition reconstruction to form a solid product.

After 1 minute of the hydrogen evolution reaction, add 10 times the volume of room-temperature water (20°C) to the reaction system to rapidly reduce the temperature to below 40°C. This also lowers the KOH solution concentration to below 1.5 mol/L. After dilution, separate the solid product from the solution, wash it, and dry it. This yields Au nanoparticle-doped low-crystallinity nano Nb oxide. The matrix of the Nb oxide is mainly in an amorphous state or as amorphous Nb hydroxide. The morphology of the nano Nb oxide consists mainly of particles and thin films. The particle size ranges from 2 nm to 100 nm, and the thickness of the thin films ranges from 1 nm to 15 nm, with an average area greater than 100 nm². The Au nanoparticles range from 0.25 nm to 50 nm in size. These nanoparticles are incorporated into the nano Nb oxide matrix through two mechanisms: in situ embedding and physical adsorption. The Au nanoparticles embedded in situ are fixed within the Nb oxide matrix, while the Au nanoparticles that are physically adsorbed can undergo an adsorption-desorption-re-adsorption process under certain conditions.

### Example 3

This example provides a method for preparing Au nanoparticle-doped nano-Tantalum (Ta) oxide and Au nanoparticles, which includes the following steps:
According to the nominal formula of Au_{0.73}Al_{74.25}Ta₂₅ (atomic percent), an alloy melt primarily composed of Au_{0.73}Al_{74.25}Ta₂₅ is prepared by melting Al, Ta, and Au raw materials. The alloy melt was rapidly solidified into an initial alloy ribbon with a thickness of 20µm~30µm and mainly composed of Au_{0.75}Al_{74.25}Ta₂₅ by a melt-spinning technique using a copper roller. The solidified structure of the alloy ribbon is mainly composed of Al₃Ta(Au) intermetallic compounds with solid solution of Au, and the solubility of Au is about 0.75 at.%.

At atmospheric pressure, the Au_{0.73}Al_{74.25}Ta₂₅ initial alloy ribbon is reacted with a NaOH aqueous solution. The concentration of the NaOH solution is 12 mol/L, and the temperature is the boiling point of the solution at atmospheric pressure (~128°C). The volume of NaOH solution is approximately 100 times the volume of the Au_{0.75}Al_{74.25}Ta₂₅ initial alloy ribbon. Within 1 minute, the hydrogen evolution reaction is completed, and the initial alloy undergoes a hydrogen evolution and Al-removal reaction, resulting in nano-fragmentation of the product, along with simultaneous shape and composition reconstruction to form a solid product.

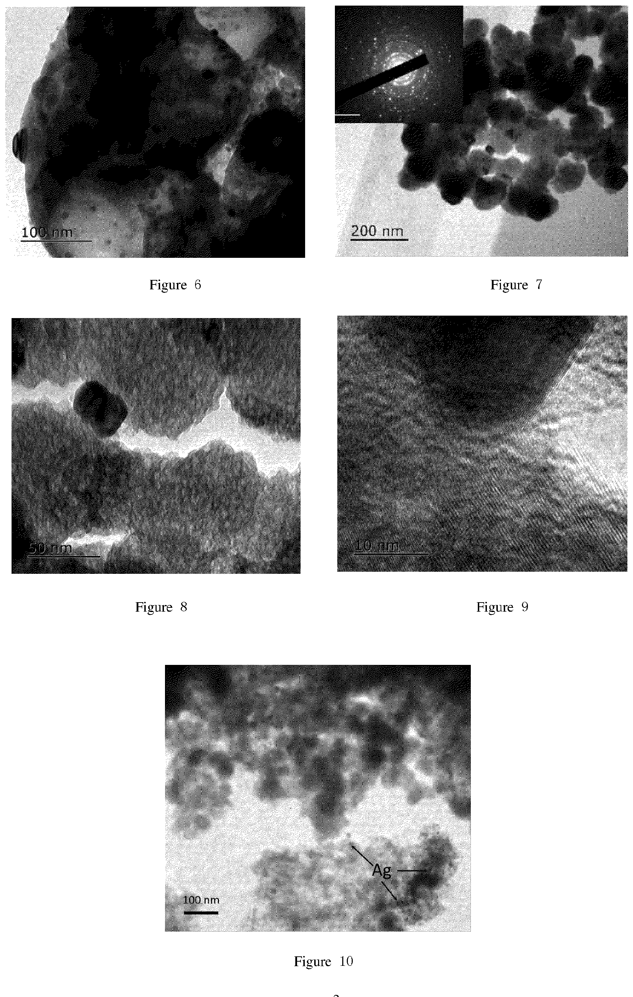

After 2 minutes of the hydrogen evolution and Al-removal reaction, the solid product is separated from the solution, cleaned, and dried to obtain Au nanoparticle-doped low-crystallinity nano Ta oxide. The TEM image and diffraction spectrum are shown in Figure 4. From the diffraction spectrum, it can be seen that the nano Ta oxide matrix is mainly amorphous nano Ta oxide or amorphous Ta hydroxide. The image shows that the morphology of the nano Ta oxide matrix consists mainly of flocculent clusters (as shown in the inset in the upper right corner of Figure 4) and curled thin film structures (as shown in Figure 4). The size of the flocculent cluster microstructures ranges from 1.0 nm to 10 nm, while the curled thin film structures form incomplete hollow spherical shells, with a thickness of 1.0 nm to 10 nm. For the doped Au nanoparticles, they are primarily incorporated into the nano Ta oxide matrix by two methods: in situ embedding and physical adsorption. Some of the physically adsorbed Au nanoparticles can undergo an adsorption-desorption-re-adsorption process with the nano Ta oxide matrix under certain conditions (as seen in the particles in the upper part of Figure 5). For the in situ embedded Au nanoparticles, the particle size range is from 0.25 nm to 20 nm (shown in Figure 6). For the physically adsorbed Au nanoparticles, the particle size range is from 2 nm to 20 nm (shown in Figure 5). The applicant's research has found that when there is no dissolved Au in the Al₃Ta intermetallic compound, the solid product obtained under similar reaction conditions is primarily crystalline, solid spherical nano Ta oxide particles (with a particle size range of 3 nm to 100 nm). Therefore, when Au is dissolved in the Al₃Ta(Au) intermetallic compound, it completely alters the crystallization degree and morphology of the Au nanoparticle-doped nano Ta oxide matrix obtained from the hydrogen evolution and Al-removal reaction.

After 2 minutes of the hydrogen evolution Al-removal reaction, the solid product is collected and heat-treated at 600°C for 2 hours, resulting in significantly crystalline nano Ta oxide, with Au nanoparticle-doped. The low-magnification TEM image and diffraction spectrum are shown in Figure 7, while the high-magnification TEM and high-resolution images are shown in Figures 8 and 9. From the diffraction spectrum, it can be seen that the crystallinity of the nano Ta oxide matrix significantly improves after heat treatment at this temperature, and it mainly consists of crystalline nano Ta oxide. The morphology of the nano Ta oxide matrix changes from the original flocculent clusters and curled thin film structures to a more granular form, with particle sizes ranging from 5 nm to 100 nm (shown in Figure 7). At the same time, the in situ embedded Au nanoparticles undergo coalescence and growth, with particle sizes ranging from 3 nm to 50 nm (shown in Figures 8 and 9).

The solid product obtained after 2 minutes of the hydrogen evolution and Al-removal reaction is then reacted with a 2 mol/L hydrofluoric acid solution, which removes the nano Ta oxide matrix and allows the inert Au nanoparticles that were embedded during the reaction to detach freely. These free Au nanoparticles then mix with the originally physically adsorbed inert Au nanoparticles, resulting in Au nanoparticles with sizes ranging from 3 nm to 100 nm.

For the Au_{0.75}Al_{74.25}Ta₂₅ initial alloy ribbon, 1 minute after the hydrogen evolution and Al-removal reaction begins, the alkaline solution and solid product are directly poured into a sealed reaction vessel. The temperature inside the vessel is then raised to 200°C and maintained for 30 minutes, with the pressure inside the sealed vessel higher than atmospheric pressure. After the 30-minute heat treatment, the temperature and pressure are lowered, and the product inside the reaction vessel is separated into solid and liquid phases. After cleaning and drying, the modified Au nanoparticle-doped nano Ta oxide is obtained. The nano Ta oxide matrix is mainly crystalline, with a morphology composed primarily of granular structures, with particle sizes ranging from 2 nm to 150 nm. The Au nanoparticles are predominantly embedded within the nano Ta oxide matrix, with particle sizes ranging from 0.5 nm to 15 nm.

### Example 4

This example provides a method for preparing Ag nanoparticle-doped nano-Vanadium (V) oxide, including the following steps:
According to the nominal composition of Ag_{0.3}Al_{61.7}V₃₈ (atomic percentage), the alloy melt with a composition primarily of Ag_{0.3}Al_{61.7}V₃₈ is obtained by melting Al, V, and Ag raw materials. This alloy melt is then solidified into an alloy ingot, which is subsequently crushed into an initial alloy powder with an average particle size of approximately ~50 µm. The solidification structure of this alloy powder mainly consists of the Al₈V₅(Ag) intermetallic compound with solid solution of Ag, and the solubility of Ag is about 0.3 at.%.

At atmospheric pressure, the Ag_{0.3}Al_{61.7}V₃₈ initial alloy powder is reacted with a NaOH aqueous solution while stirring continuously. The concentration of the NaOH solution is 10 mol/L, and the temperature is the boiling point of the solution at atmospheric pressure (~119°C). The volume of the NaOH solution is approximately 50 times the volume of the Ag_{0.3}Al_{61.7}V₃₈ initial alloy powder. Within 2 minutes, the hydrogen evolution reaction is completed, and the initial alloy undergoes a hydrogen evolution and Al-removal reaction, resulting in nano-fragmentation of the product, along with simultaneous shape and composition reconstruction to form a solid product.

After 2 minutes of the hydrogen evolution and Al-removal reaction, the solid product is separated from the solution, then washed and dried to obtain a low-crystallinity Ag nanoparticle-doped nano V oxide. The matrix is mainly amorphous V oxide or amorphous V hydroxide. The TEM image is shown in Figure 10. As seen in the figure, the morphology of the V oxide matrix mainly consists of very fine, low-crystallinity flocculent microstructures, with a size range of 1.0 nm to 10 nm. These flocculent microstructures are not rigid nanoporous structures, but rather flexible, dispersible flocculent structures (when flattened, the thickness changes minimally, which results in the uniform contrast observed in Figure 10). For the Ag nanoparticles doped into the matrix, they are mainly in-situ embedded within the V oxide matrix, as indicated by the arrow in Figure 10. The composition of the Ag nanoparticles includes either Ag or Ag oxide, or a combination of both, and the size range of the Ag nanoparticles is 0.25 nm to 15 nm.

After 2 minutes of the hydrogen evolution and Al-removal reaction, the solid product is obtained and directly heat-treated at at 900°C for 2 hours, resulting in Ag nanoparticle-doped crystalline nano V oxide. The crystalline nano V oxide predominantly has a particle-like shape, with a particle size range of 3 nm to 150 nm. The Ag nanoparticles are primarily in-situ embedded in the crystalline nano V oxide, with a size range of 1 nm to 30 nm.

The Ag_{0.3}Al_{61.7}V₃₈ initial alloy powder is mixed with 50 times the volume of 10 mol/L NaOH solution at a temperature of 30°C. The mixture is then placed directly into a sealed reaction vessel. The temperature inside the vessel is raised to 250°C and held for 20 minutes. Under sealed conditions, the pressure inside the vessel is higher than atmospheric pressure. After the 20-minute hold, the temperature is lowered, and the pressure is released. The product inside the reaction vessel is then separated by solid-liquid separation, followed by washing and drying. The result is the modified Ag nanoparticle-doped nano V oxide. The matrix of the nano V oxide is mainly crystalline, with a morphology predominantly consisting of particle-like structures, and a particle size range of 2 nm to 150 nm. The Ag nanoparticles are embedded in the nano V oxide matrix, with a size range of 0.5 nm to 15 nm.

### Example 5

This example provides a preparation method for Ag nanoparticle-doped nano-Tungsten (W) oxide nanoparticles, which includes the following steps:
According to the nominal composition of Ag_{0.2}Al_{78.8}W₂₀ (atomic percentage), an alloy melt primarily composed of Ag_{0.2}Al_{78.8}W₂₀ is prepared by melting Al, W, and Ag raw materials. The alloy melt was rapidly solidified into an initial alloy ribbon with a thickness of 20µm~30µm and mainly composed of Ag_{0.2}Al_{78.8}W₂₀ by a melt-spinning technique using a copper roller. The solidified structure of the alloy ribbon is mainly composed of Al₄W(Ag) intermetallic compounds with solid solution of Ag, and the solubility of Ag is about 0.2 at.%.

At atmospheric pressure, the Ag_{0.2}Al_{78.8}W₂₀ initial alloy ribbon is reacted with a NaOH aqueous solution. The concentration of the NaOH solution is 10 mol/L, and its temperature is maintained at its boiling point under atmospheric pressure (~119°C). The volume of the NaOH solution is approximately 30 times the volume of the Ag_{0.2}Al_{78.8}W₂₀ initial alloy ribbon. Within 1 minute, the hydrogen evolution and Al-removal reaction is completed. During this process, the initial alloy ribbon undergoes nanofragmentation through the hydrogen evolution and Al-removal reaction, simultaneously undergoing shape and composition reconstruction to form a solid-state product.

After 2 minutes from the start of the hydrogen evolution and Al-removal reaction, the solid product is separated from the solution, then cleaned and dried, resulting in a low-crystallinity Ag nanoparticle-doped nanostructured W oxide. The matrix of the nanostructured W oxide is primarily amorphous nano W oxide or amorphous W hydroxide. The morphology of the nanostructured W oxide matrix is mainly composed of very fine low-crystallinity flocculent microstructures, with the size of the flocculent microstructures ranging from 1.0 nm to 10 nm. For the Ag nanoparticle doping, the Ag nanoparticles are primarily embedded in situ within the nanostructured W oxide matrix. The composition of the Ag nanoparticles includes at least one of Ag and Ag oxide, and the size range of the Ag nanoparticles is 0.25 nm to 10 nm.

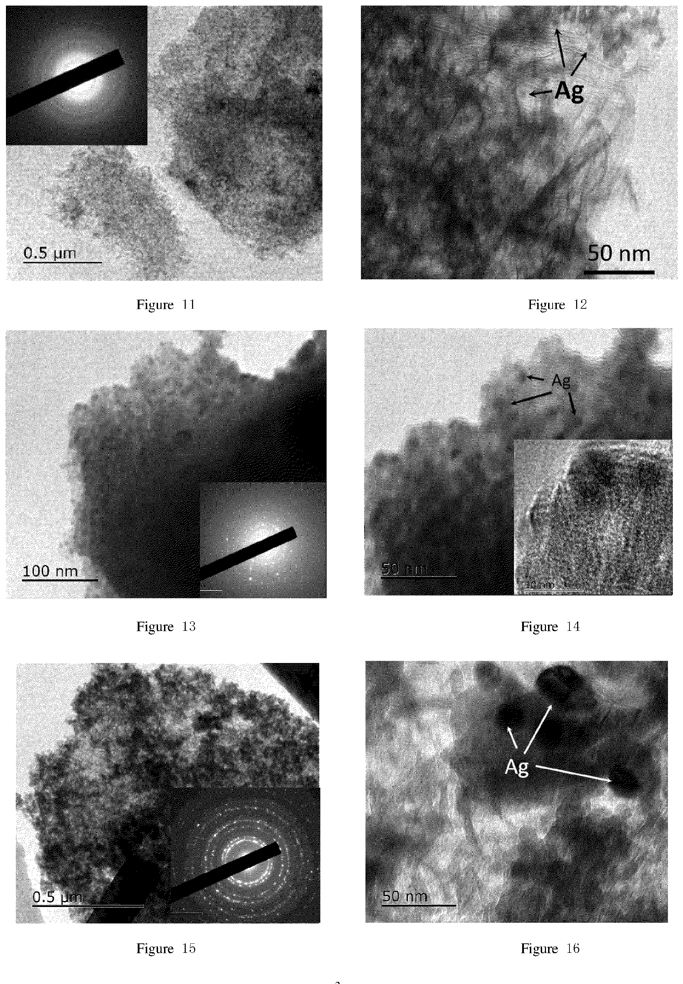

After 2 minutes from the start of the hydrogen evolution and Al-removal reaction, the solid product obtained is heat-treated at 600°C for 2 hours, resulting in an Ag nanoparticle-doped partially crystalline nanostructured W oxide with improved crystallinity. The TEM morphology and diffraction patterns are shown in Figures 11-12. The shape of the partially crystalline nanostructured W oxide is primarily fine, sheet-like, with a thickness range of 1.0 nm to 10 nm. The Ag nanoparticles are mainly embedded within the partially crystalline W oxide sheets, with a particle size range of 0.25 nm to 10 nm, as indicated by the arrows in Figure 12.

### Example 6

This example provides a method for preparing Ag nanoparticle-doped nano-Molybdenum (Mo) oxide, comprising the following steps:
According to the nominal formula of Ag_{1.5}Al₇₄Mo_{24.5} (atomic percentage), an alloy melt primarily composed of Ag_{1.5}Al₇₄Mo_{24.5} is prepared by melting Al, Mo, and Ag raw materials. The alloy melt was rapidly solidified into an initial alloy ribbon with a thickness of 20µm~30µm and mainly composed of Ag_{1.5}Al₇₄Mo_{24.5} by a melt-spinning technique using a copper roller. The solidified structure of the alloy ribbon is mainly composed of Al₃Mo(Ag) intermetallic compounds with solid solution of Ag, and the solubility of Ag is about 1.5 at.%.

At atmospheric pressure, the initial Ag_{1.5}Al₇₄Mo_{24.5} alloy ribbons are reacted with a NaOH aqueous solution. The concentration of the NaOH solution is 12 mol/L, and its temperature is approximately the boiling point at atmospheric pressure (~128°C). The volume of the NaOH solution is about 50 times the volume of the initial Ag_{1.5}Al₇₄Mo_{24.5} alloy ribbons. Within 1 minute, the hydrogen evolution and Al-removal reaction is completed. The initial alloy ribbons undergo nano-fragmentation due to the hydrogen evolution and Al-removal reaction, simultaneously experiencing shape and composition reconstruction to form a solid flocculent product.

After 2 minutes of the hydrogen evolution and Al-removal reaction, 10 times the volume of room temperature water (20°C) is added to the reaction system, rapidly reducing the reaction temperature to below 40°C and the concentration of the alkaline solution to below 1.2 mol/L. After dilution, the solid flocculent product is separated from the solution, washed, and dried, resulting in low-crystallinity Mo oxide doped with Ag nanoparticles. The matrix of the Mo oxide is primarily amorphous Mo oxide or amorphous Mo hydroxide, and its TEM morphology and diffraction patterns are shown in Figures 13-14. The morphology of the Mo oxide matrix is mainly composed of extremely fine flocculent microstructures, with a size range of 1.0 nm to 10 nm. This flocculent microstructure is not a rigid nanoporous structure but a flocculent structure that can be spread out and dispersed. The Ag nanoparticles doped in the Mo oxide are composed of Ag and/or Ag oxide. The Ag nanoparticles are mainly embedded in situ within the Mo oxide matrix, as indicated by the arrows in Figure 14.

After 3 minutes of the hydrogen evolution and Al-removal reaction, the resulting solid product is heat-treated at 900°C for 2 hours, resulting in Ag nanoparticle-doped crystalline Mo oxide. The crystalline Mo oxide has a primarily granular morphology, with a particle size range of 3 nm to 150 nm. The Ag nanoparticles mainly exist embedded within the crystalline Mo oxide particles, with a particle size range of 0.25 nm to 30 nm.

After 1 minute of the hydrogen evolution and Al-removal reaction of the Ag_{1.5}Al₇₄Mo_{24.5} initial alloy ribbon, the alkaline solution and the solid flocculent product are directly poured into a sealed reactor. The temperature inside the reactor is then raised to 250°C and maintained for 20 minutes. Under these conditions, the pressure inside the reactor is higher than atmospheric pressure. After 20 minutes of heating, the reactor is cooled and depressurized, and the product inside the reactor undergoes solid-liquid separation. The product is then cleaned and dried to obtain the modified Ag nanoparticle-doped Mo oxide. In this modified product, the Mo oxide matrix is primarily crystalline, with a morphology mainly composed of granular particles, and a particle size range of 3 nm to 150 nm. The Ag nanoparticles, which are doped within the Mo oxide matrix, include at least one of Ag and Ag oxide. These Ag nanoparticles are mainly incorporated into the modified Mo oxide matrix via in-situ embedding, with a particle size range of 0.5 nm to 15 nm.

### Example 7

This example provides a method for preparing Ag nanoparticle-doped nano-Yttrium (Y) oxide, which includes the following steps:
According to the nominal formula of Ag₁₀Al₆₇Y₂₃ (atomic percentage), an alloy melt with the composition mainly consisting of Ag₁₀Al₆₇Y₂₃ was prepared by melting Al, Y, and Ag raw materials. The alloy melt was rapidly solidified into an initial alloy ribbon with a thickness of 20 µm to 30 µm and mainly composed of Ag₁₀Al₆₇Y₂₃ by a melt-spinning technique using a copper roller. The solidified structure of the alloy ribbon is mainly composed of Al-Y-Ag intermetallic compounds of this component, and the atomic percentage content of Ag is about 10 at.%.

At atmospheric pressure, the Ag₁₀Al₆₇Y₂₃ initial alloy ribbon was reacted with a NaOH aqueous solution, with continuous stirring. The concentration of the NaOH solution was 12 mol/L, and the temperature was set to the boiling point of the NaOH solution under atmospheric pressure (~128°C). The volume of the NaOH solution was approximately 50 times the volume of the Ag_{1 0} Al_{6 7} Y_{2 3} initial alloy ribbon. Within 1 minute, the hydrogen evolution reaction was completed, and the initial alloy underwent nanofragmentation via the hydrogen evolution and Al-removal reaction. Simultaneously, the shape and composition of the alloy were restructured, resulting in the formation of a solid product.

After 2 minutes of the hydrogen evolution and Al-removal reaction, 10 times the volume of room temperature water (20°C) was added to the reaction system, causing the reaction temperature to rapidly drop below 40°C and the alkali solution concentration to decrease to below 1.2 mol/L. After dilution, the solid product was separated from the solution, cleaned, and dried, yielding Ag nanoparticle-doped partially crystalline nano Y oxide. The TEM morphology and diffraction spectra are shown in Figures 15 and 16. The partially crystalline nano Y oxide matrix primarily has an irregular flocculent structure, with the size of the flocculent microstructure ranging from 2 nm to 15 nm. The content of Ag nanoparticles is relatively high, so the diffraction spectrum in Figure 15 is mainly attributed to the diffraction of the Ag nanoparticles. The diffraction information of the partially crystalline nano Y oxide matrix is less pronounced due to its incomplete crystallization and the lower relative content of the oxide in the sample. According to Figure 16, Ag nanoparticles are mainly doped and compounded with partially crystallized nano oxide Y matrix through in-situ embedding, and the particle size range of Ag nanoparticles is 0.25nm-50nm.

### Example 8

This example provides a method for preparing Au nanoparticle-doped nano-Yttrium (Y) oxide, which includes the following steps:
According to the nominal composition of Au₇Al₇₀Y₂₃(atomic percentage), the alloy melt with a composition primarily of Au₇Al₇₀Y₂₃ is obtained by melting Al, Y, and Au raw materials. This alloy melt is then solidified into an alloy ingot, which is subsequently crushed into an initial alloy powder with an average particle size of 2 mm. The powder composition is primarily Au₇Al₇₀Y₂₃, and its solidification structure mainly consists of an Al-Y-Au intermetallic compound of this component, with the atomic percentage of Au being approximately 7 at.%.

At normal pressure, the initial coarse powder of Au₇Al₇₀Y₂₃ alloy is reacted with NaOH aqueous solution while continuously stirring. The NaOH solution has a concentration of 12 mol/L and a temperature at its boiling point under normal pressure (~128°C). The volume of NaOH solution is approximately 100 times the volume of the Au₇Al₇₀Y₂₃ initial alloy powder. Within 8 minutes, the hydrogen evolution and Al-removal reaction was completed. The initial alloy undergoes nanofragmentation through the hydrogen evolution and Al-removal reaction, and simultaneously undergoes morphological and compositional reconstruction to form a solid product.

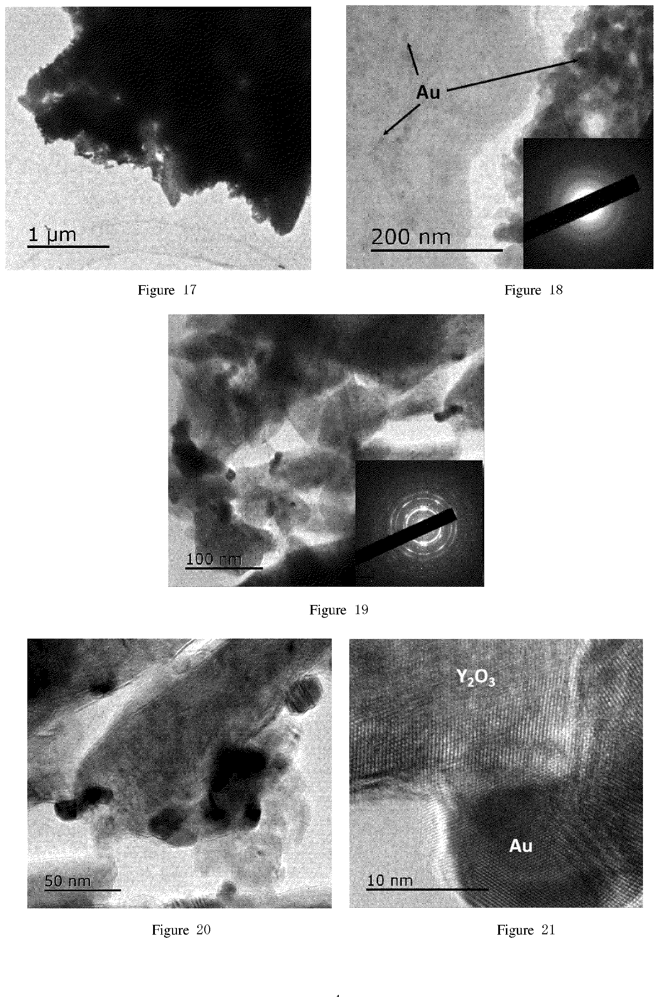

After 10 minutes of the hydrogen evolution and Al-removal reaction, the solid product is separated from the solution, cleaned, and dried. This results in Au nanoparticle-doped low crystallinity nanostructured Y oxide. Its TEM morphology and diffraction patterns are shown in Figures 17 and 18. The low crystallinity nano Y oxide matrix mainly adopts an irregular flocculent shape, with flocculent microstructures ranging in size from approximately 1 nm to 20 nm. The Au nanoparticles are incorporated into the low crystallinity nano Y oxide matrix through both in situ embedding and physical adsorption. Some Au nanoparticles detach from the nano Y oxide matrix, becoming free Au nanoparticles, as shown in Figure 18. The size of the Au nanoparticles ranges from 0.25 nm to 30 nm.

After 10 minutes of the hydrogen evolution and Al-removal reaction, the solid product obtained is heat-treated at 900°C for 2 hours, resulting in Au nanoparticle-doped crystalline nanostructured Y oxide. The crystalline nano Y oxide mainly adopts a particle-like shape, with a particle size range from 3 nm to 150 nm. The Au nanoparticles are doped into the crystalline nano Y oxide through both in situ embedding and physical adsorption, with their particle size ranging from 0.5 nm to 50 nm.

After 8 minutes of the hydrogen evolution and Al-removal reaction of Au₇Al₇₀Y₂₃ alloy, the alkaline solution and the solid flocculent product are directly transferred into a sealed reactor. The temperature inside the reactor is then raised to 250°C and maintained for 1 hour under pressure above atmospheric pressure in the sealed environment. After 1 hour of heating, the temperature and pressure are reduced, and the product is separated from the liquid phase through solid-liquid separation. After cleaning and drying, the modified Au nanoparticle-doped nano Y oxide is obtained. In this process, the nano Y oxidematrix is primarily crystalline, with a morphology mainly consisting of particles, and a particle size range from 3 nm to 250 nm. The Au nanoparticles are doped into the crystalline nano Y oxide matrix through both in situ embedding and physical adsorption, with the Au nanoparticle size ranging from 0.5 nm to 50 nm.

### Example 9

This example provides a method for preparing Au nanoparticle-doped nano-Yttrium (Y) oxide and Au nanoparticles, which includes the following steps:
According to the nominal composition of Au₁Al₇₄Y₂₅ (atomic percentage), an alloy melt primarily composed of Au₁Al₇₄Y₂₅ is prepared by melting Al, Y, and Au raw materials. The alloy melt was rapidly solidified into an initial alloy ribbon with a thickness of ~25µm and mainly composed of Au₁Al₇₄Y₂₅ by a melt-spinning technique using a copper roller. The solidified structure of the alloy ribbon is mainly composed of Al₃Y(Au) intermetallic compounds with solid solution of Au, and the solubility of Au is about 1 at.%.

At atmospheric pressure, the Au₁Al₇₄Y₂₅ initial alloy ribbon is reacted with a NaOH aqueous solution. The concentration of the NaOH solution is 12 mol/L, and the temperature is approximately its boiling point at atmospheric pressure (~128°C). The volume of the NaOH solution is approximately 50 times the volume of the Au₁Al₇₄Y₂₅ initial alloy ribbon. Within 1 minute, the hydrogen evolution and Al-removal reaction is completed. The initial alloy undergoes nano-fragmentation through the hydrogen evolution and Al-removal reaction, simultaneously undergoing shape and composition reconstruction to form a solid-state product.

After 2 minutes of the hydrogen evolution and Al-removal reaction, the solid product is separated from the solution, washed, and dried. This results in Au nanoparticle-doped nano Y oxide. The TEM morphology and diffraction spectra are shown in Figures 19-21. From the figures, it can be seen that the nano Y oxide matrix is primarily crystalline in nature, with a morphology of plate-like or short rod-like shapes. The diameter range is 3 nm to 150 nm, with an aspect ratio (length-to-diameter ratio) ranging from 1.5 to 5. For the Au nanoparticles doped within the matrix, they are primarily incorporated into the crystalline nano Y oxide matrix through an in-situ embedding mechanism. The particle size of the Au nanoparticles ranges from 0.25 nm to 50 nm, as indicated by the dark contrast particles in Figure 20.

After 2 minutes of the hydrogen evolution and Al-removal reaction, the obtained solid flocculent product is reacted with a 2 mol/L hydrochloric acid solution to remove the nano Y oxide matrix. This process allows the initially embedded inert Au nanoparticles to be freed. Through a certain degree of coalescence and growth, Au nanoparticles with a particle size range of 3 nm to 150 nm are obtained.

### Example 10

This example provides a method for preparing Au nanoparticle-doped nano-Chromium (Cr) oxide and Au nanoparticles, which includes the following steps:
According to the nominal composition of Au_{1.5}Al₇₉Cr_{19.5} (atomic percentage), an alloy melt with a composition mainly of Au_{1.5}Al₇₉Cr_{19.5} is prepared by melting raw materials of Al, Cr, and Au. The alloy melt was rapidly solidified into an initial alloy ribbon with a thickness of ~25µm and mainly composed of Au_{1.5}Al₇₉Cr_{19.5} by a melt-spinning technique using a copper roller. The solidified structure of the alloy ribbon is mainly composed of Al₄Cr(Au) intermetallic compounds with solid solution of Au, and the solubility of Au is about 1.5 at.%.

At atmospheric pressure, the initial alloy ribbon of Au_{1.5}Al₇₉Cr_{19.5} is reacted with a NaOH aqueous solution while being continuously stirred. The NaOH solution has a concentration of 12 mol/L, with a temperature close to its boiling point at atmospheric pressure (~128°C), and the volume of the NaOH solution is approximately 50 times the volume of the Au_{1.5}Al₇₉Cr_{19.5} initial alloy ribbon. Within 1 minute, the hydrogen evolution and Al-removal reaction is completed, resulting in the nanofragmentation of the initial alloy. Simultaneously, the shape and composition of the alloy are reconstructed, producing a solid flocculent product.

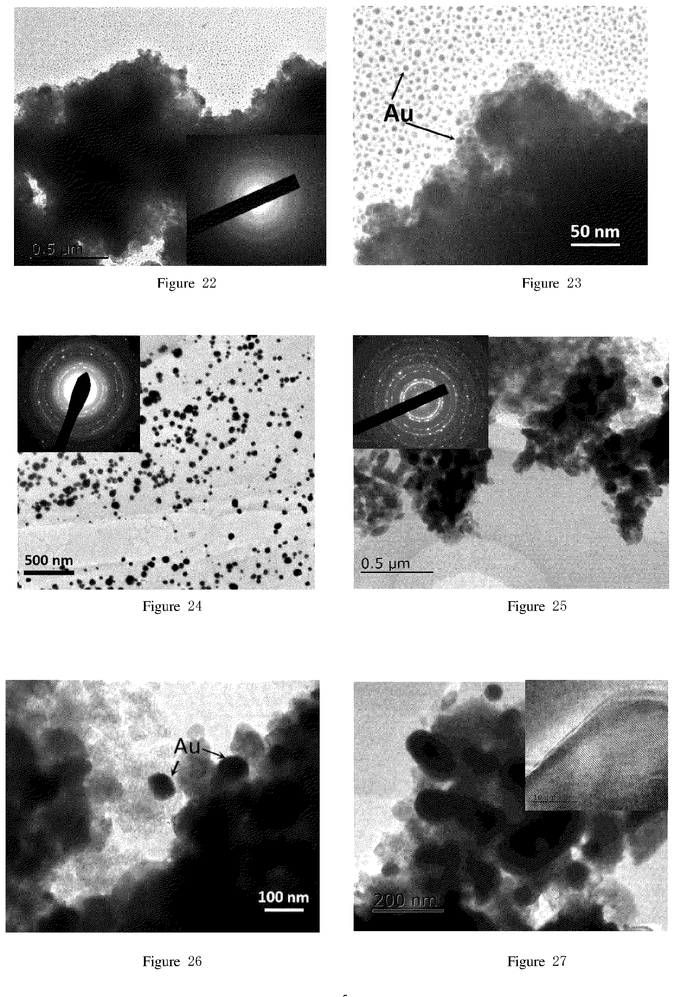

After 2 minutes of the hydrogen evolution and Al-removal reaction, the solid flocculent product is separated from the solution, then washed and dried to obtain Au nanoparticle-doped low-crystallinity nano Cr. The matrix of the product is primarily composed of amorphous nano Cr oxide or amorphous Cr hydroxide. The TEM morphology and diffraction spectra are shown in Figures 22 and 23. The nano Cr oxide matrix mainly consists of very fine flocculent microstructures, with the size of these structures ranging from 1.0 nm to 10 nm. These flocculent microstructures are not rigid nanoporous structures but rather loose, dispersible, and soft aggregates. Due to the low crystallinity (as seen in the diffraction spectra), it is difficult to observe detailed structural information about the flocculent microstructures clearly in the TEM images. For the Au nanoparticles doped within the matrix, they are primarily incorporated through in situ embedding and physical adsorption. Some of the physically adsorbed Au nanoparticles detach from the nano Cr oxide matrix, becoming free Au nanoparticles, as shown in Figure 23. The sizes of the Au nanoparticles, whether embedded in situ or adsorbed physically, range from 0.25 nm to 30 nm.

After 2 minutes of the hydrogen evolution and Al-removal reaction, the obtained solid flocculent product is reacted with a 2 mol/L hydrochloric acid solution to remove the low-crystallinity nano Cr oxide matrix. This process allows the originally embedded inert Au nanoparticles to detach freely. Along with the Au nanoparticles that were physically adsorbed, the free Au nanoparticles undergo some degree of merging and growth, resulting in Au nanoparticles with sizes ranging from 3 nm to 100 nm, as shown in Figure 24.

After 2 minutes of the hydrogen evolution and Al-removal reaction, the obtained solid flocculent product is directly heat-treated at 900°C for 2 hours to obtain Au nanoparticle-doped crystalline nano Cr oxide. The crystalline nano Cr oxide matrix mainly has a particle shape with a particle size range of 3 nm to 150 nm. The Au nanoparticles mainly exist in the crystalline nano Cr oxide matrix through partial or complete in-situ embedding. Partial embedding means that some of the Au nanoparticle volume is exposed outside the nano Cr oxide matrix. The size of the Au nanoparticles ranges from 1 nm to 50 nm. Additionally, some of the Au nanoparticles that were originally physically adsorbed remain attached to the crystalline nano Cr oxide matrix after heat treatment, still doped via physical adsorption, with a particle size range of 1 nm to 50 nm.

After 1 minute of the hydrogen evolution and Al-removal reaction of Au_{1.5}Al₇₉Cr_{19.5} alloy, the alkaline solution and the solid product are directly poured into a sealed reaction vessel. The temperature inside the reaction vessel is then raised to 300°C and held for 10 minutes under high pressure, above atmospheric pressure, in a sealed environment. After 10 minutes of holding, the temperature and pressure are reduced, and the product inside the reaction vessel is subjected to solid-liquid separation, followed by cleaning and drying. The result is a modified Au nanoparticle-doped nano Cr oxide. In the modified nano Cr oxide, the matrix is primarily crystalline. The morphology consists mainly of particulate and short rod shapes, where the particle size ranges from 2 nm to 100 nm, and the short rods have a diameter ranging from 2 nm to 50 nm, with a length-to-diameter ratio of 1.5 to 5.

The Au nanoparticles are doped into the modified nano Cr oxide matrix via two methods: in-situ embedding and physical adsorption. Some of the Au nanoparticles that were physically adsorbed may detach from the modified nano Cr oxide matrix and become free Au nanoparticles. The particle size of the in-situ embedded and physically adsorbed Au nanoparticles ranges from 0.25 nm to 50 nm.

### Example 11

This example provides a method for preparing Au nanoparticle-doped nano-Chromium (Cr) oxide and Au nanoparticles, which includes the following steps:
According to the nominal composition of Au₅Al₇₇Cr₁₈ (atomic percentage), the alloy melt with a composition mainly of Au₅Al₇₇Cr₁₈ is obtained by melting Al, Cr, and Au raw materials. The alloy melt is then solidified into an alloy ingot, which is subsequently crushed into an initial alloy powder with an average particle size of 100 µm. The solidified structure of the initial alloy powder mainly consists of Al₄Cr(Au) intermetallic compounds with solid solution of Au, or primarily consists of Al-Cr-Au intermetallic compounds, where the Au content is approximately 5at.%. Whether it is the Al₄Cr(Au) intermetallic compound or the Al-Cr-Au intermetallic compound, Au atoms are dispersed and distributed within the Al₄Cr(Au) phase or the Au₅Al₇₇Cr₁₈ phase.

At atmospheric pressure, the Au₅Al₇₇Cr₁₈ initial alloy powder is reacted with a NaOH aqueous solution while continuously stirring. The concentration of the NaOH solution is 12 mol/L, and the temperature is the boiling point of the NaOH solution at atmospheric pressure (~128°C). The volume of the NaOH solution is approximately 100 times the volume of the Au₅Al₇₇Cr₁₈ initial alloy powder. Within 1.5 minutes, the hydrogen evolution and Al-removal reaction is completed. The initial alloy powder undergoes nanofragmentation via the hydrogen evolution and Al-removal reaction; Simultaneously, the shape and composition of the alloy are reconstructed, producing a solid flocculent product.

After 2 minutes of the hydrogen evolution and Al-removal reaction, the solid flocculent product is separated from the solution, followed by washing and drying to obtain Au nanoparticle-doped low-crystallinity nano Cr oxide. The matrix of the product is primarily amorphous nano Cr oxide or amorphous Cr hydroxide. The morphology of the nano Cr oxide matrix consists mainly of extremely fine flocculent microstructures, with sizes ranging from 1.0 nm to 10 nm. For the Au nanoparticles doped within this matrix, they primarily composite with the low-crystallinity nano Cr oxide matrix through in situ incorporation. The particle size of the Au nanoparticles ranges from 0.25 nm to 30 nm. When the particle size is smaller than 2 nm, the Au nanoparticles mainly form composites with the low-crystallinity nano Cr oxide matrix in the form of atomic clusters or individual atoms.

After 2 minutes of the hydrogen evolution and Al-removal reaction, the resulting solid flocculent product was collected and heat-treated at 600°C for 2 hours, resulting in Au nanoparticle-doped low-crystallinity nano Cr oxide. The morphology and diffraction patterns are shown in Figures 25-27. From the figures, it can be observed that even after 2 hours of heat treatment at 600°C, the nano Cr oxide matrix still maintains its low crystallinity with a flocculent microstructure. Although the diffraction pattern in Figure 25 is a typical crystalline diffraction pattern, it primarily shows the diffraction information of the Au nanoparticles (due to the relatively high content of Au nanoparticles in this example), with very little diffraction from chromium oxide. Considering the flocculent morphology of the nano Cr oxide matrix, it can be concluded that the matrix retains its low-crystallinity state (as evidenced by comparison with Example 2, where pure nano Cr oxide would transform to a crystalline state and exhibit a particle-like morphology after 2 hours of heat treatment at 600°C). Before heat treatment, the low-crystallinity nano Cr oxide contained a large number of fine Au nanoparticles, which were incorporated in situ as atomic or atomic-cluster forms. These nanoparticles significantly enhanced the thermal stability of the low-crystallinity nano Cr oxide matrix. As a result, after heat treatment at 600°C, the low-crystallinity nano Cr oxide matrix did not undergo significant crystallization or morphological changes. After heat treatment, the in situ embedded Au nanoparticles still primarily composite with the low-crystallinity nano Cr oxide matrix through in situ incorporation. Although the morphology and crystalline structure of the nano Cr oxide matrix did not change significantly after heat treatment, the in situ embedded Au nanoparticles underwent noticeable merging and growth, with a particle size range from 1 nm to 200 nm, as shown in Figure 27 and its inset, where larger particles are visible.

The product obtained from the 600°C heat treatment for 2 hours was then reacted with a 2 mol/L hydrochloric acid solution to remove the low-crystallinity and acid-reactive nano Cr oxide matrix. This process allowed the inert Au nanoparticles, which were originally embedded in the matrix, to be liberated. The Au nanoparticles underwent some degree of free merging and growth, resulting in Au nanoparticles with a particle size range of 3 nm to 300 nm.

### Example 12

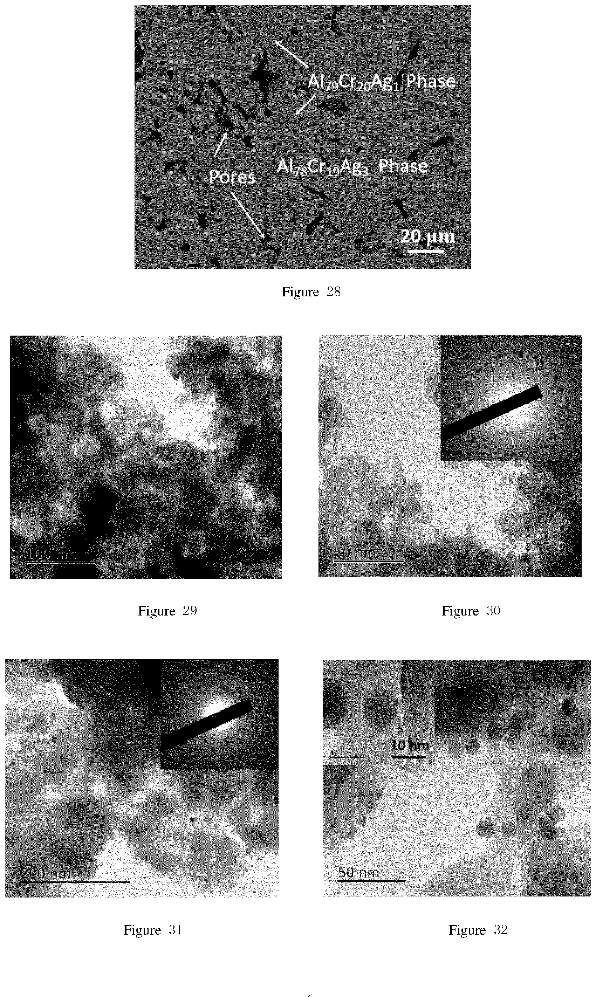

This present example provides a method for preparing Ag nanoparticle-doped nano-Chromium (Cr) oxide, which includes the following steps:
According to the nominal composition of Ag₃Al₇₈Cr₁₉ (atomic percent), the alloy melt with a composition mainly of Ag₃Al₇₈Cr₁₉ is obtained by melting Al, Cr, and Ag raw materials. The alloy melt is then solidified into alloy ingots, which are subsequently crushed into an initial alloy powder with an average particle size of 100 µm. The composition of this initial alloy powder is mainly Ag₃Al₇₈Cr₁₉. The solidification structure of the alloy ingots or initial alloy powder consists primarily of the intermetallic compound Al₄Cr(Ag)with solid solution of Ag (as shown in Figure 28). The Al₄Cr(Ag) intermetallic compound includes two levels of Ag solubility: Ag₃Al₇₈Cr₁₉ and Ag₁Al₇₉Cr₂₀, with Ag₃Al₇₈Cr₁₉ being the dominant phase. The Ag solubility in these phases is approximately 3 at.% for Ag₃Al₇₈Cr₁₉ and 1 at.% for Ag₁Al₇₉Cr₂₀-

At atmospheric pressure, the Ag₃Al₇₈Cr₁₉ initial alloy powder is reacted with a NaOH aqueous solution while being continuously stirred. The NaOH solution has a concentration of 12 mol/L and is heated to its boiling point at atmospheric pressure (~128°C). The volume of the NaOH solution is approximately 100 times the volume of the Ag₃Al₇₈Cr₁₉ initial alloy powder. Within 1.5 minutes, the hydrogen evolution and Al-removal reaction completes, the initial alloy powder undergoes nanofragmentation via the hydrogen evolution and Al-removal reaction; Simultaneously, the shape and composition of the alloy are reconstructed, producing a solid flocculent product.

After 2 minutes of the hydrogen evolution and Al-removal reaction, the solid flocculent product is separated from the solution, washed, and dried to obtain a low-crystallinity nano Cr oxide doped with Ag nanoparticles. Its TEM morphology and diffraction patterns are shown in Figures 29 and 30. It can be observed that the nano Cr oxide matrix is primarily amorphous nano Cr oxide or amorphous chromium hydroxide. The morphology of the nano Cr oxide matrix mainly consists of very fine flocculent microstructures, with a size range of 1.0 nm to 15 nm. Regarding the Ag nanoparticles doped within the matrix, the composition includes Ag nanoparticles, Ag oxide nanoparticles, or at least one of these. The Ag nanoparticles are mainly incorporated into the low-crystallinity nano Cr oxide matrix through an in-situ embedding process. The size range of the in-situ embedded Ag nanoparticles is from 0.25 nm to 10 nm, with most of the Ag nanoparticles having a very small particle size that is difficult to observe using TEM. When the in-situ embedded Ag nanoparticles have a size less than 2 nm, the Ag nanoparticles are mainly present as atoms or atomic clusters, embedded into the nano Cr oxide matrix. This low-crystallinity nano Cr oxide doped with Ag nanoparticles can be applied in antibacterial materials, including antibacterial coatings, antibacterial pigments, antibacterial glazes, and antibacterial pastes.

After 2 minutes of the hydrogen evolution and Al-removal reaction, the solid flocculent product collected is heat-treated at 600°C for 2 hours to obtain Ag nanoparticle-doped low-crystallinity nano Cr oxide. Its morphology is shown in Figures 31 and 32. As seen in the figures, even after 600°C heat treatment for 2 hours, the nano Cr oxide matrix still maintains a low-crystallinity flocculent microstructure. This is because, prior to heat treatment, a large number of small Ag nanoparticles, existing in the form of atoms or atomic clusters, were in-situ embedded in the low-crystallinity nano Cr oxide. This significantly enhances the thermal stability of the low-crystallinity nano Cr oxide matrix, preventing it from undergoing significant crystallization during the 600°C heat treatment (as compared to Example 2, where pure nano Cr oxide would transform into a crystalline particle form after 600°C heat treatment for 2 hours). After heat treatment, the Ag nanoparticles embedded in the matrix mainly remain in-situ embedded in the low-crystallinity nano Cr oxide matrix, as shown in the embedded particles in Figures 31 and 32. Although the morphology and crystallinity of the nano Cr oxide matrix do not change significantly after heat treatment, the in-situ embedded Ag nanoparticles have undergone noticeable coalescence and growth, with a particle size range of 0.5 nm to 15 nm, as shown in Figures 31 and 32. The heat-treated Ag nanoparticle-doped low-crystallinity nano Cr oxide can be applied in antibacterial materials, including antibacterial coatings, antibacterial pigments, antibacterial glazes, and antibacterial pastes.

After 2 minutes of the hydrogen evolution and Al-removal reaction, the collected solid flocculent product is directly heat-treated at 900°C for 2 hours, resulting in Ag nanoparticle-doped crystalline nano Cr oxide. The crystalline nano Cr oxide matrix primarily adopts a particle shape, with particle sizes ranging from 3 nm to 150 nm. Ag nanoparticles are predominantly present in the crystalline nano Cr oxide matrix in the form of in-situ embedding, with particle sizes ranging from 2 nm to 50 nm. The heat-treated Ag nanoparticle-doped crystalline nano Cr oxide can be applied in antibacterial materials, including antibacterial coatings, antibacterial pigments, antibacterial glazes, and antibacterial pastes.

### Example 13

This example provides a method for preparing Ag-Cu-Au nanoparticle-doped Chromium (Cr) oxide and Ag-Cu-Au nanoparticles, which includes the following steps:
According to the nominal composition of Ag_{0.5}Cu_{0.5}Au_{0.5}Al₇₉Cr_{19.5} (atomic percentage), an alloy melt with the composition of Ag_{0.5}Cu_{0.5}Au_{0.5}Al₇₉Cr_{19.5} is obtained by melting Al, Cr, Ag, Cu, and Au raw materials. The alloy melt was rapidly solidified into an initial alloy ribbon with a thickness of ~200µm and mainly composed of Ag_{0.5}Cu_{0.5}Au_{0.5}Al₇₉Cr_{19.5} by a melt-spinning technique using a copper roller. The solidified structure of the alloy ribbon is mainly composed of Al₄Cr(Ag-Cu-Au) intermetallic compounds with solid solution of Ag, Cu, and Au, with the respective contents of about 0.5 at.%, 0.5 at.%, and 0.5 at.%.

At atmospheric pressure, the initial alloy ribbon of Ag_{0.5}Cu_{0.5}Au_{0.5}Al₇₉Cr_{19.5} is reacted with a mixed aqueous solution of NaOH and KOH in a molar ratio of 1:1, with continuous stirring. The concentration of OH⁻ in the solution is 7 mol/L, and the temperature is maintained between 105°C and 112°C. The volume of the alkaline solution is approximately 100 times the volume of the initial alloy ribbon of Ag_{0.5}Cu_{0.5}Au_{0.5}Al₇₉Cr_{19.5}. Within 4 minutes, the hydrogen evolution and Al-removal reaction is completed. The initial alloy undergoes nanofragmentation through the hydrogen evolution and Al-removal reaction, and simultaneously undergoes morphological and compositional reconstruction, resulting in the formation of a solid flocculent product.

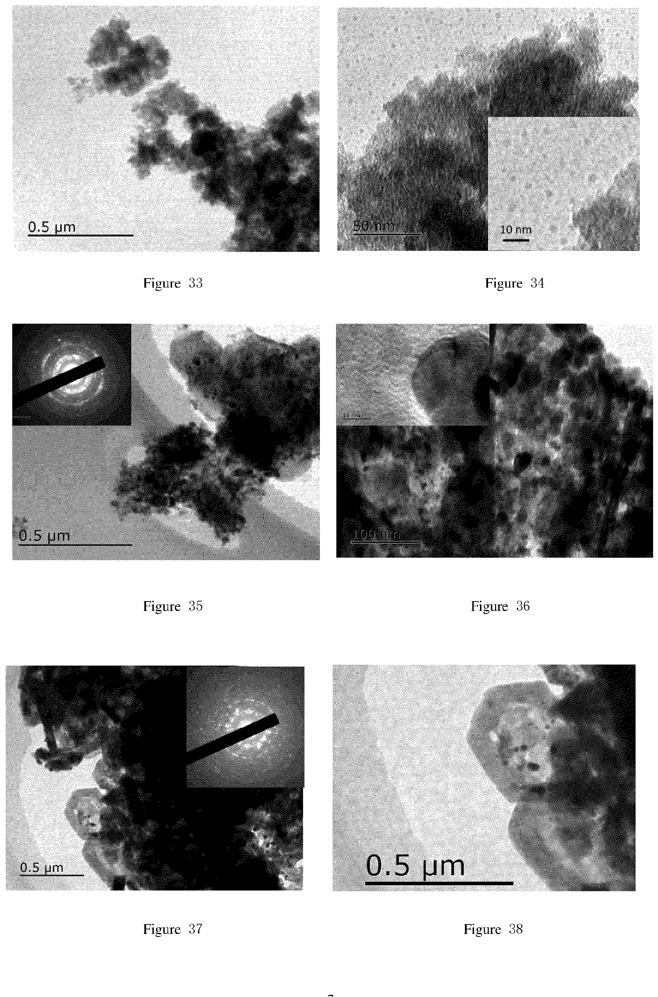

After 5 minutes of the hydrogen evolution and Al-removal reaction, the solid flocculent product is separated from the solution, cleaned, and dried to obtain Ag-Cu-Au nanocluster-doped low-crystallinity nano Cr oxide. Its TEM morphology is shown in Figures 33 and 34. The nano Cr oxide matrix is primarily amorphous, consisting of very fine flocculent microstructures with sizes ranging from 1.0 nm to 10 nm. For the embedded Ag-Cu-Au nanoparticles, they are primarily incorporated into the low-crystallinity nano Cr oxide matrix via both in-situ embedding and physical adsorption methods. Some of the physically adsorbed Ag-Cu-Au nanoparticles can freely detach (as seen in Figure 34). The particle size of the Ag-Cu-Au nanoparticles ranges from 0.25 nm to 10 nm. When the particle size is smaller than 2 nm, the Ag-Cu-Au nanoparticles are mostly incorporated into the low-crystallinity nano Cr oxide matrix as atoms or atomic clusters through in-situ embedding.

The solid flocculent product obtained above is reacted with a 2 mol/L hydrochloric acid solution to remove the low-crystallinity nano Cr oxide matrix, which is easily reactive with the acid. This process allows the embedded, inert Ag-Cu-Au nanoparticles to freely detach from the matrix. These nanoparticles, along with the Ag-Cu-Au nanoparticles that were physically adsorbed, undergo some degree of free aggregation and growth, resulting in Ag-Cu-Au nanoparticles with a particle size range of 3 nm to 100 nm.

### Example 14

This example provides a method for preparing Au nanoparticle-doped nano Manganese (Mn) oxide and Au nanoparticles, which includes the following steps:
According to the nominal formula Au₁Al₇₂Mn₂₇ (atomic percent), an alloy melt with a composition primarily consisting of Au₁Al₇₂Mn₂₇ is obtained by melting Al, Mn, and Au raw materials. The alloy melt was rapidly solidified into an initial alloy ribbon with a thickness of ~100µm and mainly composed of Au₁Al₇₂Mn₂₇ by a melt-spinning technique using a copper roller. The solidified structure of the alloy ribbon is mainly composed of Al₁₁Mn₄(Au) intermetallic compounds with solid solution of Au, and the solubility of Au is about 1at.%.

At atmospheric pressure, the Au₁Al₇₂Mn₂₇ initial alloy ribbon is reacted with a NaOH aqueous solution while continuously stirring. The NaOH solution has a concentration of 12 mol/L, and the temperature is the boiling point of the solution at atmospheric pressure (~128°C). The volume of the NaOH solution is approximately 100 times the volume of the Au₁Al₇₂Mn₂₇ initial alloy ribbon. Within 2 minutes, the hydrogen evolution and aluminum removal reaction is completed. The initial alloy ribbon undergoes nanofragmentation through the hydrogen evolution and Al-removal reaction, simultaneously, the shape and composition of the alloy are reconstructed, producing a solid product.

After 2 minutes of the hydrogen evolution and Al-removal reaction, the solid product is separated from the solution, cleaned, and dried, resulting in an Au nanoparticle-doped partially crystalline nano Mn oxide product. Its TEM morphology and diffraction patterns are shown in Figures 35 and 36. As observed, the nano Mn oxide matrix is primarily partially crystalline, with a particle size range of 2 nm to 400 nm. Some nano Mn oxide particles exhibit a hexagonal morphology (Figure 35), indicating a more well-defined crystalline state, while some parts of the nano Mn oxide matrix do not show clear particle boundaries, indicating an insufficient crystallization state. The Mn in the Mn oxide matrix includes low-valent Mn. As for the Au nanoparticles, their size range is 0.25 nm to 50 nm, and they are primarily embedded in the nano Mn oxide matrix through an in situ doping method. Only a small portion of the Au nanoparticles are doped through physical adsorption.

After 2 minutes of the hydrogen evolution and Al-removal reaction, the collected solid product is heat-treated at 600°C for 2 hours, resulting in Au nanoparticle-doped crystalline nano Mn oxide. Its TEM morphology and diffraction patterns are shown in Figures 37-40. As observed, the nano Mn oxide matrix is predominantly crystalline, and the Mn in the matrix includes high-valent Mn. The morphology primarily consists of platelet-like particles and regular granular particles, with the platelet-like particles including hexagonal plate-like structures (Figure 38). The particle size of the nano Mn oxide is in the range of 2 nm to 500 nm. The platelet-like particles have a diameter range of 10 nm to 500 nm and a thickness range of 2 nm to 100 nm. As for the Au nanoparticles, Figures 38-40 clearly show their presence, as indicated by the dark contrast spherical or near-spherical particles in the images. The size range of the Au nanoparticles is 0.25 nm to 100 nm, and they are primarily embedded in the crystalline nano Mn oxide matrix via an in situ doping method. Only a small portion of the Au nanoparticles are doped through physical adsorption.

After the 600°C heat treatment for 2 hours, the resulting product is reacted with a 2 mol/L hydrochloric acid solution to remove the crystalline nano Mn oxide matrix, which is prone to reacting with the acid, allowing the inert Au nanoparticles that were embedded in the matrix to be released. These Au nanoparticles then undergo a certain degree of free coalescence and growth, resulting in Au nanoparticles with a size range of 3 nm to 300 nm.

### Example 15

This example provides a method for preparing Ag nanoparticle-doped nano Manganese (Mn) oxide, which includes the following steps:
According to the nominal formula of Ag_{0.3}Al_{72.7}Mn₂₇ (atomic percent), an alloy melt with the composition mainly of Ag_{0.3}Al_{72.7}Mn₂₇ is obtained by melting Al, Mn, and Ag raw materials. The alloy melt was rapidly solidified into an initial alloy ribbon with a thickness of ~100µm and mainly composed of Ag_{0.3}Al_{72.7}Mn₂₇ by a melt-spinning technique using a copper roller. The solidified structure is mainly composed of an intermetallic compound Al₁₁Mn₄(Ag) that is solid-solutioned with Ag, with the Ag content of approximately 0.3 at.%.

At atmospheric pressure, the Ag_{0.3}Al_{72.7}Mn₂₇ initial alloy ribbons are reacted with a NaOH aqueous solution while continuously stirring. The NaOH solution has a concentration of 12 mol/L, a temperature around its boiling point at atmospheric pressure (~128°C), and the volume of the NaOH solution is approximately 100 times the volume of the Ag_{0.3}Al_{72.7}Mn₂₇ initial alloy ribbons. Within 2 minutes, the hydrogen evolution and Al-removal reaction is completed. The initial alloy ribbons undergo nano-fragmentation via the hydrogen evolution and Al-removal reaction and simultaneously undergo shape and compositional reconstruction to form a solid-state product.

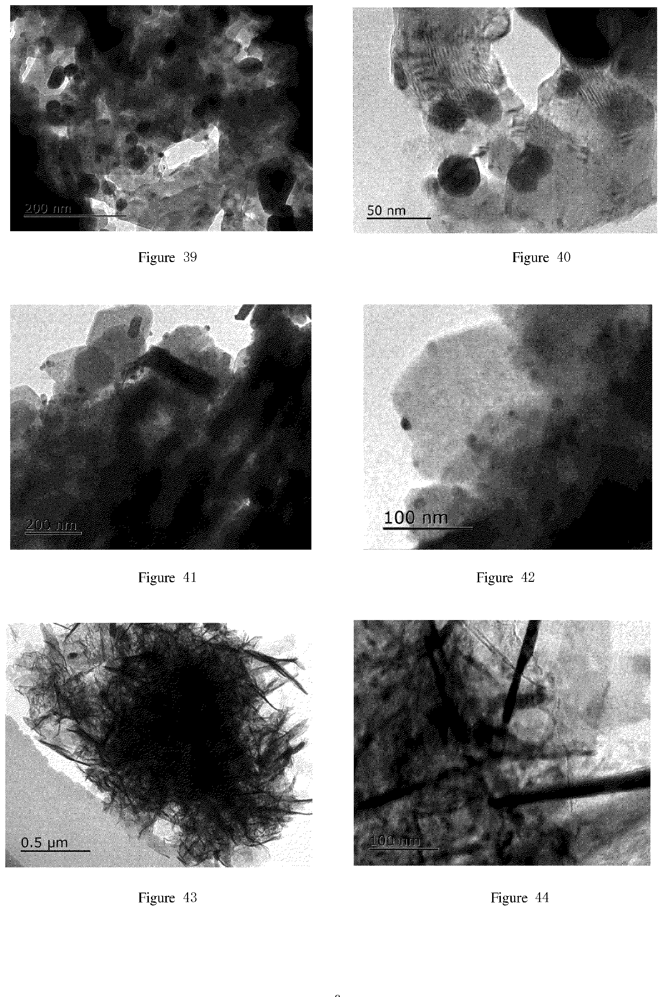

After 2 minutes of the hydrogen evolution and Al-removal reaction, the solid product is separated from the solution, cleaned, and dried, resulting in Ag nanoparticle-doped crystalline Mn oxide. The TEM morphology is shown in Figures 41 and 42. It can be seen that the Mn oxide matrix is primarily crystalline, with a shape mostly of plate-like particles. The plate diameter ranges from 5 nm to 400 nm, and the thickness ranges from 3 nm to 100 nm. For the Ag nanoparticles, their composition includes Ag nanoparticles and/or oxidized Ag nanoparticles, with a particle size range from 0.25 nm to 100 nm. These particles are mainly embedded in the Mn oxide matrix through an in situ doping method, with only a small portion of Ag nanoparticles being physically adsorbed.

### Example 16

This example provides a method for preparing Ag nanoparticle-doped nano Manganese (Mn) oxide, which includes the following steps:
According to the nominal composition of Ag_{0.3}Al_{72.7}Mn₂₇ (atomic percentage), the alloy melt with a composition mainly of Ag_{0.3}Al_{72.7}Mn₂₇ is prepared by melting Al, Mn, and Ag raw materials. The alloy melt was rapidly solidified into an initial alloy ribbon with a thickness of ~100µm and mainly composed of Ag_{0.3}Al_{72.7}Mn₂₇ by a melt-spinning technique using a copper roller. The solidified structure is mainly composed of an intermetallic compound Al₁₁Mn₄(Ag) that is solid-solutioned with Ag, with the Ag content of approximately 0.3 at.%.

At atmospheric pressure, the Ag_{0.3}Al_{72.7}Mn₂₇ initial alloy ribbon is reacted with a NaOH aqueous solution while continuously stirring. The concentration of the NaOH solution is 10 mol/L, and the temperature is maintained between 105°C and 115°C. The volume of the NaOH solution is approximately 100 times the volume of the Ag_{0.3}Al_{72.7}Mn₂₇ initial alloy ribbon. Within 2 minutes, the hydrogen evolution and Al-removal reaction is completed. During this process, the initial alloy ribbon undergoes nanofragmentation due to the hydrogen evolution and Al-removal reaction, and simultaneously, the shape and composition of the product are reconstructed, generating a solid-state product.

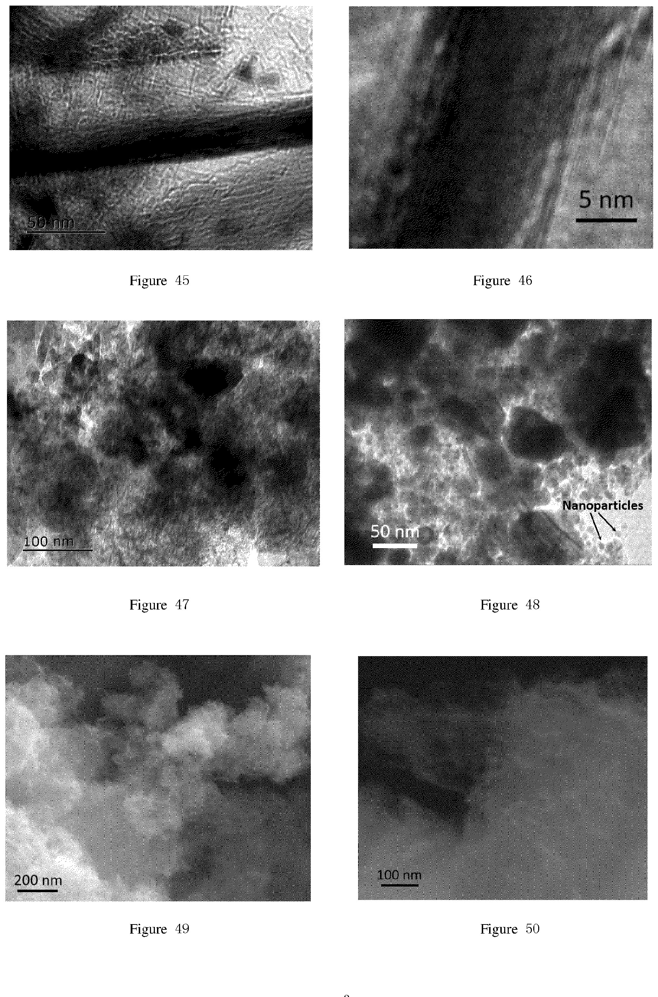

After 2 minutes of the hydrogen evolution and Al-removal reaction, the alkaline solution and solid product of the reaction system are directly poured into a sealed reaction vessel. The temperature inside the vessel is then increased to 175°C and maintained for 2 hours. Under the sealed conditions, the pressure inside the vessel is higher than atmospheric pressure. After maintaining the temperature for 2 hours, the system is allowed to cool and depressurize. The product inside the vessel is then subjected to solid-liquid separation, followed by cleaning and drying. The resulting modified Ag nanoparticle-doped nano Mn oxide is shown in the morphology images in Figures 43-46. The modified nano Mn oxide matrix mainly consists of low-crystallinity film-like structures (Figures 43-44) and high-crystallinity rod-like structures (Figures 45-46). The thickness of the film-like structures ranges from 1 nm to 20 nm, while the diameter of the rod-like structures ranges from 3 nm to 40 nm. The Ag nanoparticles are mainly embedded in situ in the modified nano Mn oxide, and their morphology is shown as dark contrast particles in Figures 44-45. The composition of the Ag nanoparticles includes Ag nanoparticles and/or Ag oxide nanoparticles, with a size range of 2 nm to 30 nm.

### Example 17

This example provides a method for preparing Pt-Pd-Au-Ru nanoparticle-doped nano Chromium (Cr) oxide and Pt-Pd-Au-Ru nanoparticles, which includes the following steps:
The nominal composition of Pt_{0.5}Pd_{0.5}Au_{0.5}Ru_{0.5}Al₇₉Cr₁₉ (atomic percent) was used to melt Al, Cr, Pt, Pd, Au, and Ru raw materials, resulting in an alloy melt predominantly composed of Pt_{0.5}Pd_{0.5}Au_{0.5}Ru_{0.5}Al₇₉Cr₁₉. This alloy melt was then solidified into an alloy ingot, which was subsequently crushed into initial alloy powder with an average particle size of 100 µm, primarily consisting of Pt_{0.5}Pd_{0.5}Au_{0.5}Ru_{0.5}Al₇₉Cr₁₉. The solidification structure of the initial alloy powder is mainly composed of Al₄Cr(Pt-Pd-Au-Ru) intermetallic compounds, which are solid solutions of Pt, Pd, Au, and Ru. The respective contents of Pt, Pd, Au, and Ru are approximately 0.5 at.%, 0.5 at.%, 0.5 at.%, and 0.5 at.%.

At atmospheric pressure, the Pt_{0.5}Pd_{0.5}Au_{0.5}Ru_{0.5}Al₇₉Cr₁₉ initial alloy powder was reacted with a KOH solution while continuously stirring. The concentration of KOH was 12 mol/L, and the temperature ranged from 101°C to 115°C. The volume of the KOH solution was approximately 50 times the volume of the Pt_{0.5}Pd_{0.5}Au_{0.5}Ru_{0.5}Al₇₉Cr₁₉ initial alloy powder. Within 1.5 minutes, the hydrogen evolution and Al-removal reaction was completed, causing the initial alloy powder to undergo nanofragmentation and simultaneously undergo shape and compositional reconstruction, forming a solid flocculent product.

After 2 minutes of the hydrogen evolution and Al-removal reaction, the solid flocculent product was separated from the solution, followed by cleaning and drying, resulting in Pt-Pd-Au-Ru nanoparticle-doped low-crystallinity nano Cr oxide. Its TEM morphology is shown in Figures 47-48. The nano Cr oxide matrix is primarily composed of amorphous nano Cr oxide or amorphous Cr hydroxide, and its morphology mainly consists of extremely fine flocculent microstructures (Figure 47), with a size range of 1.0 nm to 10 nm. For the Pt-Pd-Au-Ru nanoparticles doped into the matrix, they primarily combine with the low-crystallinity nano Cr oxide matrix via two methods: in-situ insertion and physical adsorption. Some of the physically adsorbed Pt-Pd-Au-Ru nanoparticles can detach freely (Figure 48). The particle size range of the Pt-Pd-Au-Ru nanoparticles is 0.25 nm to 15 nm. When the particle size is less than 2 nm, the Pt-Pd-Au-Ru nanoparticles primarily exist as atoms or atomic clusters and are incorporated into the low-crystallinity nano-Cr₂ O₃ matrix through in-situ embedding.

The obtained solid flocculent product is reacted with 1 mol/L nitric acid solution to remove the low-crystallinity and acid-reactive nano Cr oxide matrix. This process allows the inert Pt-Pd-Au-Ru nanoparticles, originally embedded in the matrix, to detach and separate freely. The inert Pt-Pd-Au-Ru nanoparticles, including those physically adsorbed on the matrix, undergo a certain degree of merging and growth. As a result, Pt-Pd-Au-Ru nanoparticles with a particle size range of 3 nm to 100 nm are obtained.

### Example 18

This example provides a method for preparing Au nanoparticle-doped nano Chromium (Cr) oxide which includes the following steps:
According to the nominal composition of Au_{0.25}Al₆₁Cr_{38.75} (atomic percentage), an alloy melt with the composition mainly of Au_{0.25}Al₆₁Cr_{38.75} is obtained by melting raw materials of Al, Cr, and Au. The alloy melt was rapidly solidified into an initial alloy ribbon with a thickness of ~25µm and mainly composed of Au_{0.25}Al₆₁Cr_{38.75} by a melt-spinning technique using a copper roller. The resulting initial alloy ribbon mainly consists of Al₈Cr₅(Au) intermetallic compound solid-solved with Au, with an Au solubility of approximately 0.25 at.%.

Under atmospheric pressure, the initial alloy ribbon of Au_{0.25}Al₆₁Cr_{38.75} is reacted with an NaOH aqueous solution, and ultrasonic treatment is applied at a frequency of 40 kHz. The NaOH solution has a concentration of 15 mol/L, and the temperature is maintained at 60°C. The volume of the NaOH solution is approximately 100 times the volume of the Au_{0.25}Al₆₁Cr_{38.75} initial alloy ribbon. Within 7 minutes, the hydrogen evolution and Al-removal reaction is completed. During this process, the initial alloy undergoes nanofragmentation due to the hydrogen evolution and Al-removal reaction, and the solid-state product formed is a flocculent material, which simultaneously undergoes shape and compositional reconstruction.

After 8 minutes of hydrogen evolution and Al-removal reaction, solid flocculent product is separated from the solution. After washing and drying, low-crystallinity nano Cr oxide doped with Au nanoparticles is obtained. The matrix is primarily composed of amorphous nano Cr oxide or amorphous Cr hydroxide. The morphology of the nano Cr oxide matrix consists mainly of very fine flocculent microstructures, with sizes ranging from 1.0 nm to 15 nm, as shown in Figures 49-50. As for the doped Au nanoparticles, they are primarily incorporated into the low-crystallinity nano Cr oxide matrix via an in-situ embedding method. The particle size range of the in-situ embedded Au nanoparticles is from 0.25 nm to 10 nm.

### Example 19

This example provides a method for preparing Au nanoparticle-doped nano Yttrium (Y) oxide, which includes the following steps:
According to the nominal composition of Au_{0.3}Zn₅₀Y_{49.7} (atomic percentage), an alloy melt with the composition mainly of Au_{0.3}Zn₅₀Y_{49.7} is obtained by melting raw materials of Zn, Y, and Au. This alloy melt was then solidified into an alloy ingot, which was subsequently crushed into initial alloy powder with an average particle size of 50 µm, primarily composed of the ZnY(Au) intermetallic compound phase, solid-solutioned with Au.

Under atmospheric pressure, the Au_{0.3}Zn₅₀Y_{49.7} initial alloy powder is reacted with a KOH solution, while continuously stirring. The concentration of the KOH solution is 15 mol/L, and the temperature is maintained at the boiling point of the KOH solution under atmospheric pressure (~150°C). The volume of the KOH solution is approximately 50 times that of the initial alloy powder. Within 5 minutes, the hydrogen evolution reaction is completed. During this process, the initial alloy undergoes nanofragmentation due to the hydrogen evolution and Zn-removal reaction, and simultaneously, the shape and composition of the product are reconstructed, generating a solid-state product.

After 5 minutes of reaction, the resulting solid product is separated, washed, and dried to obtain Au nanoparticle-doped crystalline nano Y oxide. The nano Y oxide matrix is primarily composed of granular and plate-like structures, with particle sizes ranging from 3 nm to 300 nm. The Au nanoparticles are mainly embedded in situ within the nano Y oxide matrix, with particle sizes ranging from 0.25 nm to 30 nm.

### Example 20

This example provides a method for preparing Cu nanoparticle-doped nano-Chromium (Cr) oxide, which includes the following steps:
According to the nominal composition of Cu_{1.5}Al₇₉Cr_{19.5} (atomic percentage), an alloy melt with the composition of Cu_{1.5}Al₇₉Cr_{19.5} is obtained by melting the raw materials of Al, Cr, and Cu. The alloy melt was rapidly solidified into an initial alloy ribbon with a thickness of ~25µm and mainly composed of Cu_{1.5}Al₇₉Cr_{19.5} by a melt-spinning technique using a copper roller. The composition of the initial alloy ribbon is primarily Cu_{1.5}Al₇₉Cr_{19.5}, and its solidified structure is mainly composed of the Al₄Cr(Cu) intermetallic compound, solid-solutioned with Cu, with a Cu solubility of approximately 1.5 at.%.

Under atmospheric pressure, the Cu_{1.5}Al₇₉Cr_{19.5} initial alloy ribbon is reacted with a NaOH aqueous solution while continuously stirring. The concentration of the NaOH solution is 10 mol/L, and the temperature is maintained at the boiling point of the NaOH solution under atmospheric pressure (~119°C). The volume of the NaOH solution is approximately 100 times the volume of the Cu_{1.5}Al₇₉Cr_{19.5} initial alloy ribbon. Within 1 minute, the hydrogen evolution and Al-removal reaction is completed. During this process, the initial alloy undergoes nano-fragmentation due to the hydrogen evolution and Al-removal reaction, and simultaneously, shape and compositional reconstruction occurs, leading to the formation of a solid flocculent product.

After 2 minutesof the hydrogen evolution and Al-removal reaction, the solid flocculent product is separated from the solution, washed, and dried to obtain Cu nanoparticle-doped low-crystallinity nano Cr oxide. The matrix of the product is primarily composed of amorphous nano Cr oxide or amorphous Cr hydroxide. The morphology of the nano Cr oxide matrix consists mainly of very fine flocculent microstructures, with sizes ranging from 1.0 nm to 10 nm. For the Cu nanoparticles doped within the matrix, they are mainly composed of Cu oxide, and are incorporated into the low-crystallinity nano Cr oxide matrix via an in-situ embedding method. The particle size of the in-situ embedded Cu oxide nanoparticles ranges from 0.25 nm to 30 nm, and their composition includes at least one of Cu2O or CuO.

### Example 21

This example provides a method for preparing PtCu nanoparticle-doped nano-Chromium (Cr) oxide and Pt nanoparticles, which includes the following steps:
According to the nominal composition of Cu_{0.5}Pt₁Al₇₉Cr_{19.5} (atomic percentage), an alloy melt with the composition of Cu_{0.5}Pt₁Al₇₉Cr_{19.5} is obtained by melting the raw materials of Al, Cr, Pt, and Cu. The alloy melt was rapidly solidified into an initial alloy ribbon with a thickness of ~25µm and mainly composed of Cu_{0.5}Pt₁Al₇₉Cr_{19.5} by a melt-spinning technique using a copper roller. The composition of the initial alloy ribbon is primarily Cu_{0.5}Pt₁Al₇₉Cr_{19.5}. Its solidified structure is mainly composed of the Al₄Cr(CuPt) intermetallic compound, which is solid-solutioned with both Cu and Pt, with a Cu solubility of about 0.5 at.% and a Pt solubility of about 1 at.%.

Under atmospheric pressure, the Cu_{0.5}Pt₁Al₇₉Cr_{19.5} initial alloy ribbon is reacted with a NaOH aqueous solution while continuously stirring. The concentration of the NaOH solution is 10 mol/L, and the temperature is maintained at the boiling point of the NaOH solution under atmospheric pressure (~119°C). The volume of the NaOH solution is approximately 100 times the volume of the Cu_{0.5}Pt₁Al₇₉Cr_{19.5} initial alloy ribbon. Within 1 minute, the hydrogen evolution and Al-removal reaction is completed. During this process, the initial alloy undergoes nano-fragmentation due to the hydrogen evolution and Al-removal reaction, and simultaneously, shape and compositional reconstruction occurs, leading to the formation of a solid flocculent product.

After 2 minutes of the hydrogen evolution and Al-removal reaction, the solid flocculent product is separated from the solution, washed, and dried to obtain Pt-Cu nanoparticle-doped low-crystallinity nano Cr oxide. The matrix of the product is primarily composed of amorphous nano Cr oxide or amorphous Cr hydroxide. The morphology of the nano Cr oxide matrix consists mainly of very fine flocculent microstructures, with sizes ranging from 1.0 nm to 10 nm. For the Pt-Cu nanoparticles doped within the matrix, they are primarily embedded in situ within the low-crystallinity nano Cr oxide matrix. The particle size of the in-situ embedded Pt-Cu nanoparticles ranges from 0.25 nm to 30 nm.

The solid flocculent product obtained 2 minutes after the hydrogen evolution and Al-removal reaction is reacted is reacted with a 1 mol/L hydrochloric acid solution for 10 minutes to remove the low-crystallinity nano Cr oxide matrix, which is easily reactive with the acid. This process allows the inert Pt-Cu nanoparticles that were originally embedded to be freed. Through a certain degree of aggregation and growth, Pt-Cu nanoparticles with a particle size range of 3 nm to 100 nm are obtained. Due to the relatively short reaction time and the higher content of Pt compared to Cu in the Pt-Cu nanoparticles, the Cu content in the Pt-Cu nanoparticles is retained.

The solid flocculent product obtained 2 minutes after the hydrogen evolution and Al-removal reaction is reacted with a 0.5 mol/L hydrochloric acid solution for 5 days. This removes the low-crystallinity nano Cr oxide matrix, which is easily reactive with the acid, while also gradually removing the Cu component from the original Pt-Cu nanoparticles. Through a certain degree of free aggregation and growth during the prolonged reaction, Pt nanoparticles with a particle size range of 3 nm to 200 nm are obtained.

### Example 22

This example provides a method for preparing Au nanoparticle-doped nano-Chromium (Cr) oxide, which includes the following steps:
According to the nominal composition of Au_{1.5}Al₇₉Cr_{19.5} (atomic percentage), an alloy melt with the composition of Au_{1.5}Al₇₉Cr_{19.5} is obtained by melting the raw materials of Al, Cr, and Au. The alloy melt was rapidly solidified into an initial alloy ribbon with a thickness of ~25µm and mainly composed of Au_{1.5}Al₇₉Cr_{19.5} by a melt-spinning technique using a copper roller. The composition of the initial alloy ribbon is primarilyAu_{1.5}Al₇₉Cr_{19.5}. Its solidified structure is mainly composed of the Al₄Cr(Au) intermetallic compound, which is solid-solutioned with Au, with a Au solubility of about 1.5 at.%.

Under atmospheric pressure, 0.25 g of the Au_{1.5}Al₇₉Cr_{19.5} initial alloy ribbon is mixed with 50 ml of NaOH aqueous solution at a temperature of 30°C in a reaction vessel, which is then sealed. During the sealing process, the hydrogen evolution and Al-removal reaction proceeds slowly.

After sealing, the temperature inside the reaction vessel is raised to 250°C and maintained for 20 minutes. Under the sealed environment, the pressure inside the reaction vessel is higher than atmospheric pressure, with the pressure arising from both the high-temperature sealed environment and the hydrogen gas generated during the reaction. After the 20-minute holding period, the temperature and pressure are reduced, and the products inside the reaction vessel are subjected to solid-liquid separation. After washing and drying, the modified Au nanoparticle-doped nano Cr oxide is obtained. The modified nano Cr oxide matrix has a crystallinity greater than 50%, and its morphology is primarily composed of granular and short-rod structures. The particle size of the granular structure ranges from 2 nm to 50 nm, while the diameter of the short-rod structures ranges from 2 nm to 30 nm, with a length-to-diameter ratio of 1.5 to 5. The Au nanoparticles are doped into the modified nano Cr oxide matrix through two main mechanisms: in-situ embedding and physical adsorption. Some of the Au nanoparticles that are physically adsorbed onto the matrix may detach and become free Au nanoparticles. The particle size of the in-situ embedded and physically adsorbed Au nanoparticles ranges from 0.5 nm to 30 nm.

It is evident that after sealing the reaction system, during the process of raising the temperature inside the reaction vessel from 30°C to 250°C, the hydrogen evolution and Al-removal reaction will be fully completed. The solid intermediate product obtained at this stage will inevitably undergo changes in morphology and/or composition compared to the final product obtained after maintaining the temperature at 250°C for 20 minutes. This process is referred to as the modification of morphology and/or composition.

### Example 23

This example provides a method for preparing Au nanoparticle-doped nano-Chromium (Cr) oxide, which includes the following steps:
According to the nominal composition of Au_{1.5}Al₇₉Cr_{19.5} (atomic percentage), an alloy melt with the composition of Au_{1.5}Al₇₉Cr_{19.5} is obtained by melting the raw materials of Al, Cr, and Au. The alloy melt was rapidly solidified into an initial alloy ribbon with a thickness of ~25µm and mainly composed of Au_{1.5}Al₇₉C_{T19.5} by a melt-spinning technique using a copper roller. The composition of the initial alloy ribbon is primarily Au_{1.5}Al₇₉Cr_{19.5}. Its solidified structure is mainly composed of the Al₄Cr(Au) intermetallic compound, which is solid-solutioned with Au, with an Au solubility of about 1.5 at.%.

Under atmospheric pressure, 0.5 g of the Au_{1.5}Al₇₉Cr_{19.5} initial alloy ribbon, prepared as described above, is placed in a sealed container with 50 ml of a 10 mol/L NaOH aqueous solution. Initially, the alloy ribbon does not come into contact with the alkaline solution.

The temperature inside the sealed container, as well as the temperature of the initial alloy ribbon and the alkaline solution, is raised to 150°C. At this point, the sealed container is under high pressure. The Al₇₉Cr_{19.5}Au_{1.5} initial alloy ribbon is then mixed with the NaOH solution at this temperature, causing a vigorous hydrogen evolution and Al-removal reaction. During the high-temperature and high-pressure reaction process, the Al₇₉Cr_{19.5}Au_{1.5} initial alloy ribbon undergoes nano-fragmentation due to the intense hydrogen evolution and Al-removal reaction. Simultaneously, the alloy undergoes shape and compositional reconstruction, resulting in the formation of a solid flocculent product.

The hydrogen evolution and Al-removal reaction is completed within 10 seconds. After 10 seconds, the sealed container and the reaction system are placed into cooling water to rapidly lower the temperature to near room temperature, while simultaneously reducing the pressure inside the sealed container to atmospheric pressure.

After the temperature of the reaction system has cooled to room temperature and the pressure has returned to atmospheric pressure, the solid flocculent product is separated from the alkaline solution, washed, and dried. This results in the formation of Au nanoparticle-doped low-crystallinity nano-chromium oxide, where the matrix is primarily composed of amorphous nano Cr oxide or amorphous Cr hydroxide. The morphology of the nano Cr oxide matrix is mainly composed of extremely fine flocculent microstructures, with sizes ranging from 1.0 nm to 10 nm. As for the Au nanoparticles doped within the matrix, they are primarily incorporated through an in-situ embedding method into the low-crystallinity nano Cr oxide matrix. The particle size of the Au nanoparticles ranges from 0.25 nm to 25 nm. When the particle size is smaller than 2 nm, the Au nanoparticles are mainly incorporated into the matrix in the form of atoms or atomic clusters, forming a composite and doped structure with the low-crystallinity nano Cr oxide matrix.

### Comparative Example 1:

According to the composition of Au_{0.25}Nb₂₅Al_{74.75} (atomic percentage), an alloy melt with the composition of Au_{0.25}Nb₂₅Al_{74.75} is obtained by melting the raw materials of Au, Nb, and Al. The alloy melt is then solidified into an ingot and crushed into initial alloy powder with an average particle size of approximately 25 µm. The phase composition of the powder is primarily composed of the Al₃Nb(Au) intermetallic compound, solid-solutioned with Au.

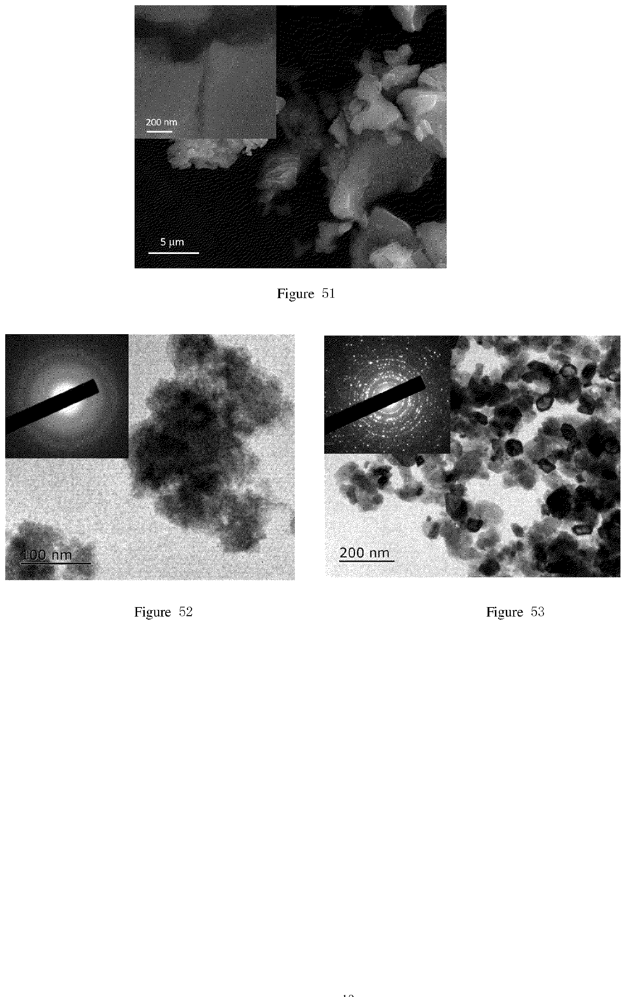

Under atmospheric pressure, 0.5 g of the initial alloy powder prepared as described above is mixed with 50 ml of a 10 mol/L NaOH aqueous solution at a temperature of 25°C and reacted for 2 hours (with an average reaction interface progression rate of less than 0.5 µm/min). The resulting solid product is collected, and the product primarily consists of Au-containing nanoporous Nb oxide or nanoporous Nb. The SEM morphology of the product is shown in Figure 51.

It can be seen that under these reaction conditions, the shape of the initial alloy powder before and after the reaction remains roughly unchanged. The powder still retains its original broken and angular particulate form. Additionally, there is no nano-fragmentation occurring at the microscopic level, nor is there a large generation of dispersed nano-oxide powder. Instead, the product forms nanoporous, network-like structures, maintaining the original angularity of the coarse powder particles. The particle size of the product remains similar to that of the initial alloy powder, in the micron or tens of microns range. Therefore, the reaction between the initial alloy and the alkaline solution at a lower temperature differs significantly from the reaction conducted at a higher temperature, particularly at or near the boiling point. The product morphology is also completely different.

### Comparative Example 2

This comparative example provides a method for preparing nano-Chromium (Cr) oxide, which includes the following steps:
According to the nominal composition of Al₈₀Cr₂₀ (atomic percentage), an alloy melt with the composition of Al₈₀Cr₂₀ is obtained by melting commercially available Al and Cr raw materials. The alloy melt is then solidified into an ingot, which is subsequently crushed into initial alloy powder with an average particle size of 100 µm. The composition of the powder is primarily Al₈₀Cr₂₀, and its solidified structure is mainly composed of the CrAl₄ intermetallic compound.

At atmospheric pressure, the Al₈₀Cr₂₀ initial alloy powder is reacted with a NaOH solution while being stirred continuously. The NaOH solution has a concentration of 12 mol/L, and the temperature is maintained at its boiling point under atmospheric pressure (~128°C). The volume of the NaOH solution is approximately 100 times the volume of the Al₈₀Cr₂₀ initial alloy powder. Within 1.5 minutes, the hydrogen evolution reaction is completed, and the Al₈₀Cr₂₀ initial alloy powder undergoes nano-fragmentation due to the hydrogen evolution and Al-removal reaction. At the same time, shape and compositional reconstruction occurs, resulting in the formation of a solid flocculent product at the nanoscale.

After 2 minutes of reaction, the solid flocculent product is separated from the solution, washed, and dried. This results in the formation of low-crystallinity nano Cr oxide powder, which is composed of amorphous nano Cr oxide or amorphous Cr hydroxide. The TEM morphology and diffraction pattern are shown in Figure 52. The morphology is primarily composed of very fine flocculent microstructures, with a particle size range of 1.0 nm to 10 nm. This flocculent structure is not a rigid nanoporous structure but rather a colloidal flocculent structure that can be spread and dispersed.

The powder, primarily composed of low-crystallinity nano-chromium oxide, is heat-treated at 600°C for 2 hours. This treatment results in crystalline nano Cr oxide particles with a particle size range of 3 nm to 100 nm. The TEM morphology and diffraction pattern are shown in Figure 53. It can be seen that after heat treatment, the original flocculent structure of the low-crystallinity nano Cr oxide undergoes crystallization, resulting in particle-like nano Cr oxide with excellent particle dispersion.

The technical features of the examples described above can be combined in any way. For the sake of simplicity, not all possible combinations of technical features in the above examples have been described, but any combination that does not contradict the technical features should be considered within the scope of this disclosure.

The examples described above are only a few embodiments of the invention. They are described in detail, but this does not imply a limitation on the scope of the invention. It should be noted that those skilled in the art may make various modifications and improvements without departing from the inventive concept, and these are within the scope of the invention. Therefore, the scope of protection of this patent should be determined by the appended claims.

## Claims

1. A preparation method of a nano-metal oxide doped with noble metal nanoparticles, **characterized by** comprising the following steps:
Step 1: providing an initial alloy, where the initial alloy includes M-type, T-type, and A-type elements; wherein the M-type elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-type elements include at least one of Al, and Zn; the A-type elements primarily consist of noble metals, including at least one of Au, Pt, Pd, Ru, Rh, Os, Ir, Re, Ag, and Cu; the solidification structure of the initial alloy mainly comprises M-T-A intermetallic compounds and/or M-T(A) intermetallic compounds solid-solved with A-type elements; the composition of the initial alloy is mainly AₓT_{y}M_{z}, where x, y, and z are the atomic percentage contents of the respective elements, with 0 < x ≤ 15%, 40% ≤ y < 95%, and 5% ≤ z < 60%;
Step 2: making the initial alloy undergo a hydrogen evolution and T-removal reaction with an alkaline solution; wherein by controlling the temperature and concentration of the alkaline solution, the reaction interface is moved inward from the surface of the initial alloy at an average rate of at least 2 µm/min during the reaction; during the reaction, the initial alloy undergoes nanoscale fragmentation through the hydrogen evolution and T-removal reaction and, through shape and composition reconstruction, generates a M-containing solid product, with at least one dimension not exceeding 500 nm in the three-dimensional direction; simultaneously with the hydrogen evolution and T-removal reaction, the A-type element atoms in the intermetallic compound of the original initial alloy undergo diffusion rearrangement to form A-containing nanoparticles;
Step 3: collecting, after the hydrogen evolution and T-removal reaction completes, the solid product in the reaction system to obtain nano M oxide doped with A-containing nanoparticles, including A-containing nanoparticles and nano M oxide matrix; wherein the A-containing nanoparticles include at least one of A nanoparticles and A oxide nano particles; the particle size range of the A-containing nanoparticles is from 0.25 nm to 100 nm; the nano M oxide matrix includes at least one of low crystallinity nano M oxide, crystalline nano M oxide, or nano hydrated M oxide, with the nano hydrated M oxide specifically referring to nano M hydroxide; the shape of the nano M oxide matrix has at least one dimension in the three-dimensional direction not exceeding 500 nm.

2. The preparation method of a nano-metal oxide doped with noble metal nanoparticles according to claim 1, wherein the temperature of the alkaline solution is *T*₁*,* and *T*₁ ≥ 60°C.

3. The preparation method of a nano-metal oxide doped with noble metal nanoparticles according to claim 1, wherein the doping method of the A-containing nanoparticles into the nano M oxide matrix includes in situ embedding doping.

4. The preparation method of a nano-metal oxide doped with noble metal nanoparticles according to claim 1, wherein the particle size range of the A-containing nanoparticles is from 0.25 nm to 2 nm, and when these nanoparticles are in-situ embedded in the nano M oxide matrix, the A-containing nanoparticles in this particle size range are embedded in the nano M oxide matrix in the form of atoms or atomic clusters.

5. A preparation method of a nano-metal oxide doped with noble metal nanoparticles, **characterized by** performing a heat treatment on the nano M oxide doped with A nanoparticles prepared according to the preparation method according to claim 1, to obtain a crystallization-enhanced nano M oxide doped with A-containing nanoparticles.

6. A preparation method of a nano-metal oxide doped with noble metal nanoparticles, **characterized by** comprising the following steps:
Step 1: providing an initial alloy, where the initial alloy includes M-type, T-type, and A-type elements; wherein the M-type elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-type elements include at least one of Al, and Zn; the A-type elements primarily consist of noble metals, including at least one of Au, Pt, Pd, Ru, Rh, Os, Ir, Re, Ag, and Cu; the solidification structure of the initial alloy mainly comprises M-T-A intermetallic compounds and/or M-T(A) intermetallic compounds solid-solved with A-type elements; the composition of the initial alloy is mainly AₓT_{y}M_{z}, where x, y, and z are the atomic percentage contents of the respective elements, with 0 < x ≤ 15%, 40% ≤ y < 95%, and 5% ≤ z < 60%;
Step 2: mixing the initial alloy with an alkaline solution at a temperature of *T*₁, where *T*_{*s*(solution)} < *T*₁ ≤ *T*_{*f*(solution)}. *T*_{*f*(solution)} is the boiling point of the alkaline solution under atmospheric pressure, and *T*_{*s*(solution)} is the freezing point of the alkaline solution under atmospheric pressure;
Step 3: placing the mixture of the initial alloy and the alkaline solution in a sealed container, then treating it at a temperature *T*₂ and a pressure higher than atmospheric pressure, for a period of time, to collect a product, i.e., obtain a modified nano M oxide doped with A-containing nanoparticles, which exhibits changes in morphology and/or composition compared to the product before high-pressure treatment, with this product including A-containing nanoparticles and a nano M oxide matrix, where, *T*₂ > *T*_{*f*(solution)}; wherein the A-containing nanoparticles include at least one of A nanoparticles and A oxide nanoparticles, with a particle size range of the A-containing nanoparticles is from 0.25nm-100nm; the nano M oxide matrix includes at least one of low crystallinity nano M oxide, crystalline nano M oxide, and nano hydrated M oxide, with the nano hydrated M oxide specifically referring to nano M hydroxide; the shape of the modified nano M oxide matrix has at least one dimension in the three-dimensional direction not exceeding 500 nm.

7. A preparation method of noble metal nanoparticles, **characterized by** treating a nano M oxide matrix of the solid product prepared by the preparation method according to anyone of claims 1-6 with an etching solution to dissolve the nano M oxide matrix, while keeping the inert noble metal elements with A-containing nanoparticles in the solid product from being dissolved, to obtain A nanoparticles that are primarily composed of inert noble metal element; wherein the composition of the A nanoparticles includes at least one of Au, Pt, Pd, Ru, Rh, Os, Ir, Re, and Ag; the particle size range of the A nanoparticles is from 2 nm to 300 nm.

8. A nano-metal oxide doped with noble metal nanoparticles, **characterized in that** it is prepared by the preparation method according to anyone of claims 1-6, specifically including the following features: the noble metal nanoparticle-doped nano-metal oxide includes noble metal nanoparticles and a nano M oxide matrix; the molar percentage of the noble metal nanoparticles is lower than the molar percentage of the nano M oxide matrix; the noble metal nanoparticles are A-containing nanoparticles, which mainly consist of noble metal A-type elements, and include at least one of Au, Pt, Pd, Ru, Rh, Os, Ir, Re, Ag, and Cu; the A-containing nanoparticles include at least one of A nanoparticles and A oxide nanoparticles; a matrix of the nano-metal oxide is nano M oxide, where the M-type element includes at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the nano M oxide includes at least one of low crystallinity nano M oxide, crystalline nano M oxide, and nano hydrated M oxide, and the nano hydrated M oxide specifically refers to nano M hydroxide; the doping method of A-containing nanoparticles into the nano M oxide matrix includes in-situ embedding doping, meaning that the A-containing nanoparticles are embedded in-situ within the nano M oxide matrix by being partially or fully surrounded by it; the particle size range of the A-containing nanoparticles is from 0.25 nm to 200 nm; the shape of the nano M oxide matrix has at least one dimension in the three-dimensional direction not exceeding 500 nm.

9. The nano-metal oxide doped with noble metal nanoparticles according to claim 8, wherein the thermal stability of the nano-metal oxide doped with noble metal nanoparticles is higher than the thermal stability of a corresponding nano oxide matrix prepared under similar conditions.

10. An application of the nano-metal oxide doped with noble metal nanoparticles prepared according to the preparation method according to anyone of claims 1-6 in composite materials, catalytic materials, ceramic materials, refractory materials, advanced electronic materials, battery materials, chromogenic materials, microwave-absorbing materials, wastewater degradation materials, antibacterial materials, coatings, pigments, thermal spray materials, or sensors.

11. An application of the nano-metal oxide doped with noble metal nanoparticles prepared according to the preparation method according to anyone of claims 1-6 in home decoration coatings, antibacterial sprays, and anti-fouling coatings; wherein the composition of the noble metal nanoparticles includes at least one of Cu and Ag;
as the application in home decoration coating, **characterized in that** the nano-metal oxide doped with noble metal nanoparticles containing Cu and/or Ag is mixed with other components of the coating as a coating additive, and applied to the surface of furniture, objects, or walls to achieve an antibacterial effect;
as the application in antibacterial spray, **characterized in that** the nano-metal oxide doped with noble metal nanoparticles containing Cu and/or Ag is mixed with other liquid spray components and sprayed onto the surface of furniture, objects, fabrics, or walls through a spray carrier to achieve an antibacterial effect;
as the application in anti-fouling coating, **characterized in that** the nano-metal oxide doped with noble metal nanoparticles containing Cu and/or Ag is used to replace the antibacterial and anti-fouling components in traditional anti-fouling coatings to achieve an anti-fouling effect;

12. An application of the nano-metal oxide doped with noble metal nanoparticles prepared according to the preparation method according to anyone of claims 1-6 in antibacterial fabrics; wherein the composition of the noble metal nanoparticles includes at least one of Cu and Ag; the nano-metal oxide doped with noble metal nanoparticles containing Cu and/or Ag is dispersed and then either adhered or coated onto a surface of the fabric, or blended with the fabric, thereby endowing the fabric with antibacterial and bactericidal effects and capabilities.

13. A nano-metal oxide doped with A nanoparticles, **characterized in that**: the nano-metal oxide doped with A nanoparticles includes A nanoparticles and a nano-metal oxide matrix, and the molar percentage of A nanoparticles is lower than that of the nano-metal oxide matrix; the A nanoparticles is A-containing nanoparticles, which primarily consist of A-type elements, where the A-type elements include at least one of Au, Pt, Pd, Ru, Rh, Os, Ir, Re, Ag, Cu, Fe, Ni, and Co; the A-containing nanoparticles include at least one of A nanoparticles and A oxide nano particles; the nano-metal oxide matrix is nano M oxide, where M-type elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the nano M oxide includes at least one of low crystallinity nano M oxide, crystalline nano M oxide, or nano hydrated M oxide, the nano hydrated M oxide specifically refers to nano M hydroxide; the doping method of the A-containing nanoparticles in the nano M oxide matrix includes in-situ embedding doping, where the A-containing nanoparticles are embedded in-situ within the nano M oxide matrix by being partially or fully surrounded by it; the particle size range of the A nanoparticles is from 0.25 nm to 200 nm; the shape of the nano M oxide matrix has at least one dimension in the three-dimensional direction not exceeding 500 nm.

14. The nano-metal oxide doped with A nanoparticles according to claim 13, wherein the particle size range of the A-containing nanoparticles is between 0.25 nm and 2 nm, and when these nanoparticles are in-situ embedded in the nano M oxide matrix, the A-containing nanoparticles in this particle size range are embedded in the nano M oxide matrix in the form of atoms or atomic clusters.

15. An application of the nano-metal oxide doped with A nanoparticles according to claim 13 in composite materials, catalytic materials, ceramic materials, refractory materials, advanced electronic materials, battery materials, chromogenic materials, microwave-absorbing materials, wastewater degradation materials, antibacterial materials, coatings, pigments, thermal spray materials, or sensors.
